(19) Europäisches Patentamt
European Patent Office
Office européen des brevets

(11) **EP 4 325 950 A1**

(12) **EUROPEAN PATENT APPLICATION**

(43) Date of publication:
**21.02.2024 Bulletin 2024/08**

(21) Application number: **23191119.9**

(22) Date of filing: **11.08.2023**

(51) International Patent Classification (IPC):
**H04W 56/00** (2009.01)   **H04W 72/0446** (2023.01)
**H04W 72/23** (2023.01)   **H04W 76/14** (2018.01)
**H04W 92/18** (2009.01)

(52) Cooperative Patent Classification (CPC):
**H04W 56/0045; H04W 56/0005; H04W 72/232;**
H04W 72/0446; H04W 72/40; H04W 76/14;
H04W 92/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 US 202263397529 P**

(71) Applicant: **Comcast Cable Communications LLC
Philadelphia, Pennsylvania 19103 (US)**

(72) Inventors:
• **CIRIK, Ali Cagatay
Philadelphia, 19103 (US)**
• **ZHOU, Hua
Philadelphia, 19103 (US)**
• **DINAN, Esmael Hejazi
Philadelphia, 19103 (US)**
• **PRASAD, Gautham
Philadelphia, 19103 (US)**

(74) Representative: **V.O.
P.O. Box 87930
2508 DH Den Haag (NL)**

(54) **SIDELINK COMMUNICATIONS IN CELL WITH MULTIPLE TIMING ADVANCES**

(57)    A wireless device may communicate with a base station. Timing advance information may be provided for scheduling sidelink transmission. For example, a wireless device may send a sidelink transmission to another device during a time duration that may be determined based on a timing advance value and/or a timing advance group index.

**FIG. 20**

EP 4 325 950 A1

**EP 4 325 950 A1**

**Description**

CROSS-REFERENCE TO RELATED APPLICATIONS

This application claims the benefit of U.S. Provisional Application No. 63/397,529, filed on August 12, 2022. The above-referenced application is hereby incorporated by reference in its entirety.

BACKGROUND

A wireless device receives, from a base station, downlink control information (DCI) scheduling a sidelink transmission. The wireless device sends a sidelink transmission to another wireless device.

SUMMARY

The following summary presents a simplified summary of certain features. The summary is not an extensive overview and is not intended to identify key or critical elements.

A wireless device may communicate with a base station. The wireless device may receive downlink control information (DCI) from the base station to schedule sidelink transmission. A time duration for a sidelink transmission may be based on a timing advance associated with a timing advance group (TAG). A lowest timing advance value of a plurality of timing advance values (e.g., each associated with a TAG) may be used to determine the time duration for the sidelink transmission. Additionally or alternatively, a lowest TAG index of a plurality of TAGs may be used to determine the time duration for the sidelink transmission. For example, a first TAG may be used to determine the time duration for the sidelink transmission, if the DCI is received via a control resource set (coreset) associated with a particular index, such as a coreset pool index 0. The wireless device may communicate with another wireless device via the sidelink transmission during the time duration.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

2

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein.

FIG. 16A, FIG. 16B, FIG. 16C, and FIG. 16D show examples of uplink and downlink signal transmission.

FIG. 17 shows an example timing advance mechanism for at least two cells.

FIG. 18 shows an example timing advance mechanism for a cell with at least two timing advances.

FIG. 19A shows an example timing advance command.

FIG. 19B shows an example timing advance command.

FIG. 20 shows an example timing advance configuration for a cell with at least two timing advances and sidelink communications.

FIG. 21 shows an example for performing sidelink communications in a cell with at least two timing advances.

FIG. 22 shows an example transmission timing for a sidelink transmission scheduled by a network.

FIG. 23 shows an example transmission timing for a sidelink transmission scheduled by a network.

FIG. 24 shows an example for performing sidelink communications in a cell with at least two timing advances based on coreset pool IDs.

FIG. 25 shows an example for performing sidelink communications in a cell with at least two timing advances based on physical cell IDs.

FIG. 26 shows an example for performing sidelink communications in a cell with at least two timing advances based on physical cell IDs.

FIG. 27 shows an example for a wireless device performing sidelink communications in a cell with at least two timing advances.

FIG. 28 shows an example for a base station in a cell with at least two timing advances.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems..

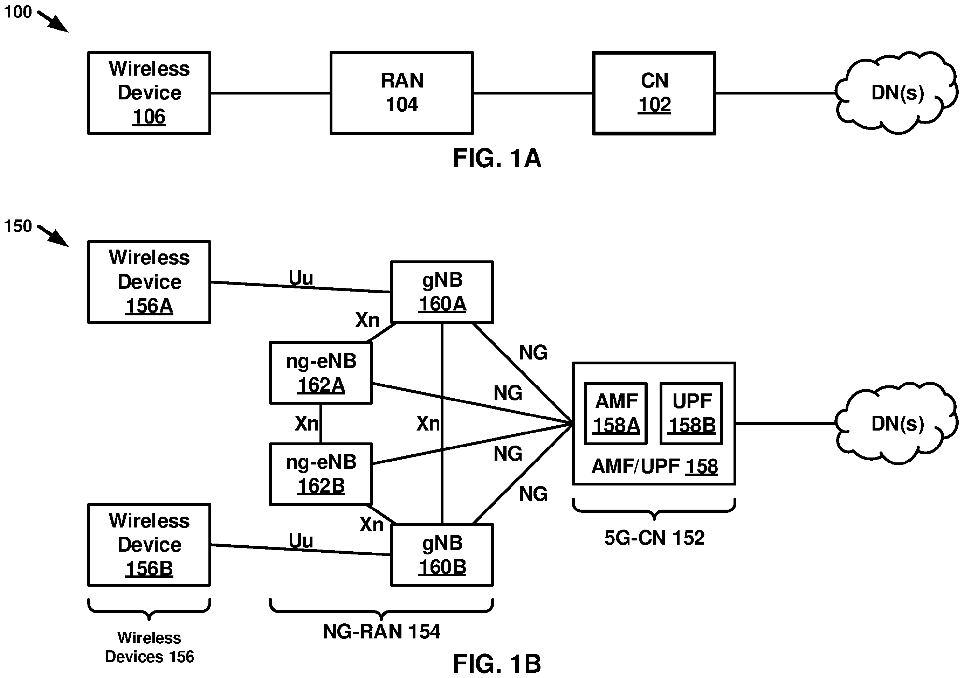

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering.

The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/LJPF devices, such as the AMF/UPF 158, via one or more interfaces (e.g., NG interfaces). A base station (e.g., the gNB 160A) may be in communication with, and/or connected to, the UPF 158B of the AMF/LTPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/LTPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

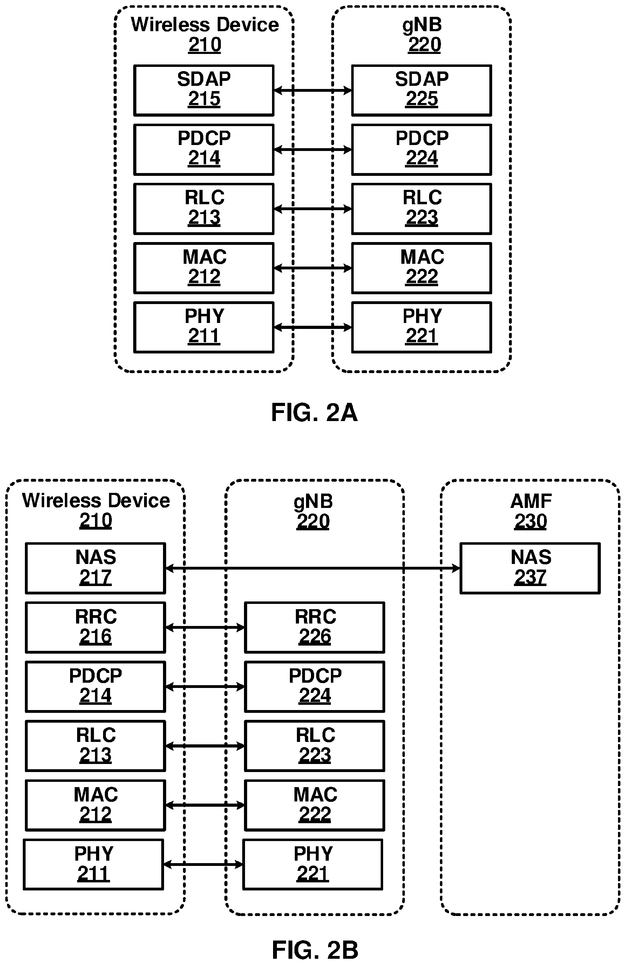

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

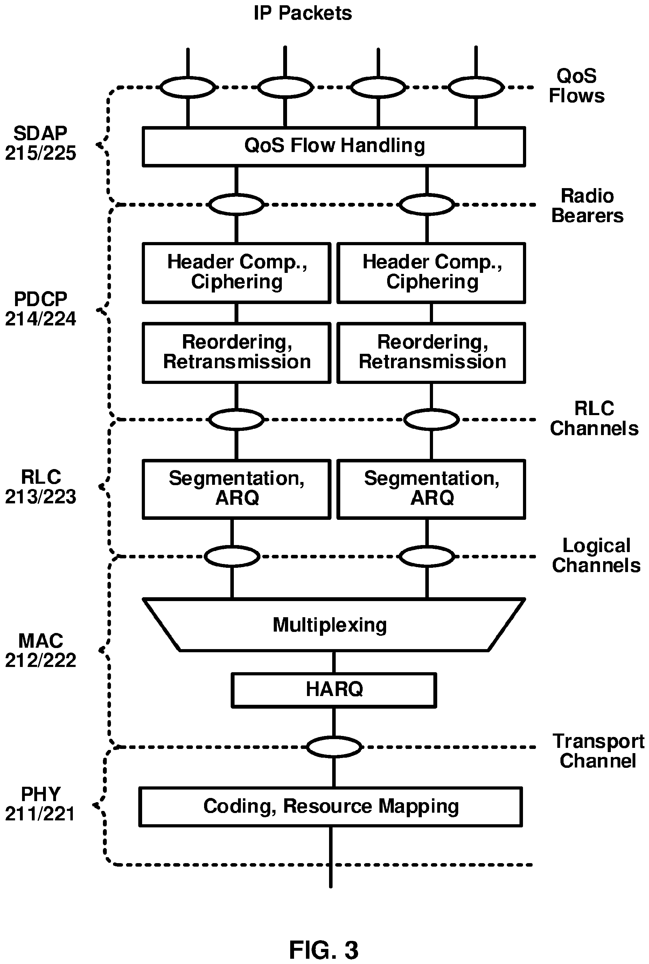

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)).The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

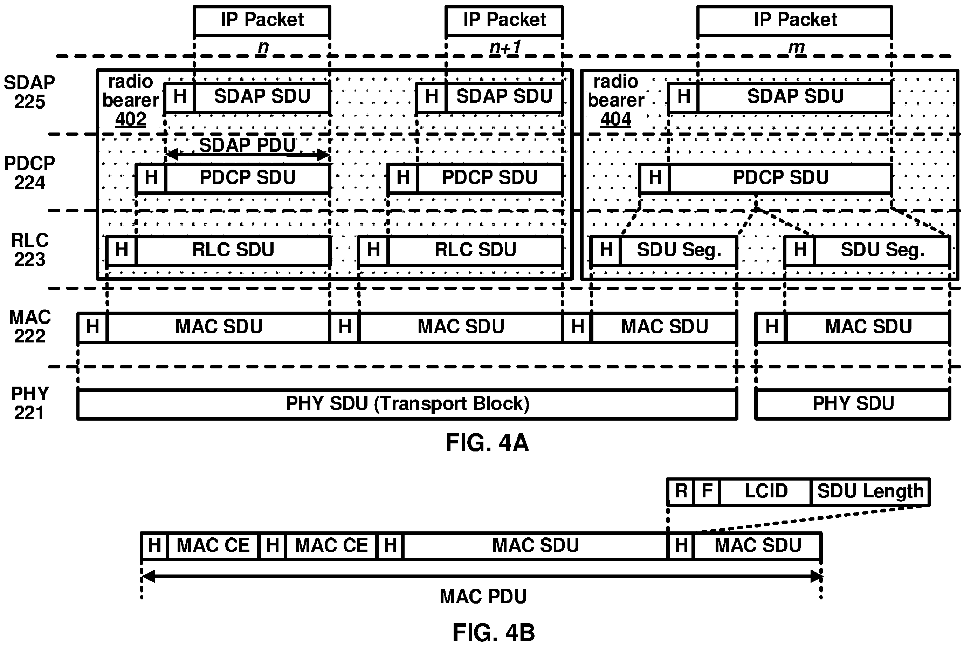

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

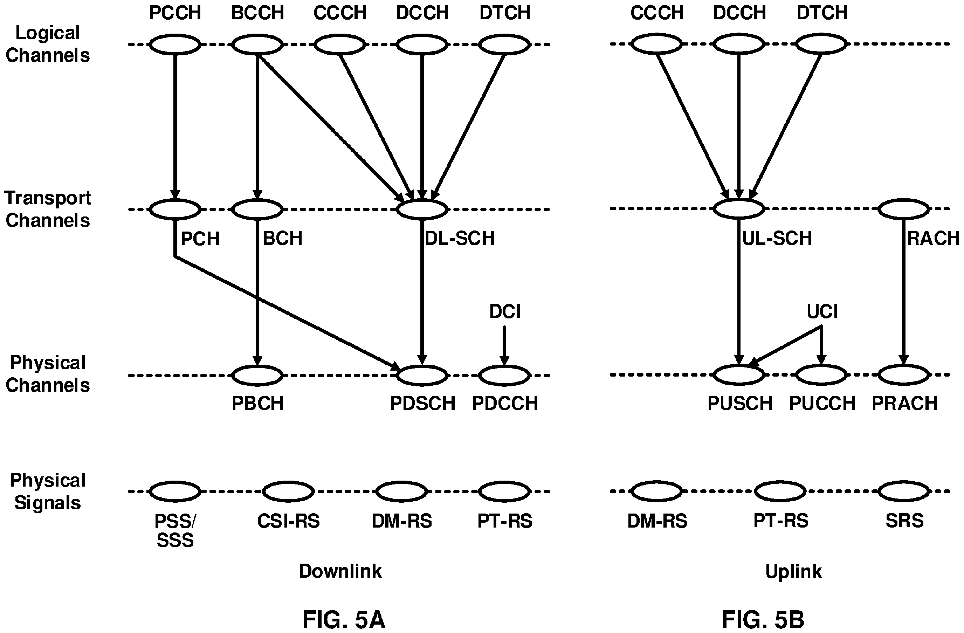

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

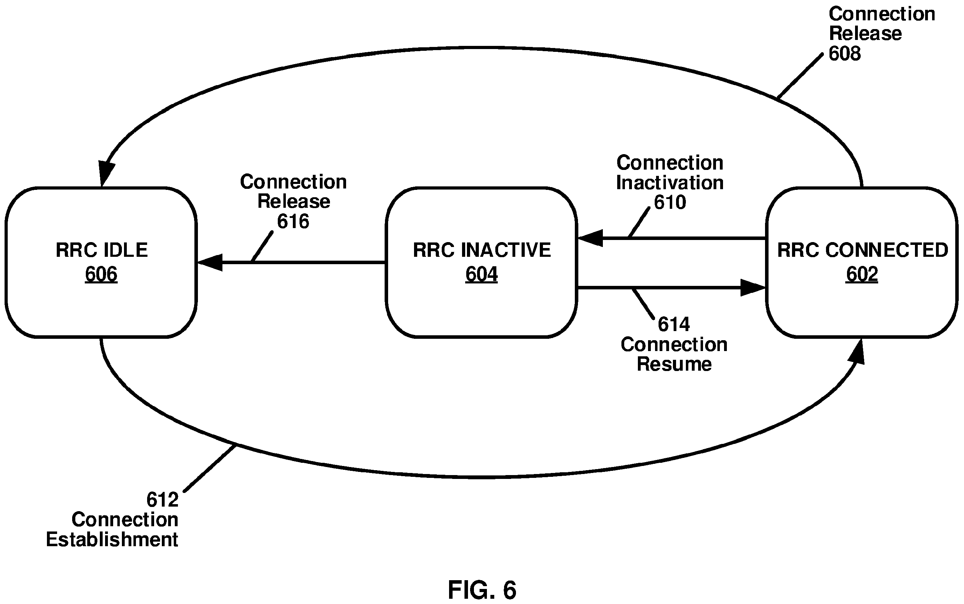

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

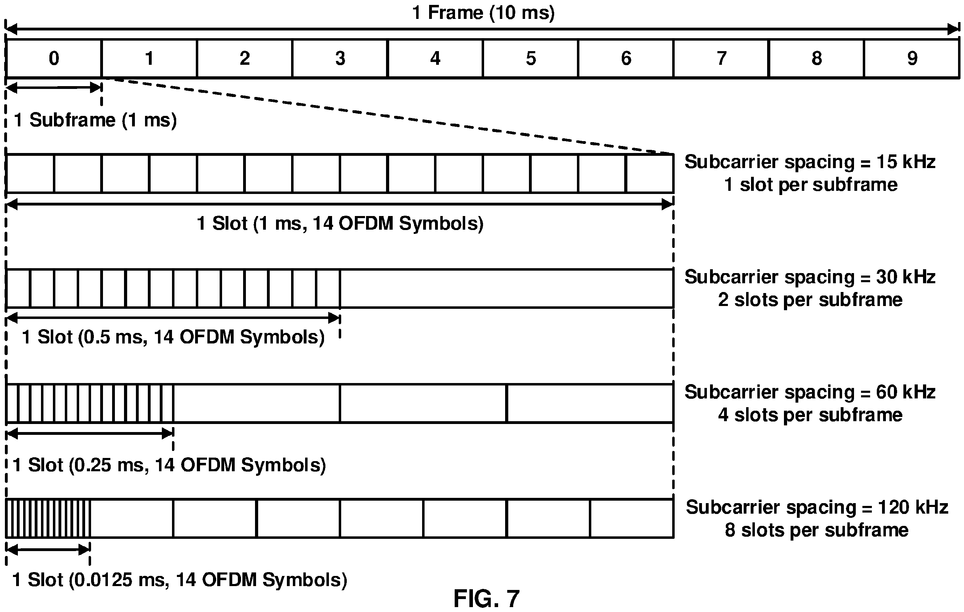

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

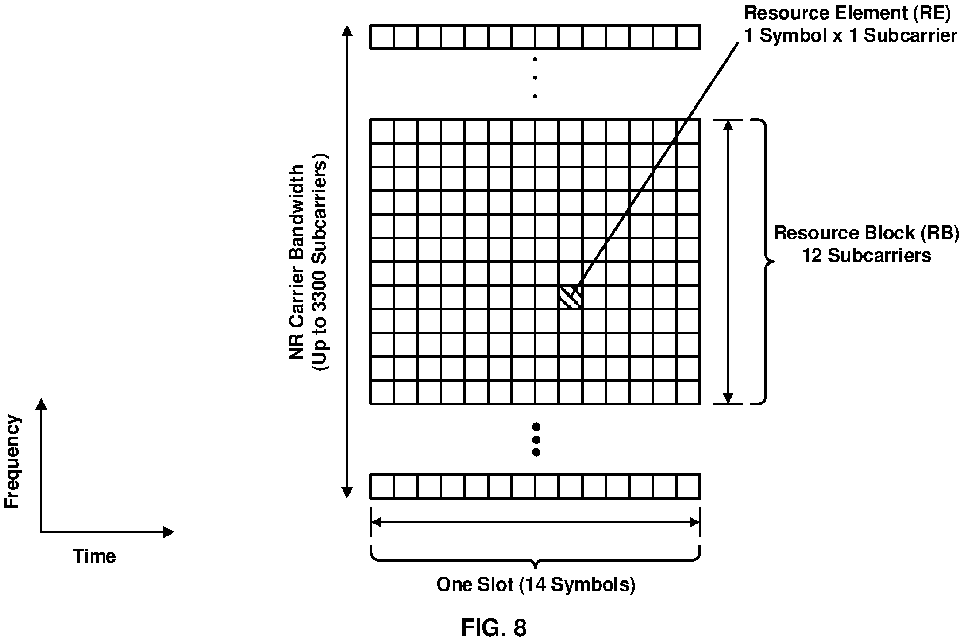

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or $275 \times 12 = 3300$ subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

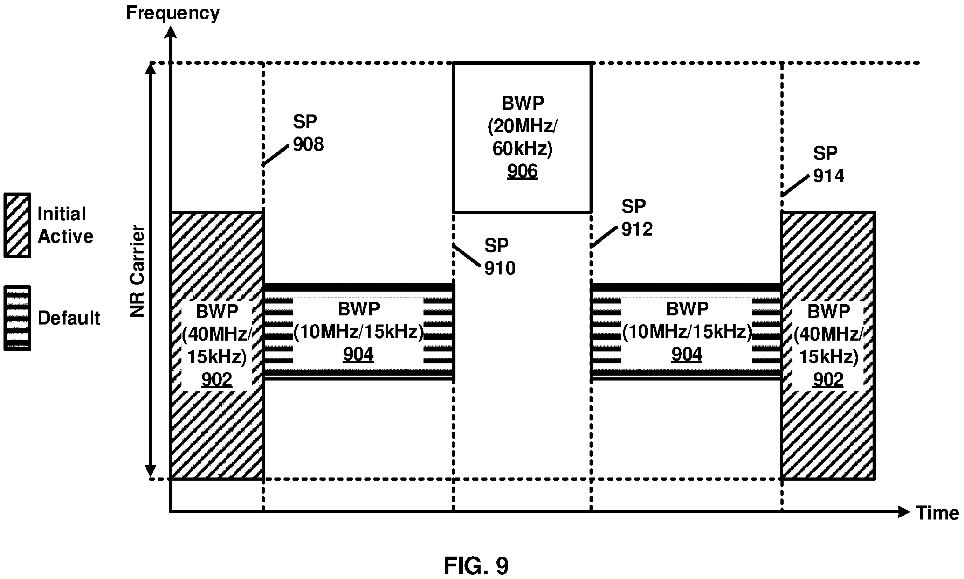

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

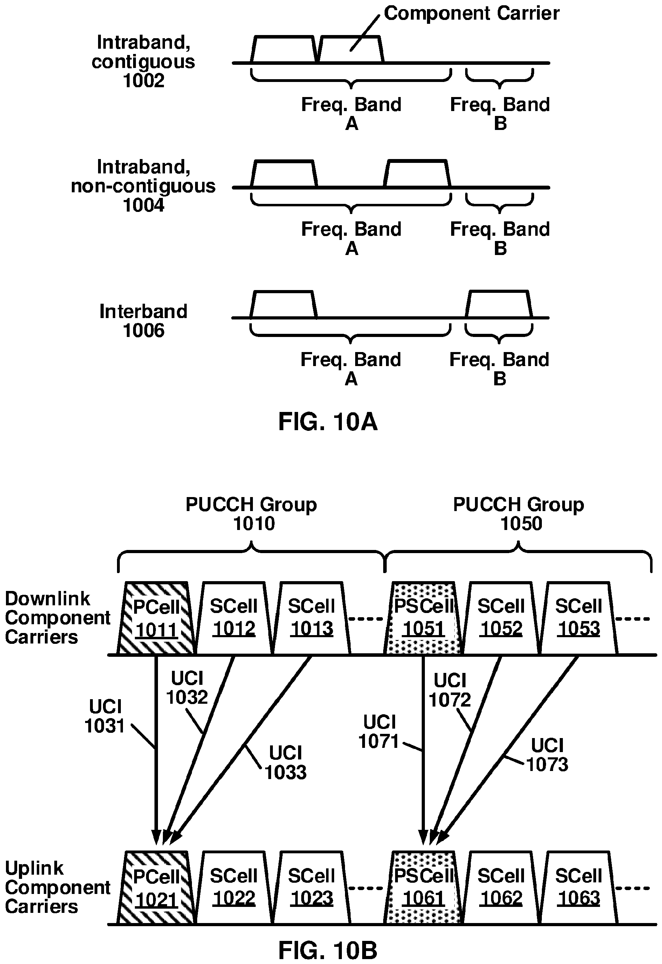

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

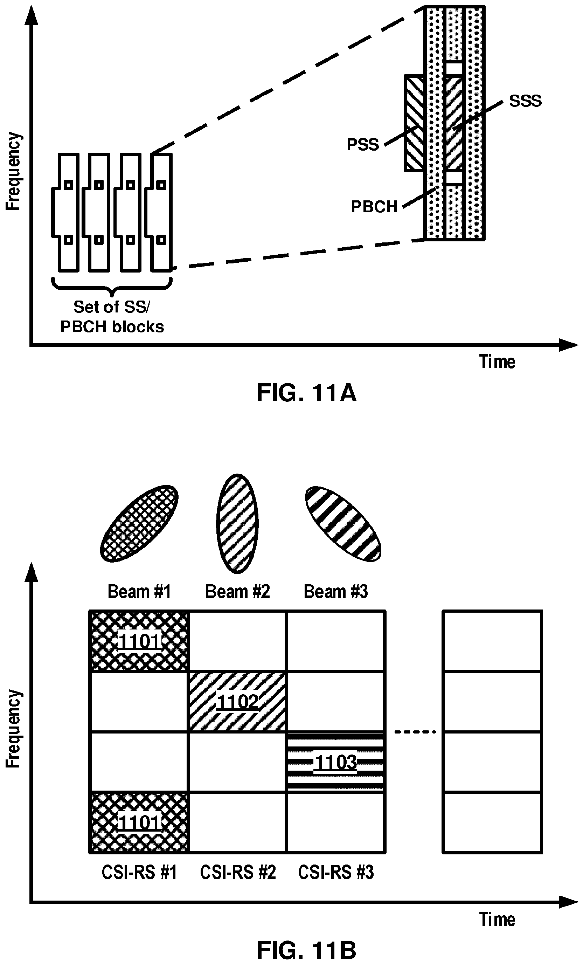

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB 1). The SIB 1 may comprise information for the wireless device to access the cell. The wireless device may use one or more parameters of the MIB to monitor a PDCCH, which may be used to schedule a PDSCH. The PDSCH may comprise the SIB 1. The SIB1 may be decoded using parameters provided/comprised in the MIB. The PBCH may indicate an absence of SIB1. The wireless device may be pointed to a frequency, for example, based on the PBCH indicating the absence of SIB 1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI.A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g., the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

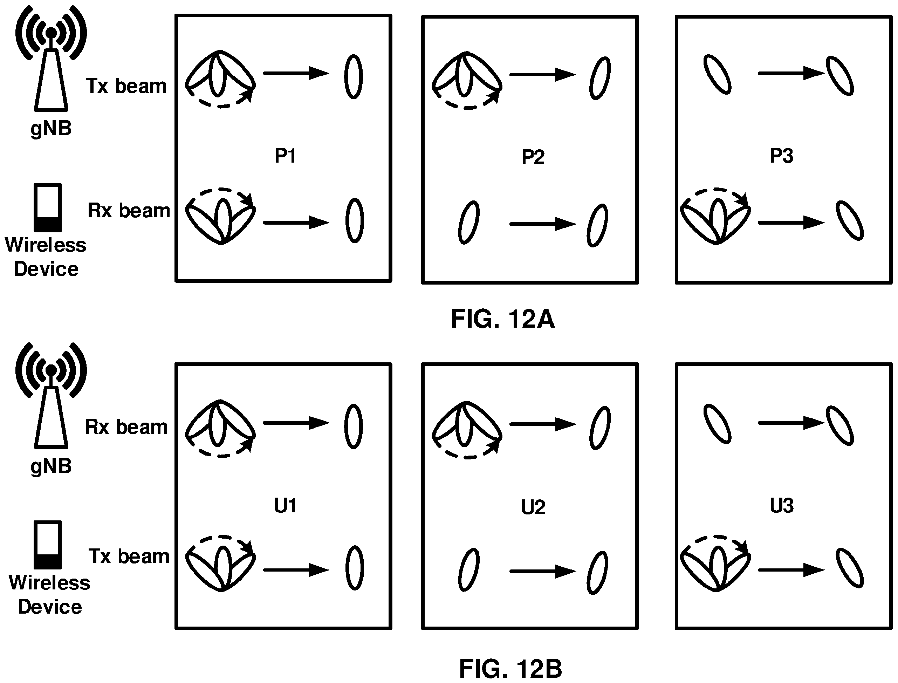

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

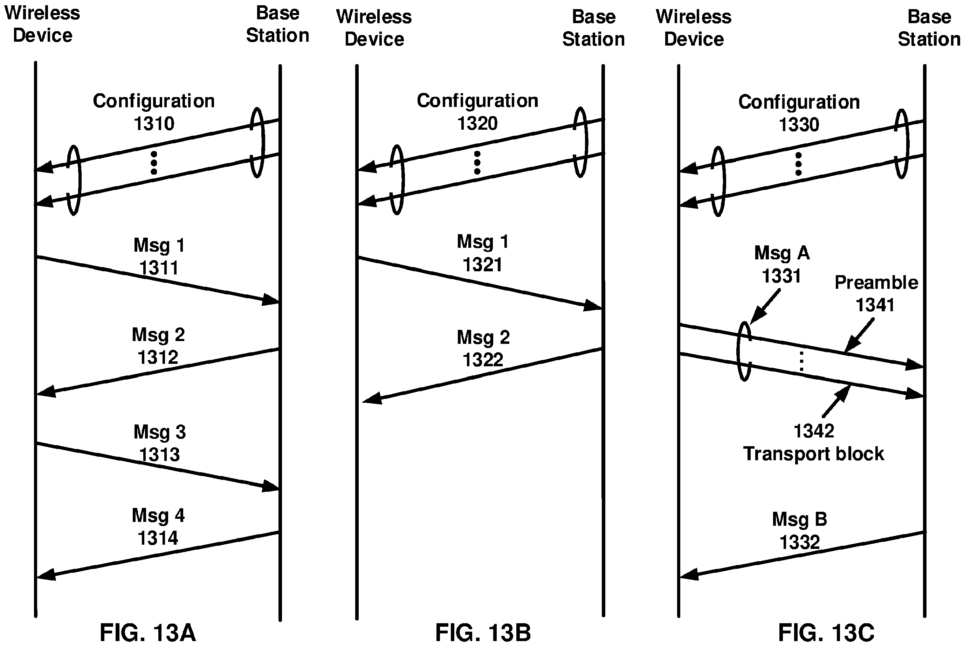

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC CONNECTED) state and/or in an RRC inactive (e.g., an RRC INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \le s\_id < 14$), t_id may be an index of a first slot of the PRACH occasion in a system frame (e.g., $0 \le t\_id < 80$), f_id may be an index of the PRACH occasion in the frequency domain (e.g., $0 \le f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

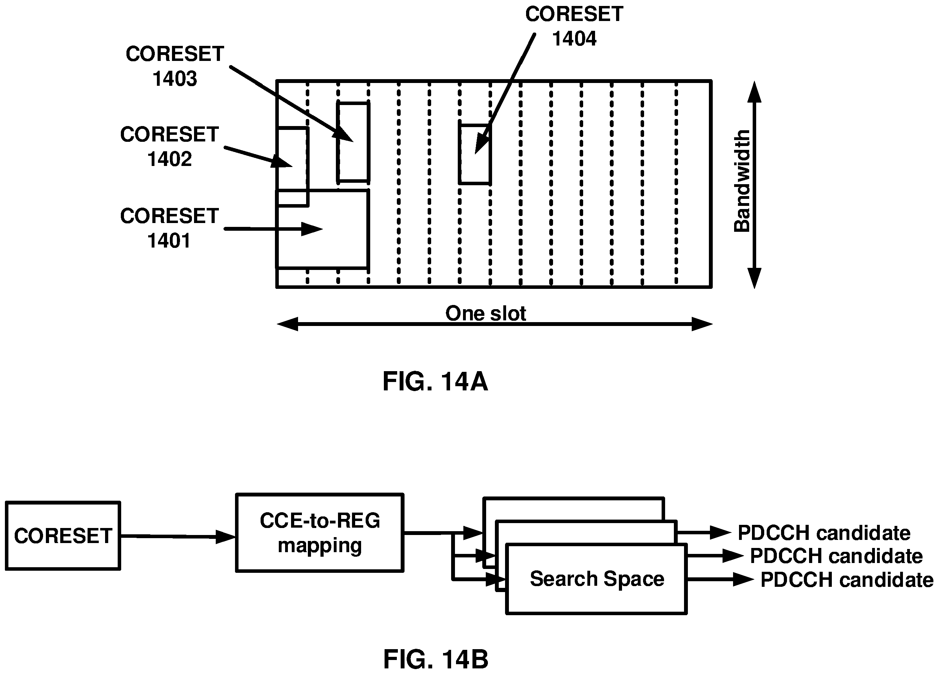

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the number of CCEs, the number of PDCCH candidates in common search spaces, and/or the number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to abase station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a number of OFDM symbols (e.g., between four and fourteen OFDM symbols) and may comprise two or fewer bits. The wireless device may use PUCCH format 1, for example, if the transmission is over/via four or more symbols and the number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

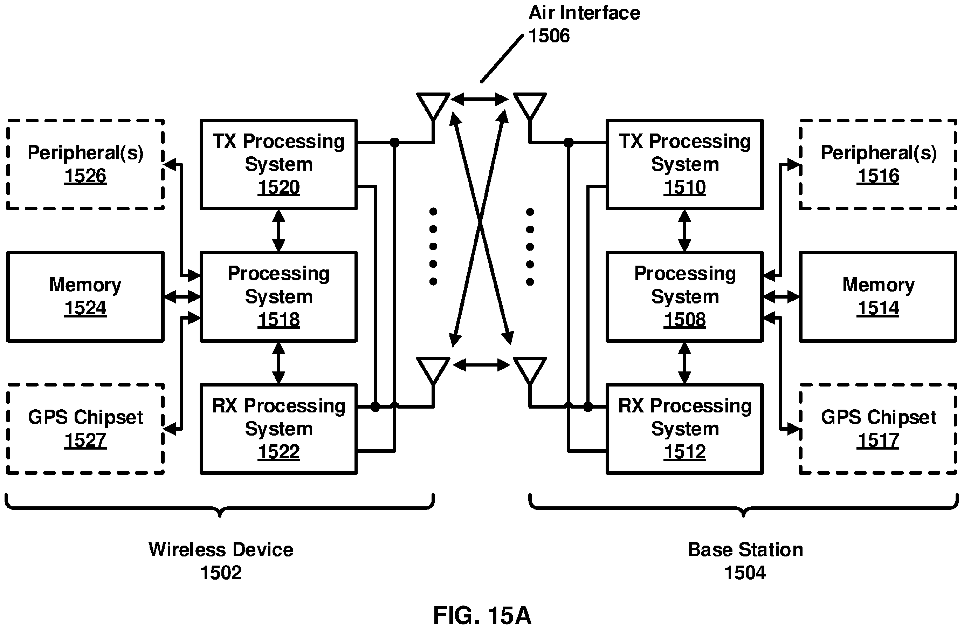

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

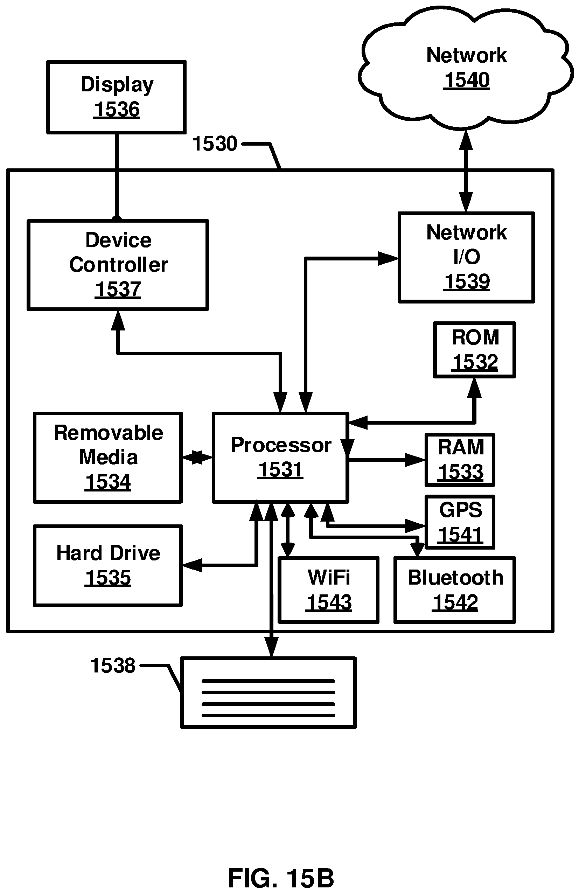

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

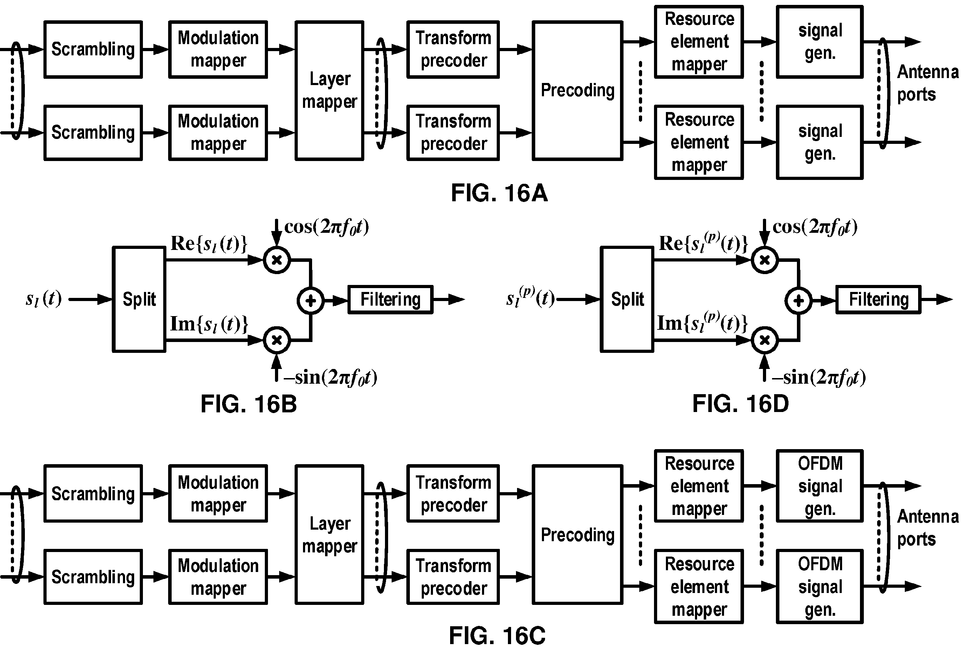

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

Wireless devices may be typically located at different locations with respect to a base station in a cell. Due to the different propagation delays from the different locations, the base station may receive uplink transmissions (e.g., PUCCH, PUSCH, SRS transmissions) from the wireless devices at different times. The different times may vary, for example, depending on the location of each wireless device and/or the cell size, if the transmissions may be unsynchronized. For example, the base station may receive uplink transmissions from the wireless devices closer to the base station (e.g., near the base station and/or its receiver) before the base station may receive uplink transmissions from some wireless devices farther away from the base station (e.g., near the edge of the cell).

At least some wireless communications based on orthogonal transmissions (e.g., OFDM-based transmissions, such as 5G NR, LTE, etc.), TDD, and/or FDD may use synchronization to ensure that the base station may receive uplink transmissions (e.g., scheduled by the base station for the same time or same time slot) from wireless devices within the cell at the same time as each other. At least one reason for this synchronization may be that the network may use boundaries between transmissions in the time domain (e.g., slot boundaries) to coordinate transmissions (e.g., to ensure that slot, symbol, sub-frame, and/or frame boundaries are consistent between wireless devices). If the base station may receive an uplink transmission later than a scheduled time slot (e.g., symbol, sub-frame, and/or frame), a minimum required time gap between the transmissions scheduled in the next time slot may not be guaranteed, and/or the orthogonality between the transmission signals may not be guaranteed. This delay of transmission may cause interference at the base station and/or misalignment between the timing of the wireless devices and the base station (e.g., in TDD, FDD, and/or TDD-FDD).

To prevent uplink transmissions (e.g., scheduled at the same time), from being received by the base station at different times, a base station may measure, for example, a time difference (e.g., difference between an expected time of arrival and an actual time of arrival) of uplink transmissions (e.g., PUSCH, PUCCH, SRS, and/or PRACH transmission) from each wireless device and may send (e.g., transmit) a timing advance to the respective wireless device in the cell. The wireless device may use the timing advance to adjust uplink transmission timing. The timing advance may be based on the round trip delay (e.g., the summation of the propagation delay that occurs in the uplink transmission and the propagation delay that occurs in the downlink transmission). The wireless device may adjust the uplink transmission timing by using the downlink transmission timing of the wireless device as a reference point. By adjusting, each wireless device may advance (e.g., send earlier in time by, e.g., a negative offset) the uplink transmission timing of an uplink transmission as compared to the downlink transmission timing as received in the downlink at the wireless device.

For example, the wireless device may advance an uplink frame (e.g., uplink frame n) relative to a corresponding downlink frame (e.g., downlink frame n). The wireless device may send (e.g., transmit) the uplink frame (e.g., uplink frame n), at the wireless device, prior to a start of the corresponding downlink frame (e.g., downlink frame n) at the wireless device. The wireless device may use, for example, the downlink frame of a cell (e.g., downlink carrier) to determine the uplink timing transmission (e.g., for the uplink carrier) and advance the uplink frame relative to the downlink frame. The timing advance mechanism may enable the base station to synchronize the reception of uplink transmissions from wireless devices so that, e.g., the uplink frame, received by the base station, and the downlink frame, sent (e.g., transmitted) by the base station, may be aligned at the base station.

The base station may receive uplink transmissions from wireless devices at different timings based on the location of each wireless device within the cell, but the reception issues may still be avoided even if the timing alignment may not be aligned exactly. For example, interference may be avoided so long as the delay may be within the cyclic prefix of each transmission. The timing advance may consider the cyclic prefix to ensure that the maximum delay of an uplink transmission may not exceed the cyclic prefix used, e.g., for the numerology of the cell.

As described herein, the timing advance may be referred to advancing uplink frames relative to downlink frames. Frames may be used as simply an example and one skill in the art will understand that the timing advance could be used for any another time interval, such as sub-frame, slot, symbol. The unit to advance may depend on the duration of the transmission.

A wireless device may use multiple cells (and/or carriers) for uplink and/or downlink transmissions. There may be a Special Cell (SPCell) and one or more secondary cells (SCell). The SPCell may be referred to as a Primary Cell (PCell). With respect to timing advances in carrier aggregation, each of the cells may have a different timing advance, depending on, for example, the cell size. For example, a PCell may have a first timing advance and the SCell may have a second timing advance that is smaller than the first timing advance of the PCell. If a wireless device were not capable of handling multiple timing advances and capable of carrier aggregation, the wireless device may apply the same timing advance to each cell in the carrier aggregation (e.g., all serving cells, including PCell and SCells). Alternatively, wireless devices that may be capable of carrier aggregation may also be capable of handling the timing advance for each cell used in carrier aggregation.

In at least some wireless communications, a cell may be associated with a timing advance group (TAG). If a first wireless device may receive, via the cell, downlink control information (DCI) scheduling a sidelink transmission to a second wireless device, the first wireless device may perform the sidelink transmission in the first/earliest time slot that may occur after a time duration from reception of the DCI. The time duration may be determined based on a timing advance (TA) value of the TAG.

The cell may be associated with more than one TAG. For example, the cell may be associated with two TAGs, wherein each TAG may be associated with different TA values. The cell associated with more than one TAG may support multiple transmission-reception points (TRPs). If the multiple TRPs are not co-located, different transmission timings may be required. For example, if the first wireless device may receive, via the cell associated with two TAGs, DCI scheduling a sidelink transmission to the second wireless device, the first wireless device may need to determine the time slot for performing the sidelink transmission based on which TAG of the two TAGs. If the two TAGs may result in different TA values, the second wireless device may not know the exact time slot and may not be able to receive the sidelink transmission from the first wireless device.

As described herein, a time duration for sidelink transmission may be based on a TA value. For example, if a first wireless device may receive, via a cell associated with such as two TAGs, DCI scheduling a sidelink transmission, the first wireless device may determine a time slot to perform the sidelink transmission based on a TAG among from such as the two TAGs. The TAG may be associated with the lowest (or the highest) TA value among the two TAGs. For example, if a TA value associated with a first TAG may be the lowest (or the highest) value among from the two TAGs, the first TAG among from the two TAGs may be used by the first wireless station. Additionally or alternatively, the TAG may be associated with the lowest TAG index. For example, if a first TAG index of the first TAG may be lower than a second TAG index of the second TAG among the two TAGs, the first TAG may be determined by the first wireless station. Additionally or alternatively, DCI may be received via a control resource set (coreset). For example, a TA value may be associated with a TAG among from such as a first TAG and a second TAG. The first wireless device may determine the TAG to be the first TAG based on the control resource set (coreset) pool index being equal to a first value (e.g., 0), or the first wireless device may determine the TAG to be the second TAG based on the coreset pool index being equal to a second value (e.g., 1). By using one TA value associated with a TAG, among a plurality of TAGs, advantages may result such as improved alignment of operations between a base station and a wireless station and/or reduced interference between the sidelink transmission and uplink/downlink transmissions to the base station.

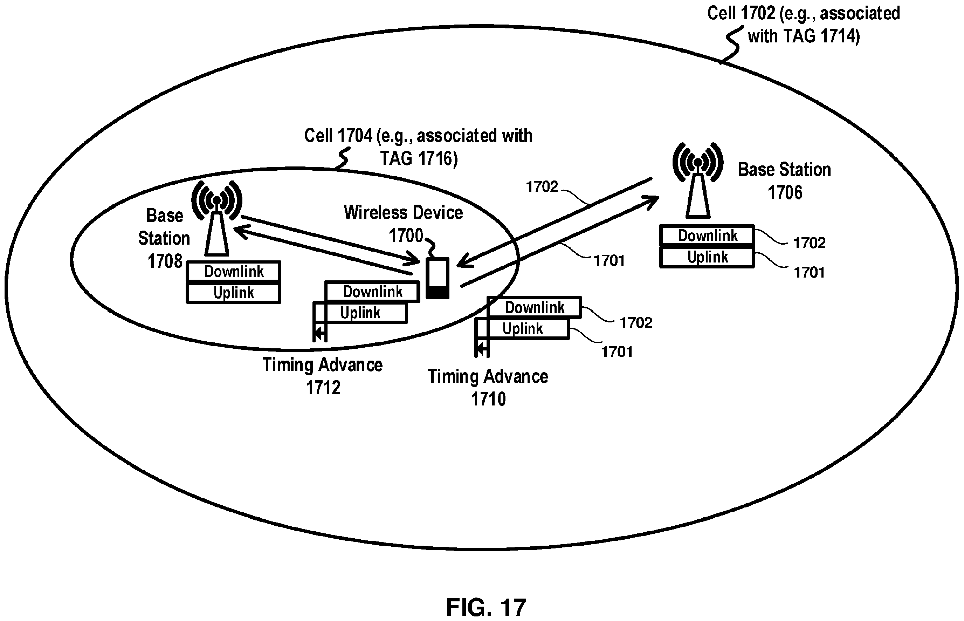

FIG. 17 shows an example timing advance configuration for at least two cells. As described with respect to FIG. 17, a wireless device 1700 may be configured with carrier aggregation for a cell 1702 (e.g., a PCell) and a cell 1704 (e.g., an SCell). A plurality of cells (e.g., more than two cells) may be configured for carrier aggregation (e.g., some or all of the cells may also be activated), for example, although only two cells are shown in FIG. 17. As described with respect to FIG. 17, the cell 1702 may include a base station 1706. The base station 1706 may send (e.g., transmit) downlink transmissions to a wireless device 1700 and/or receive uplink transmissions from the wireless device 1700. The cell 1704 may include a base station 1708. The base station 1708 may receive uplink transmissions from the wireless device 1700. Some cells (e.g., SCells) may be configured for only uplink transmissions (and not downlink). Some cells may be configured for only downlink transmissions (and not uplink). Some cells may be configured for both uplink and downlink transmissions. For example, the cell 1704 may only be configured for uplink transmissions. For example, the cell 1704 may be configured for both uplink and downlink transmissions. As described with respect to FIG. 17, the cell 1704 may be configured with both uplink and downlink transmissions.

The wireless device 1700 may use a timing advance 1710 for uplink transmissions to the base station 1706 of the cell 1702 (e.g., to an uplink carrier of the cell 1702). As described with respect to FIG. 17, a downlink transmission 1702 timing and an uplink 1701 transmission timing may be aligned at base station 1706. The uplink transmission 1701 timing may be advanced (i.e., transmitted earlier in time) compared to the downlink transmission 1702 timing. The wireless device 1700 may advance the uplink transmission 1701 timing (e.g., an uplink frame, an uplink slot, an uplink mini-slot, etc.) by the timing advance 1710 (e.g., a negative offset) relative to the downlink transmission 1702 timing (e.g., a downlink frame, a downlink slot, a downlink mini-slot, etc.).

The wireless device 1700 may advance uplink transmissions (e.g., the wireless device 1700 may send (e.g., transmit) uplink transmissions earlier) by a timing advance 1712 relative to the downlink transmission timing (as received by wireless device 1700), for example, if the wireless device 1700 may perform uplink transmissions to the base station 1708 of the cell 1704 that may be different from the cell 1702. As described with respect to FIG. 17, the uplink transmission timing and the downlink transmission timing may be aligned at (if received by) the base station 1708. The uplink transmission and the downlink transmission timing may not be aligned at the wireless device 1700. The uplink transmission timing may occur before the downlink transmission timing at the wireless device 1700 (e.g., the wireless device may send (e.g., transmit) the uplink frame prior to when the downlink frame may be received).

The wireless device 1700 may be configured with more than two cells. Each wireless device may be configured with a plurality of cells. One way for the network to manage the different timing advances for large number/quantity of wireless devices and multiple cells configured for each wireless device may be to determine a timing advance for each cell in a group of cells (e.g., for each uplink carrier of each cell in a group). The groups of cells (uplink carriers) may be referred to as timing advance groups (TAGs). For example, cells of similar size (e.g., with similar size and the same numerology, or cells with different sizes and different numerologies) may be associated with the same TAG (e.g., the same identifier (ID) of a TAG, such as a TAG ID). Each TAG may include one timing advance. For example, a group of cells in a TAG that may include the PCell (SPCell) may be referred to as a pTAG. A group of cells in a TAG that may include only SCells (no PCell) may be referred to as an sTAG.

As described with respect to FIG. 17, the cell 1702 may be associated with a TAG 1714 (e.g., pTAG) and the cell 1704 may be associated with a TAG 1716 (e.g., sTAG). Other cells may also be associated with the TAG 1714. The wireless device 1700 may use the timing advance 1710 to each cell associated with TAG 1714, for example, if the wireless device 1700 may receive the timing advance 1710 associated with TAG 1714 (e.g., identified by a TAG identifier (TAG ID)). Other wireless devices may follow the same approach whether or not the other wireless devices may be located in (e.g., in a coverage area of) the cell 1702. The cell 1704 may be associated with TAG 1716. The wireless device 1700 may use the timing advance 1712 to each cell associated with the TAG 1716, for example, if the wireless device 1700 may receive the timing advance 1712 associated with TAG 1716.

Each cell and/or each TAG may have been only associated with one timing advance (e.g., one timing advance per cell and/or per TAG). A network may be able to associate one cell (or one TAG) with at least two timing advances (e.g., at least two timing advances for one uplink carrier of a cell, such as one of the normal uplink carrier or the supplemental uplink carrier). The phrases such as "at least two timing advances", "multiple timing advances", and/or "a plurality of timing advances" may be used interchangeably. "At least" in "at least two timing advances" may be omitted (e.g., in the figures).

One use case for having at least two timing advances in one cell (or for one TAG) may be in a multiple transmission reception point (TRP) deployment scenario. The multiple TRPs may send (e.g., transmit) and/or receive, for example, repetitions of transmissions across the same downlink and/or uplink carrier. The repetitions improve reliability of transmissions, which may be particularly useful in higher frequency bands (e.g., FR2 and beyond).

For example, TRPs may not be co-located (non-co-located). For example, TRPs may be co-located (e.g., by having antenna panels and/or radio units on the same physical structure) via which the timing advances are generally the same. For example, the antenna panels and/or radio units of the base station may be located at different physical locations within a cell. If TRPs may be non-co-located, the network may provide a timing advance for each TRP even though the same cell (uplink carrier) may be used for uplink transmissions. Each timing advance, for each TRP, may be associated with a different TAG.

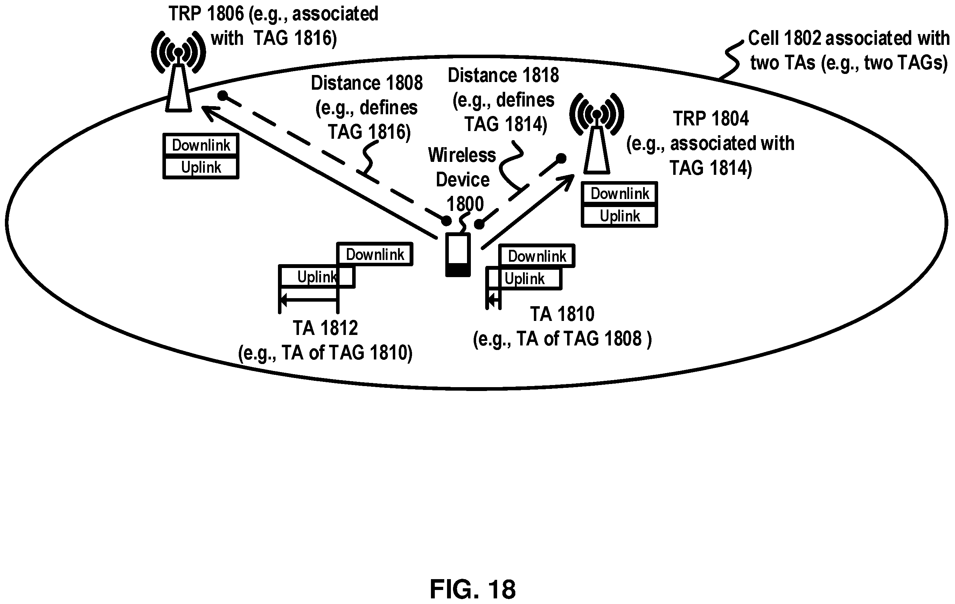

FIG. 18 shows an example timing advance mechanism for a cell with at least two timing advances. The wireless device 1800 may be configured with a cell 1802 with at least two timing advances (e.g., an uplink carrier associated with two timing advances and/ or two TAGs). The cell 1802 may include a TRP 1804 and/or a TRP 1806. The TRP 1804 and the TRP 1806 may be non-co-located (i.e., the TRP 1804 and the TRP 1806 may be located at different physical locations within the cell 1802). Since the TRP 1804 and the TRP 1806 may not be co-located, the TRP 1804 and the TRP 1806 may receive uplink transmissions at different times from the wireless device 1800, for example, if the same timing advance may be used (e.g., for the same cell (uplink carrier)). FIG. 18 shows an example that two TRPs may not be co-located. The present disclosure may not be limited to this particular example with only two TRPs and/or the use of TRPs in general. TRPs and/or the depiction of two TRPs may be shown for explanatory purposes only, other uses cases without TRPs, and/or in combination with TRPs may be possible.

As described with respect to FIG. 18, the wireless device 1800 may use a timing advance 1810 for sending (e.g., transmitting or when transmitting) uplink transmissions (e.g., PUCCH, PUSCH, and/or SRS) to the TRP 1804. The wireless device 1800 may use the timing advance 1810 to advance the uplink transmission timing using the downlink transmission timing as a reference point. The wireless device 1800 may use a timing advance 1812 for sending (e.g., transmitting or when transmitting) uplink transmissions (e.g., PUCCH, PUSCH, and/or SRS) to the TRP 1806. The wireless device 1800 may use the timing advance 1812 to advance uplink transmission timing using the downlink transmission timing as a reference point. The uplink transmission timing and the downlink transmission timing may be aligned at both the TRP 1804 and the TRP 1806. The uplink transmission timing and the downlink transmission timing may not be aligned at wireless device 1800.

The cell 1802 may be associated with two timing advances as described with respect to FIG. 18. For example, the uplink carrier of the cell 1802 may be associated with two timing advances (e.g., uplink carrier may be one of a normal uplink carrier or a supplemental uplink carrier). A network may assign two TAGs, for example, a TAG 1814 and a TAG 1816, to the cell 1802. The TAG 1814 may be associated with the timing advance 1810, and/or the TAG 1816 may be associated with the timing advance 1812. The wireless device 1800 may use the timing advance 1810 to uplink transmissions for the TAG 1814. The wireless device 1800 may use the timing advance 1812 to uplink transmissions for the TAG 1816.

As described with respect to FIG. 18, the TRP 1804 and the TRP 1806 may each be associated with a TAG. The TRP 1804 of the cell 1802 may be associated with the TAG 1814. The TRP 1806 of the cell 1802 may be associated with the TAG 1816. A base station may use a distance (e.g., round trip delay) between the wireless device 1800 and the TRP 1804 (or the TRP1806) to determine the timing advance 1810 (or the timing advance 1812). The base station may use a distance (e.g., round trip delay) between the wireless device 1800 and the TRP 1806 to determine the timing advance 1812. For example, the base station may determine the timing advance 1810 based on a distance 1818 between the wireless device 1800 and the TRP 1804. The base station may determine the timing advance 1812 based on a distance 1808. The base station may measure uplink transmission from the wireless device 1800, for example, to use the distance. The distance may not be used (measured) directly. Round trip delay may be used by the base station to determine a timing advance. The round trip delay may not be limited to line of sight distance. Numerous other factors may affect round trip delay (e.g., reflects, scattering, losses, etc.).

A base station may send (e.g., transmit) two messages to a wireless device to provide a timing advance (e.g., comprising a timing advance command, which the wireless device may use to determine the timing advance). A message that may comprise a timing advance command may be referred to as a control command. A timing advance command (e.g., TA) may be an index value (e.g., TA = 0, 1, 2, ..., 3868) that may be used to determine a timing advance. The phrase "timing advance" may be replaced with "timing advance value."

The base station may send (e.g., transmit) a control command, such as an RAR (e.g., message 2 in a four-step random access procedure or message B in a two-step random access procedure), for example, during a random access procedure (e.g., initial, reestablishment, beam failure, requested by base station with PDCCH order, etc.). The RAR may include a timing advance command (e.g., an initial timing advance command) that the wireless device may use to advance uplink transmission timing with the downlink transmission timing that may be used as a reference point. The initial timing advance command may be used for a TAG of a cell. The initial timing advance command of an RAR may be, for example, 12-bits in length with values ranging from 0-3846 (inclusive).

The propagation delay of a wireless device may change as a wireless device may move to different locations within a cell, for example, since many wireless devices in a cell may be mobile. The base station may update the timing advance (e.g., the initial timing advance from the RAR) by sending another control command to the wireless device (e.g., the wireless device may be connected to the base station in, e.g., an RRC_CONNECTED state, or in an RRC_INACTIVE state, such as for small data transmission (SDT)). The base station may send (e.g., transmit) a MAC CE that may comprise a timing advance command (e.g., a timing advance command MAC CE or TAC MAC CE), for example, to update the timing advance (an initial or a previously updated timing advance) of a wireless device. The timing advance command of the MAC CE may be the same (e.g., absolute TAC MAC CE) or smaller than the timing advance command in the RAR. The wireless device may add the timing advance command in the MAC CE to the initial timing advance command, from the RAR, or to a current timing advance that may have been previously updated (e.g., by another RAR and TAC MAC CE). The absolute TAC MAC may be used without updating another timing advance. For example, the timing advance command of a TAC MAC CE may be 6-bits in length with values ranging from 0-63 (inclusive). Example numerical values may simply be examples. One skilled in the art would recognize that different numerical values for timing advance commands may be used depending on different factors, such as cell size. For example, in large cell deployments (e.g., non-terrestrial networks), the timing advances may be different than the examples herein.

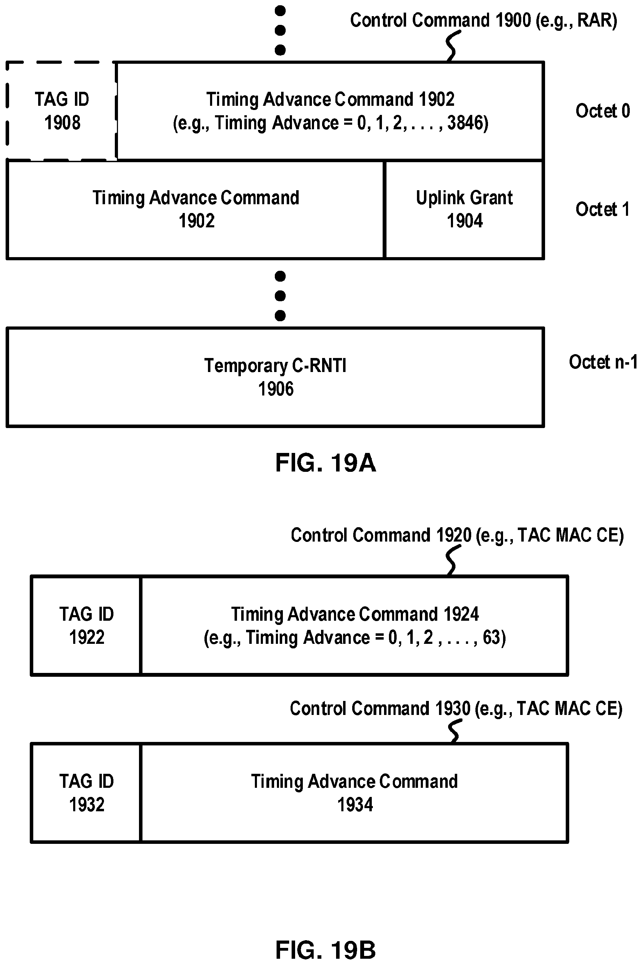

FIG. 19A shows an example timing advance command. A control command 1900 may be an initial control command. The control command 1900 may be an RAR from a random access procedure (e.g., 2-step or 4-step). The control command 1900 may be several octets (sequences of 8-bits) in length. As described with respect to FIG. 19A, the control command 1900 may be n octets in length (octet 0, octet 1, .... , octet n-1). The control command 1900 may comprise a timing advance command 1902. The timing advance command 1902 may be an initial timing advance command. The timing advance command 1902 may extend over one or more octets of the control command 1900. As described with respect to FIG. 19A, the timing advance command 1902 may extend over octet 0 and octet 1. The timing advance command 1902 may be a value between 0 and 3846 (inclusive). The control command 1900 may further comprise a uplink grant 1904 and/or a temporary C-RNTI 1906.

In at least some wireless communications, an RAR may not comprise a TAG ID, for example, because a wireless device may perform random access for a particular cell and/or each cell may be only associated with one TAG. A wireless device would associate the timing advance command in an RAR with the cell (TAG) via which the RAR was received. With the introduction of at least two TAGs for one cell (one uplink carrier), some explicit mechanism may be used to enable wireless devices to associate the timing advance commands with the appropriate TAG.

For example, the RAR format may (be modified to) comprise a TAG ID. As described with respect to FIG. 19A, the control command 1900 may comprise a TAG ID 1908. The wireless device may use the TAG ID 1908 to associate the timing advance command 1902 with the corresponding TAG (of a cell or uplink carrier). For example, a wireless device may use the TAG ID 1908 to associate the timing advance command 1902 with the TAG 1814 shown in FIG. 18. For example, the wireless device 1800 may use the timing advance command 1902 to the timing advance 1810 to advance uplink transmission timing (with respect to downlink transmission timing) for uplink transmissions to the TRP 1804.

For example, the TAG ID 1908 may be associated with the TAG 1816 shown in FIG. 18. For example, the wireless device 1800 would use the timing advance command 1902 to the timing advance 1812 to advance uplink transmission timing (with respect to downlink transmission timing) for uplink transmissions to the TRP 1806. A base station may send (e.g., transmit) the control command 1900 comprising the TAG ID 1908 associated with the TRP 1804 and/or TRP 1806 based on (e.g., in response to) the wireless device 1800 imitating a random access procedure with the cell 1802.

The TAG ID 1908 may not be included in the control command 1900. FIG. 19A may be one of numerous possibilities to explicitly signal the association between the timing advance command 1902 and a cell (TAG or uplink carrier). Additionally or alternatively, an implicit mechanism may be used. For example, the control command 1900 may not comprise the TAG ID 1908. For example, the wireless device 1800 may use the timing advance command 1902 to at least one of the TAG 1814 and the TAG 1816. There may be one or more reserved bits in the field where TAG ID 1908 may be, for example, if the RAR format may not include the TAG ID 1908.

FIG. 19B shows an example timing advance command. At least one of a control command 1920 and a control command 1930 may be a MAC CE (e.g., a timing advance command MAC CE (TAC MAC) or a timing advance MAC CE (TA MAC CE)). The control command 1920 may comprise a TAG ID 1922 and a timing advance command 1924. A base station and a wireless device may use the TAG ID 1922 to associate a timing advance command 1924 to the corresponding TAG. The control command 1930 may comprise a TAG ID 1932 and a timing advance command 1934. The base station and the wireless device may use the TAG ID 1932 to associate a timing advance command 1934 to the corresponding TAG. The TAG ID 1922 and the TAG ID 1932 may correspond to one cell (with at least two TAGs). For an absolute timing advance MAC CE, the TAG 1922 may not be present.

For example, the base station may measure, for example, the time difference of uplink signals (e.g., PUSCH, PUCCH, SRS) that may be sent (e.g., transmitted) by the wireless device 1800 shown in FIG. 18. The base station may determine a value for the timing advance command 1924 and/or the timing advance command 1934 based on the measurements of the uplink signals. The base station may send (e.g., transmit), to the wireless device 1800, the control command 1920 and/or the control command 1930 via the cell 1802 (e.g., via the downlink carrier of the cell 1802). The wireless device 1800 may determine that the timing advance command 1924, of the control command 1920, may be associated with the timing advance 1810 of the TAG 1808 based on the TAG ID 1922 (e.g., the TAG ID 1922 of the control command 1920 may be the same value as the TAG ID 1922 in the configuration for the TAG 1814). The wireless device 1800 may determine that the timing advance command 1934, of the control command 1930, may be associated with the timing advance 1812 of the TAG 1810 based on the TAG ID 1932 (e.g., the TAG ID 1932 of the control command 1930 may the same value as the TAG ID 1932 in the configuration for the TAG 1816).

The wireless device 1800 may use the timing advance command 1924, of the control command 1920, to the timing advance 1810 of the TAG 1814. The wireless device 1800 may use the timing advance command 1934, of the control command 1930, to the timing advance 1810 of the TAG 1814. The timing advance command 1924 and/or the timing advance command 1934 may be a value between, for example, 0 and 63. The wireless device 1800 may use the timing advance command 1924 and/or the timing advance command 1934 to an initial timing advance (e.g., the initial timing advance (determined) from the timing advance command 1902) received, from the base station, via an RAR (e.g., from the control command 1900 shown in FIG. 19A).

For example, to determine the timing advance ($T_{TA}$) from the control command 1900 (e.g., an RAR), the wireless device 1800 may use the timing advance command 1902 ($T_A$) of the control command 1900 to determine a value $N_{TA}$ from the timing advance command 1902. The value $N_{TA}$ may be determined as $N_{TA} = T_A \cdot 16 \cdot 64/2^{\mu}$, which may be relative to the subcarrier spacing ($2^{\mu} \cdot 15$ kHz) of the first uplink transmission from wireless device 1800 after reception of the control command 1900 (e.g., an RAR).

The timing advance ($T_{TA}$) may be determined from the value $N_{TA}$ of the timing advance command 1902 by $T_{TA} = (N_{TA} + N_{TA,offset})T_C$, where $N_{TA,offset}$ is a fixed timing offset used to calculate the timing advance and $T_C$ is a basic time unit for, for example, 5G NR (e.g.,

$$T_c = \frac{1}{\Delta f_{max} \times N_f}$$

, where $\Delta f_{max} = 480 \cdot 10^3$ Hz and $N_f = 4096$). $N_{TA,offset}$ may be, for example, one of 0, 13792, 25600, or 39936 depending on the frequency range and/or frequency band of the cell. The fixed timing offset ($N_{TA,offset}$) may one of a plurality of fixed timing offsets received from one or more configuration parameters of a cell (e.g., n-TimingAdvanceOffset in ServingCellConfigCommon). The plurality of fixed timing offsets may be associated with a frequency range and band (e.g., FR1, FR2) of a cell used for uplink transmissions. The wireless device 1800 may use one of the plurality of fixed timing offsets based on the frequency range and/or band of the cell. The same process may be applied to an absolute TAC MAC CE, for example, instead of using an RAR in the above calculation.

For example, to update the timing advance ($T_A$) by the control command 1920 (e.g., a TAC MAC CE), the wireless device 1800 may use timing advance command 1924 of the control command 1920 (e.g., $T_A = 0, 1, 2,..., 63$) to determine $N_{TA\_new} = N_{TA\_old} + (T_A - 31) \cdot 16 \cdot 64/2^{\mu}$, where $N_{TA\_old}$ may be the original value for the timing advance and $N_{TA\_new}$ may be the updated value for the timing advance. With $N_{TA\_new}$, the timing advance may be calculated by

$T_{TA} = (N_{TA} + N_{TA,offset})T_c.$

For calculating the timing advance ($T_{TA}$), additional terms may be included. For example, the calculation for the timing advance $T_{TA}$ may be $T_{TA} = \left(N_{TA} + N_{TA,offset} + N_{TA,adj}^{common} + N_{TA,adj}^{UE}\right)T_c$, where $N_{TA,adj}^{common}$ is derived from the one or more configuration parameters of a non-terrestrial network cell (NTN cell) (e.g., TACommon, TACommonDrift, and/or TACommonDriftVariation), and $N_{TA,adj}^{UE}$ is computed based on the position of the wireless device and the one or more configuration parameters for the NTN cell (e.g., serving-satellite-ephemeris-related parameters). If $N_{TA,adj}^{common}$ or $N_{TA,adj}^{UE}$ is not configured for the cell, $N_{TA,adj}^{common}=0$ or $N_{TA,adj}^{UE}=0$, respectively.

The network may use the timing advance mechanism to ensure that the uplink transmission timing and the downlink transmission timing may be aligned at the base station. The timing advance may also be used in sidelink communications even though a sidelink transmission may not be intended to be received by a base station.

Sidelink communications may occur between two or more wireless devices. Wireless devices may use uplink slots for sending (e.g., transmitting) sidelink transmissions (e.g., sidelink slots may be mapped to one or more uplink slots in, e.g., a TDD configuration). There may be three basic transmission scenarios for sidelink communications: unicast, groupcast, and broadcast. Unicast transmissions may occur between two wireless devices. The intended recipient of a sidelink transmission may be another wireless device. Groupcast may occur between multiple devices, where a wireless device may send (e.g., transmit) a sidelink transmission to a specific group of wireless devices. Broadcast transmissions may occur between a wireless device and any wireless device within a range of the wireless device.

Unlike communications between a wireless device and a base station, communications between wireless devices may not be within the coverage area of a cell. There may be generally three deployment scenarios in sidelink communications. First, using unicast as an example, both the transmitter wireless device and the receiver wireless device may be in the coverage area of a cell, which may be referred to as in-coverage operation. Second, both the transmitter wireless device and the receiver wireless device may be out of the coverage area of a cell, which may be referred to as out-of-coverage operation. Third, the transmitter wireless device or the receiver wireless device may be out of the coverage area of the cell (but not both), which may be referred to as partial coverage operation.

There may be two basic modes for resource allocation in sidelink communications (e.g., sidelink resource allocation mode). The base station (network) may schedule a sidelink transmission (e.g., a transmitter wireless device to send (e.g., transmit) a sidelink transmission to a receive wireless device). An example of a sidelink resource allocation mode via which the base station schedules sidelink transmissions may be sidelink resource allocation mode 1 (in 5G NR). Another example of a sidelink resource allocation mode via which the base station schedules sidelink transmissions may be resource allocation mode 3 (in LTE). On the other hand, a wireless device may choose the sidelink resources to use for a sidelink transmission by a random resource selection and/or sensing (e.g., monitoring for sidelink control information (SCIs) in a sensing window and selecting resources in a selection window). An example of this mode in 5G NR may be sidelink resource allocation mode 2.

The wireless device may be in an in-coverage operation or partial coverage operation, for example, if a wireless device may perform sidelink communications scheduled by a base station. For sidelink transmissions, wireless devices (transmitter wireless devices) may use the timing advance of the cell (e.g., for uplink transmissions in the cell) before sending (e.g., transmitting) the sidelink transmission. The introduction of configuring a cell with at least two timing advances (or associating a cell with at least two TAGs) may impact sidelink communications, for example, if a wireless device may be operating in a sidelink resource allocation mode in which the base station (network) may schedule sidelink transmissions.

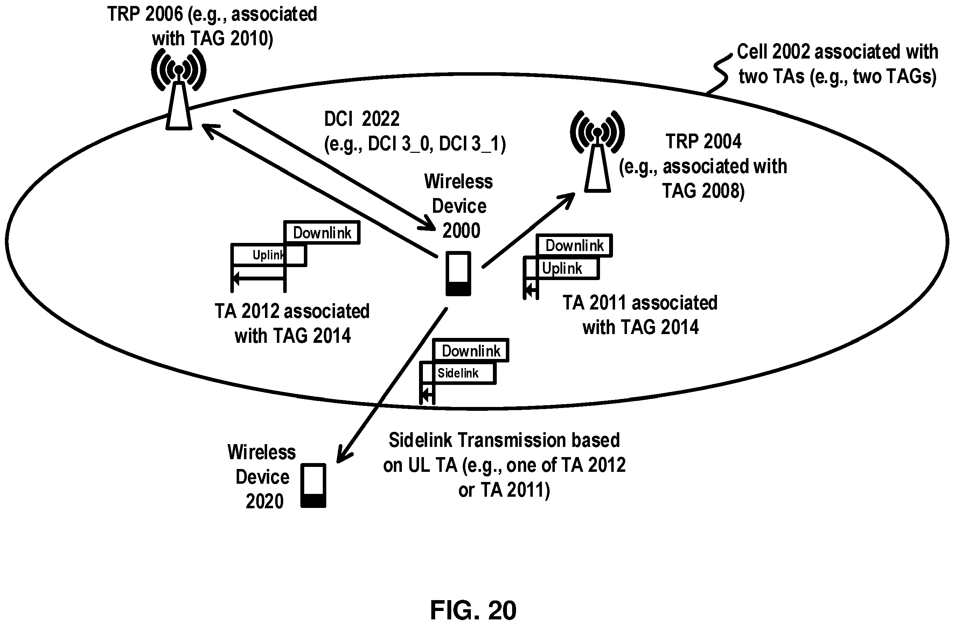

FIG. 20 shows an example timing advance mechanism for a cell with at least two timing advances and sidelink communications. A wireless device 2000 may perform sidelink communications in a cell 2002 with at least two timing advance. The phrase "at least two timing advances" may be replaced with "two timing advances", "multiple timing advances" and/or "a plurality of timing advances."

As described with respect to FIG. 20, the cell 2002 may comprise a TRP 2004 and/or a TRP 2006. A base station may comprise the TRP 2004 and/or the TRP 2006 (e.g., as transceivers of the base station). The cell 2002 may be associated with one or more TAGs. For example, the cell 2002 may be associated with a TAG 2008 and/or a TAG 2010. The TAG 2008 may be associated with the TRP 2004. The TAG 2010 may be associated with the TRP 2006. The wireless device 2000 may advance an uplink transmission timing relative to a downlink transmission timing by a timing advance 2011, for example, if the wireless device 2000 may send (e.g., transmit) uplink transmissions to the TRP 2004. The wireless device 2000 may use the timing advance 2011 (as, e.g., a negative offset) to the downlink transmission timing to determine the uplink transmission timing, for example, by advancing. This may result in the uplink transmission timing occurring before the downlink transmission timing. The uplink transmission timing may be aligned with the downlink transmission timing at the base station (e.g., at the TRP 2004 and/or the TRP 2006), for example, by using the timing advance 2011.

The timing advance 2011 may be associated with the cell 2002, the TAG 2008 of the cell 2002, and/or the TRP 2004 of the cell 2002. The wireless device 2000 may advance the uplink transmission timing relative to the downlink transmission timing by timing advance 2011, for example, if the wireless device 2000 may send (e.g., transmit) uplink transmissions (e.g., PUCCH, PUSCH, SRS transmissions) to the TRP 2004. A timing advance 2012 may be associated with the cell 2002, the TAG 2006 of the cell 2002, and/or the TRP 2006 of the cell 2002. The wireless device 2000 may advance the uplink transmissions (e.g., PUCCH, PUSCH, SRS transmissions) to the TRP 2006 by the timing advance 2012, for example, if the wireless device 2000 may send (e.g., transmit) uplink transmissions (e.g., PUCCH, PUSCH, SRS transmissions) to the TRP 2006.

As described with respect to FIG. 20, the wireless device 2000 may send (e.g., transmit) a sidelink transmission to a wireless device 2020. The wireless device 2000 may operate in the cell 2002 in which the base station may schedule the sidelink transmission from the wireless device 2000 to the wireless device 2020 (e.g., sidelink resource allocation mode 1). The wireless device 2000 may receive a DCI 2022 scheduling the sidelink transmission from the base station (e.g., TRP 2006). The DCI 2022 may schedule the sidelink transmission from the wireless device 2000 to the wireless device 2020. For example, the DCI 2022 may include DCI 3_0 (DCI format 3_0), DCI 3_1 (DCI format 3_1), and/or any other DCI format that may schedule the sidelink transmission. DCI 3_0 may schedule a 5G NR sidelink transmission. DCI 3_1 may schedule an LTE sidelink transmission (e.g., on an LTE carrier). The wireless device 2000 may receive DCI 3_1 on a 5G NR carrier (e.g., the cell 2002 may operate in a 5G NR network), for example, even though DCI 3_1 may schedule the LTE sidelink transmission.

The wireless device 2000 may use a timing advance (e.g., an uplink timing advance) to the sidelink transmission using the downlink transmission timing as a reference, for example, before sending (e.g., transmitting) the sidelink transmission to the wireless device 2020. As described with respect to FIG. 20, the sidelink transmission timing may be advanced prior to the downlink transmission timing at wireless device 2000 (similar to the uplink transmission timing). The wireless device 2020 may be out of a coverage of the cell 2002, for example, for a partial coverage operation. The wireless device 2020 may be within the coverage of the cell 2002, for example, for in-coverage operation. For example, the wireless device 2000 may be referred to as a transmitter wireless device (transmitting wireless device, or TX wireless device). The wireless device 2020 may be referred to as a receiver wireless device (receiving wireless device, or RX wireless device).

In sidelink communications (e.g., in TDD operation), wireless devices may use uplink slots (or any other timing unit, such as frame, subframe, parts of a slot, or mini-slots) for sidelink transmissions. The base station may send (e.g., transmit) one or more configuration parameters for sidelink transmission. The one or more configuration parameters (e.g., sl-ConfigCommonNR, sl-V2X-ConfigCommon) may be received via a system information block (SIB) (e.g., SIB12, SIB 13, SIB 14). The one or more configuration parameters may comprise one or more (sidelink) resource pool pools (e.g., one or more (sidelink) resource pool configurations). The one or more sidelink resource pools may comprise of one or more subchannels in the frequency domain. The one or more subchannels may be contiguous. In the time domain, the one or more sidelink resource pools may comprise one or more sidelink slots. The one or more sidelink slots may be mapped from uplink slots based on a pattern (e.g., a bitmap, sl-TimeResource). The pattern (e.g., bitmap) may be repeatedly applied to the uplink slots to determine the sidelink slots in the one or more resource pools. The uplink slots may be determined based on a TDD pattern for uplink and downlink slots. Within an uplink slot mapped to a sidelink slot, one or more of the symbols may be used for sidelink transmissions and one or more of the symbols may not be used for sidelink transmissions (e.g., uplink transmissions or guard symbols).

Sidelink communications may take place on one or more of the following channels: physical sidelink broadcast channel (PSBCH), physical sidelink control channel (PSCCH), physical sidelink shared channel (PSSCH), and physical sidelink feedback channel (PSFCH). The PSBCH may be used to send (e.g., transmit) broadcast information, such as synchronization information (e.g., a sidelink primary synchronization signal and a sidelink secondary synchronization signal as a sidelink synchronization signal/PSBCH block (sidelink SSB)). The PSCCH may be used to send (e.g., transmit) control information (e.g., a first-stage sidelink control information (SCI)). The PSSCH may be used to send (e.g., transmit) (additional) control information (e.g., a second-stage SCI), sidelink data (e.g., the payload), and/or CSI. The PSFCH may be used for feedback information (e.g., HARQ feedback information) in, e.g., unicast and groupcast transmission modes. One or more sidelink slots may comprise, or may not comprise, the PSFCH.

A sidelink transmission may refer to a PSCCH transmission and/or a PSSCH transmission. The sidelink transmission may comprise sending (e.g., transmitting) one or more SCIs (e.g., a first-stage SCI on PSCCH and/or a second-stage SCI on the PSSCH) and/or sidelink data (on the PSSCH) (e.g., sidelink transport block). The one or more SCIs and the sidelink data may be sent (e.g., transmitted )in the same slot (or different slots). One or more symbols (e.g., OFDM symbols) of a sidelink slot may be configured for the PSCCH transmission (e.g., two or three symbols at the beginning of the sidelink slot) and one or more symbols of the sidelink slot may be configured for the PSSCH transmission (e.g., one or more of the remaining symbols). If configured, one or more of the symbols of the sidelink slot may also comprise the PSFCH.

The one or more SCIs may comprise a first-stage SCI and a second-stage SCI. The first-stage SCI may comprise sidelink scheduling information. For example, the first-stage SCI may indicate, or comprise, a priority of the sidelink data, a time-and-frequency resource assignment, a format of second-stage SCI, MCS, and/or resource reservation period (e.g., two or three additional PSSCH resources). The second-stage SCI may comprise information for receiving (e.g., decoding) the sidelink data. For example, the second-stage SCI may indicate, or comprise, a HARQ process ID, NDI, redundancy version, a source ID of the transmitter wireless device, and/or a destination ID of the receiver wireless device.

In at least some wireless communications, a cell may be typically associated with one timing advance, such as the cell being associated with a (single) timing advance group (TAG) with a (single) timing advance. A cell may be associated with more than one timing advance. For example, a cell may be associated with at least two TAGs, which each may include a timing advance for the (same) cell. Alternatively, the cell may be associated with a TAG that may have more than one timing advance for the (same) cell. Multiple timing advances may be used in different deployment scenarios, such as if different transmission and reception points (TRPs) (e.g., radio units, remote radio heads, relay nodes) may not be co-located (non-colocated).

The network may assign different timing advances to wireless devices for uplink transmissions so that the network (e.g., a base station and/or one or more TRPs of the base station) may receive the uplink transmissions of the wireless devices at the expected time (e.g., synchronized at the base station) even though the wireless devices may be located at different locations within the cell. One or more problems may arise in sidelink communications if a wireless device may use the (uplink) timing advance for performing sidelink transmissions, for example, although timing advances may be intended to ensure that uplink transmissions may be synchronized property.

The network may orchestrate (i.e., a base station may schedule) sidelink transmissions between one or more wireless devices, for example, in certain types of sidelink resource allocation modes (e.g., resource allocation mode 1 in 5G NR or sidelink resource allocation mode 3 in LTE). Wireless devices (e.g., transmitter wireless devices) may use the (uplink) timing advance to send (e.g., transmit) the sidelink transmission (e.g., to determine the start of the sidelink transmission), for example, in these types of sidelink resource allocation modes. The wireless device may use a different timing advance for a sidelink transmission than the timing advance that the network (the base station) intended to schedule, for example, in a cell with at least two timing advances. By using a different timing advance of the cell, the sidelink transmission may, for example, interfere with other transmissions (e.g., uplink and/or downlink transmissions) to, or from, the base station (i.e., on the User Equipment Universal Mobile Telecommunications System (UMTS) link (Uu link)). Interference may also occur with other sidelink transmissions that may be, for example, scheduled by the network.

One of the benefits of sidelink resource allocation schemes in which the network (base station) schedules sidelink transmissions may be that the network may coordinate the numerous transmissions and/or receptions that may occur within a cell, and coordinate between neighboring cells, in order to reduce (or prevent) interference from occurring. Another benefit of sidelink resource allocations schemes in which the network may schedule sidelink transmissions may be that (transmitter) wireless devices may be less complex and/or devote computational, or power, resources to other functions (e.g., because sidelink sensing may not be used as in other sidelink resource allocation schemes, such as sidelink resource allocation mode 2). The one or more problems associated with having at least two timing advances (e.g., at least two TAGs) in a cell may frustrate the benefits of resource allocation schemes in which the network schedules sidelink transmissions.

A wireless device may send (e.g., transmit) a sidelink transmission based on one of at least two timing advances associated with a cell (e.g., of at least two timing advances of an uplink carrier of the cell, of at least two timing advances of at least two TAGs associated with the cell, and/or of at least two timing advances of a TAG associated with the cell). By using one of the at least two timing advances of the cell (e.g., the timing advance of a TAG among at least two TAGs of the cell), herein, interference may be prevented from occurring between sidelink and/or uplink-downlink transmissions (to the base station) by aligning the understanding (i.e., operations) between the network (base station) and the wireless device if at least two timing advances may be associated with a cell and sidelink transmissions may be scheduled by the network. As described herein, frustration of the effectiveness of sidelink resource allocation schemes in which the network (base station) may schedule sidelink transmissions (e.g., sidelink resource allocation mode 1 in NR or sidelink resource allocation mode 3 in LTE) may be prevented.

As described herein, flexibility to the network may be provided so that at least two timing advances may be configured for a cell even if sidelink communications may be scheduled by the cell. As described herein, the network may be enabled to reduce latency of the sidelink transmission by taking into account which timing advance, of the timing advances of the cell, the wireless device may use for the sidelink transmission.

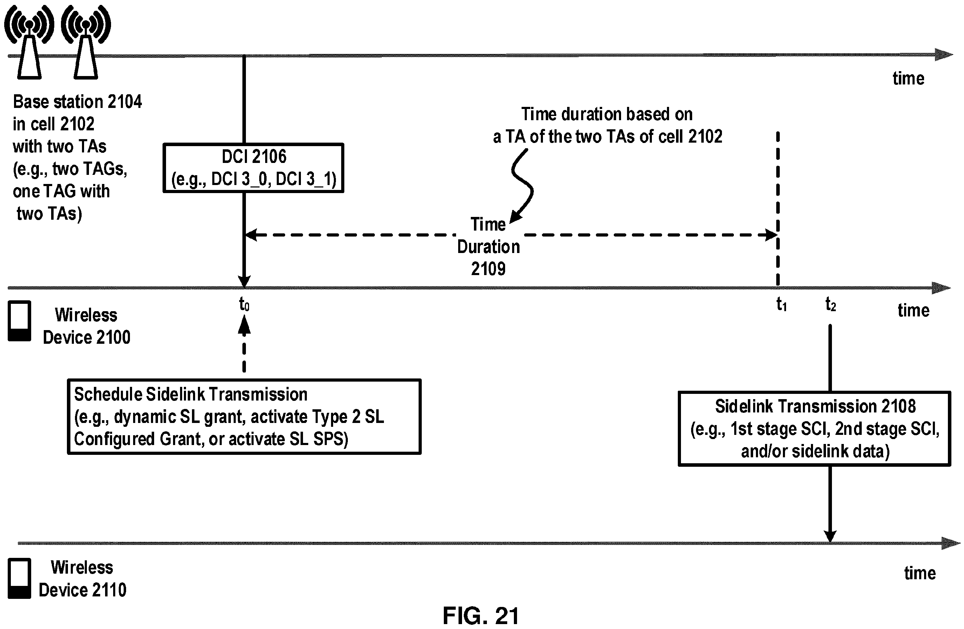

FIG. 21 shows an example for performing sidelink communications in a cell with at least two timing advances. As described with respect to FIG. 21, at t0, a wireless device 2100 may receive a DCI 2106 from a base station 2104. The DCI 2106 may schedule a sidelink transmission 2108. The DCI 2106 may schedule the sidelink transmission 2108 from the wireless device 2100 to a wireless device 2110. For examples, the DCI 2106 may include DCI 3_0, DCI 3_1, and/or any other DCI format that may schedule the sidelink transmission 2108. For example, the sidelink transmission 2108 may be a dynamic sidelink grant (e.g., single transmission) or a periodic sidelink grant (e.g., a sidelink transmission that may occur according to a pattern configured by RRC) that may be activated by the DCI 2106. The DCI 2106 may schedule a dynamic sidelink grant or schedule (activation or release of) a periodic sidelink grant, for example, by scheduling the sidelink transmission 2108. For example, a periodic sidelink grant activated by the DCI 2106 may include a Type 2 sidelink configured grant and sidelink semi-persistent scheduling (SL SPS).

The wireless device 2100 may send (e.g., transmit) the sidelink transmission 2108 to the wireless device 2110, for example, after a time duration 2109 from receiving the DCI 2106. The time duration 2109 may be between reception of the DCI 2106 (at t0) and an end of the time duration 2109 at t1. The wireless device 2100 may send (e.g., transmit) the sidelink transmission 2106 at t2 to the wireless device 2110. The sidelink transmission 2108 may start no earlier than (e.g., not earlier than, at the same time, or later than, etc.) the end of the time duration 2109. Although t1 and t2 may not be the same as described with respect to FIG. 21, t1 may be the same time as t2.

The sidelink transmission 2108 may comprise one or more SCIs (e.g., a first-stage SCI in PSCCH and/or a second-stage SCI in PSSCH) and/or sidelink data (e.g., in PSSCH). The sidelink data may be referred to PSSCH data and/or a PSSCH transmission. The PSSCH transmission may comprise the second-stage SCI. The sidelink transmission 2108 may occur in one or more sidelink slots.

The time duration 2109 may be based on a timing advance of the one or more timing advances of cell 2102. The wireless device 2100 may determine the time duration 2109 based on a timing advance of a TAG among one or more TAGs of cell 2102. Although the wireless device 2100 may determine the timing advance for the time duration 2109, the wireless device 2100 may not perform the determination and may, instead, send (e.g., transmit) sidelink transmission 2110 after the time duration from receiving DCI 2106. For example, the timing advance to use of the cell 2102 may be predetermined, preconfigured, and/or based on a rule as discussed in greater detail further below. The sidelink transmission 2108 scheduled by the DCI 2106 may be a dynamic sidelink grant or a periodic sidelink grant (e.g., a Type 2 sidelink configured grant activated by DCI 2106 or a sidelink SPS transmission activated by the DCI 2106). The DCI 2106 may be DCI 3_0, DCI 3_1, and/or any other DCI that may schedule a sidelink transmission.

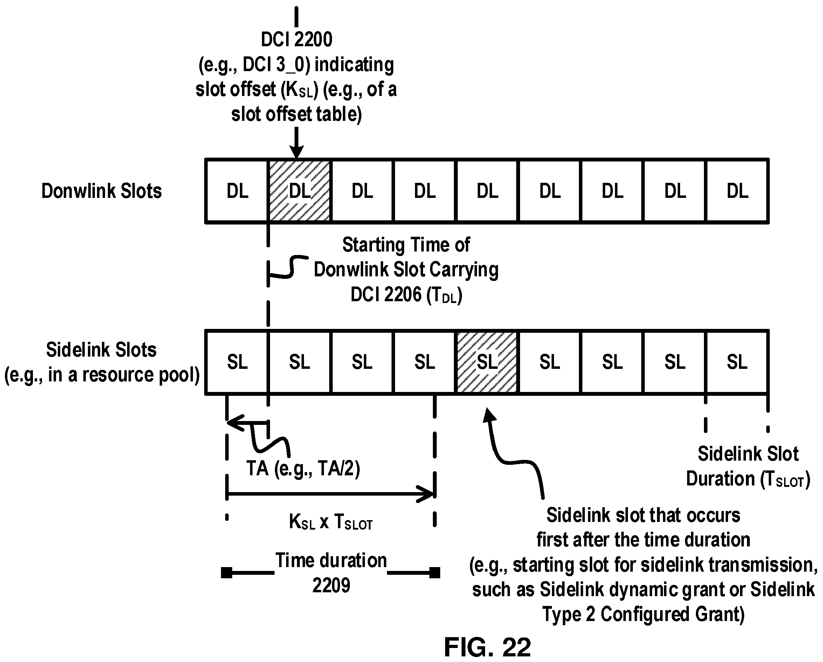

FIG. 22 shows an example timing advance configuration for a sidelink transmission scheduled by a network. For example, the timing advance configuration may be for a 5G NR sidelink transmission scheduled by a network. A time duration 2209 may be the time duration shown in FIG. 21 (e.g., the time to start transmission of sidelink transmission 2108 and/or the time offset between receiving DCI 2106 scheduling the sidelink transmission 2108 and the transmission of the sidelink transmission 2108), for example, if the DCI 2106 may be DCI 3_0 or any other DCI format that may schedule a sidelink transmission in 5G NR (e.g., a 5G NR sidelink transmission or a sidelink transmission on a 5G NR sidelink carrier). A DCI 2200 may schedule a sidelink transmission. The DCI 2200 may be, for example, DCI 3_0. The DCI 2200 may schedule a sidelink transmission in a 5G NR RAT (e.g., a 5G sidelink transmission, a 5G NR sidelink transmission, or a sidelink transmission on a 5G NR carrier). The DCI 2200 may schedule a sidelink transmission (e.g., PSCCH and/or PSSCH transmissions) in one cell. The DCI 2200 may be scrambled (e.g., the CRC of the DCI 2200 may be scrambled) by an RNTI for sidelink (e.g., SL-RNTI), an RNTI for a sidelink configured scheduling (e.g., SL-CS-RNTI), or any other RNTI for sidelink transmissions. The DCI 2200 may comprise one or more of the following fields and/or indicate one or more of the following: a resource pool index, a time gap (e.g., $m$), a HARQ process number, a new data indicator, an index (e.g., a lowest index) of the subchannel allocation (e.g., sidelink frequency resources) to the initial sidelink transmission, a frequency resource assignment (e.g., for one or more fields of an SCI, such as a first-stage SCI), a time resource assignment (e.g., for one or more fields of an SCI, such as a first-stage SCI), a physical sidelink feedback channel (PSFCH)-to-HARQ feedback indicator (PSFCH-to-HARQ feedback indicator), a PUCCH resource indicator, a configuration index (e.g., for a Type 2 sidelink configured grant configuration among one or more Type 2 sidelink configured grant configurations), a counter sidelink assignment index (counter SAI) (e.g., for a HARQ acknowledgement codebook (dynamic or semi-static)), padding bits, and/or one or more reserved bits.

The resource pool index of the DCI 2200 may indicate the index of (sidelink) resource pool (among one or more resource pools) to use for the sidelink transmission. The resource pool index may comprise log2I bits, where I is the number/quantity of (sidelink) resource pools (available) for transmission. The resource pool index may be configured by a parameter for sidelink transmission pool scheduling (e.g., sl-TxPoolScheduling), which may be received by the physical layer of the wireless device from a higher layer (e.g., MAC or RRC layer) of the wireless device. The parameter (e.g., sl-TxPoolScheduling) may be received by the wireless device in one or more configuration parameters (e.g., via one or more RRC messages) from a base station.

The time gap (e.g., time gap field) of the DCI 2200 may indicate, comprise, or be set to a value (e.g., $m$) corresponding to a slot offset table. The value of the time gap field may be, or point to, an index (which, e.g., may be incremented by one, as m+1) in the slot offset table. The table value at the index (e.g., at $m+1$) may be referred to as the slot offset $K_{SL}$. The slot offset table may be provided by one or more configuration parameters (e.g., a higher layer parameter and/or timeGapFirstSidelinkTransmission). A wireless device may receive the one or more configuration parameters from a base station (e.g., via one or more RRC messages).

The slot offset table may be configured by a parameter for sidelink transmission scheduling (e.g., sl-DCI-ToSL-Trans), which may be received by the physical layer of the wireless device from a higher layer (e.g., MAC or RRC layer) of the wireless device. The parameter (e.g., sl-DCI-ToSL-Trans) may be received by the wireless device from a base station in one or more configuration parameters (e.g., in one or more sidelink resource pool configurations and/or via one or more RRC messages).

The configuration index of the DCI 2200 may indicate an index of the periodic sidelink transmission (e.g., Type 2 sidelink configured grant). The configuration index may be referred to as, e.g., an index for Type 2 sidelink configured grant, an index for a configuration for a Type 2 configured grant, or an index for a periodic sidelink transmission configuration. The configuration index may be 0 bits based on (e.g., in response to), for example, the wireless device not being configured (e.g., by RRC messages from a base station) for a Type 2 sidelink configured grant. By not being configured, the wireless device may not be configured to monitor for, e.g., DCI format 3_0 with CRC scrambled by SL-CS-RNTI. Based on (e.g., in response to) the wireless device being configured for a Type 2 sidelink configured grant, the configuration index may be, for example, 3 bits. The configuration index field may be reserved for DCI format 3_0 with CRC scrambled by SL-RNTI, for example, if the wireless device may be configured to monitor DCI format 3_0 with CRC scrambled by SL-CS-RNTI. The new data indicator field of DCI 2200 may indicate to send (e.g., transmit) a new data transmission (e.g., by being set to 0) (as compared to indicating a retransmission (e.g., by being set to 1). The wireless device may use the new data indicator field and/or the RNTI of the DCI 2200 in the receiving of the DCI 2200 (e.g., validation, decoding, etc.).

The DCI 2200 (e.g., DCI 3_0) may schedule activation or release of a periodic sidelink transmission (e.g., Type 2 sidelink configured grant), for example, by scheduling a sidelink transmission. The DCI 2200 may use implicit signaling to indicate the activation or to indicate the release of the periodic sidelink transmission. For example, the DCI 2200 may indicate activation of the periodic sidelink transmission based on (e.g., in response to) the HARQ process number being all zeros (e.g., being set to all zeros). A wireless device may determine that DCI 2200 indicates activation (e.g., activates) the periodic sidelink transmission based on (e.g., in response to) the HARQ process number being all zeros (e.g., being set to all zeros). The DCI 2200 may indicate release of the periodic sidelink transmission based on (e.g., in response to) the HARQ process number being all ones (e.g., being set to all ones). A wireless device may determine that the DCI 2200 may indicate release (e.g., releases) the periodic sidelink transmission based on (e.g., in response to) the HARQ process number being all ones (e.g., being set to all ones).

For example, for scheduling (activation or release) of a periodic sidelink transmission, the DCI 2200 may further comprise a frequency resource assignment field, which may not be present in all DCI formats (e.g., the DCI 2200 may not comprise the frequency resource assignment field). For example, if the frequency resource assignment field may be present in the DCI 2200, the DCI 2200 may indicate release of the periodic sidelink transmission in response to the HARQ process number being all ones (e.g., being set to all ones) and/or the frequency resource assignment being all ones (e.g., being set to all ones). A wireless device may determine that DCI 2200 may indicate release of the periodic sidelink transmission based on (e.g., in response to) the HARQ process number being all ones (e.g., being set to all ones) and/or the frequency resource assignment being all ones (e.g., being set to all ones).

The DCI 2200 may schedule a sidelink transmission for a wireless device, for example, in sidelink resource allocation mode 1. The DCI 2200 may comprise a sidelink dynamic grant or activate a periodic sidelink transmission, such as a Type 2 sidelink configured grant. The sidelink transmission may comprise one or more SCIs (e.g., a first-stage SCI and/or a second-stage SCI) and/or a PSSCH transmission. For the sidelink dynamic grant, the PSSCH transmission may be scheduled by DCI 3_0. For a Type 2 sidelink configured grant, the PSSCH transmission may be scheduled by DCI 3_0.

For sidelink dynamic grant and the periodic sidelink grant (e.g., Type 2 sidelink configured grant), the following discussion may apply for the time duration. As described with respect to FIG. 22, the DCI 2200 may indicate a slot offset $K_{SL}$. As discussed above, to indicate the slot offset $K_{SL}$, DCI 2200 may comprise, or indicate, a value (e.g., $m$) for a slot offset table. For the value (e.g., $m$), the DCI 2200 may comprise a field (e.g., the time gap field) set to a value (e.g., $m$) that may point to an index (e.g., $m + 1$) of (or into) the slot offset table. The table value at the index (e.g., at $m + 1$) may be referred to as the slot offset $K_{SL}$.

The slot (e.g., starting slot) of the sidelink transmission scheduled by the DCI 2200 (e.g., the slot of the start of the sidelink transmission or the first sidelink transmission of a periodic sidelink transmission if the DCI 2200 may activate a periodic sidelink transmission) may be the first sidelink slot (e.g., the sidelink slot that may occur first) of a corresponding resource pool that starts not earlier than $T_{\text{DL}} - \dfrac{T_{\text{TA}}}{2} + K_{SL} \times T_{\text{slot}}$, where $T_{\text{DL}}$ is starting time of the downlink slot carrying DCI 2200, $T_{\text{TA}}$ is the (uplink) timing advance, and $K_{SL}$ is the slot offset, and $T_{\text{slot}}$ is the duration of a sidelink transmission time interval (e.g., the duration of a sidelink slot).

The timing advance in $T_A$ (in $T_{\text{TA}}/2$) may correspond to the timing advance (e.g., the TAG) of the cell (e.g., the serving cell) on which the DCI 2200 may be received, for example, based on (e.g., in response to) determining that if (or when) the wireless device being in a cell with one timing advance (e.g., associated with one TAG). Additionally or alternatively, based on (e.g., in response to) determining that if (or when) the wireless device being in a cell with at least two timing advances (e.g., timing advances, multiple timing advances, a plurality of timing advances, associated with at least two TAGs, and/or associated with a TAG with at least two timing advances), the timing advance used to for (determining) the time duration (e.g., transmission timing of the sidelink transmission) may be a timing advance among one of the at least two timing advances (or of the at least two TAGs) of the cell.

The first sidelink slot may be referred to as a starting slot (e.g., a sidelink slot in which the sidelink transmission starts). The sidelink transmission may occur within one sidelink slot or extend for multiple sidelink slots. For example, a dynamic sidelink grant may be sent (e.g., transmitted) in one sidelink slot and a periodic sidelink transmission may be sent (e.g., transmitted) in multiple slots.

For example, a wireless device may receive the DCI 2200 scheduling a sidelink transmission, for example, to determine the time duration for transmitting the sidelink transmission as described with respect to FIG. 22. The DCI 2200 may indicate a slot offset ($K_{SL}$) for the time duration. The DCI 2200 may comprise a field (e.g., a time gap field (m)) indicating a slot offset table, for example, to indicate the slot offset. The wireless device may use the corresponding value in the slot offset table (e.g., at $m+1$ in slot offset table) for the slot offset $K_{SL}$.

The DCI 2200 may be received in a downlink slot as described with respect to FIG. 22. The starting time of the downlink slot carrying the DCI 2200 may be used to determine a sidelink slot (e.g., in a resource pool, which may be indicated by the DCI 2200, such as by a resource pool index of DCI 2200). Based on (e.g., in response to) determining if (or when) the DCI 2200 being received in a cell with at least two timing advances, the wireless device may use a timing advance among the at least two timing advances of the cell for (determining) the time duration (e.g., for transmission of the sidelink transmission, or to advance the transmission timing of the sidelink transmission). Additionally or alternatively, based on (e.g., in response to) determining that if the DCI 2200 being received in a cell with one timing advance, the wireless device may use the timing advance of the cell for (determining) the time duration (e.g., for transmission of the sidelink transmission, or to advance the transmission timing of the sidelink transmission). As described with respect to FIG. 22, one half of the timing advance may be used (e.g., by TA/2).

The wireless device may determine a sidelink slot that may occur after the slot offset, for example, after using the timing advance. The wireless device may determine a time interval of the slot offset (e.g., in units of time, such as ms) by multiplying the slot offset by the duration of a sidelink transmission time interval (e.g., a sidelink slot) as $K_{SL}$ x $T_{SLOT}$ shown in FIG. 22. The sidelink slot (e.g., the starting slot) for the sidelink transmission may start no earlier than the sidelink slot that may occur after the time duration. The ending time of the sidelink transmission may be the same slot or a different slot than the starting slot (e.g., based on the duration of the sidelink transmission).

The end of the time duration may be depicted as being before the sidelink slot that may occur after the time duration. The sidelink slot (starting slot) may start no earlier than the time duration. As described with respect to FIG. 22, the time duration may end in a part of a sidelink slot. This may be an example based on t1 shown in FIG. 21, as being different from t2 shown in FIG. 21. As discussed above, t1 may be the same, or different, from t2 in FIG. 21. For example, in FIG. 22, the sidelink slot that may occur first after the time duration may align with the time duration.

Although the description of FIG. 22 may refer to, or appear as, a sequence of (ordered) events for determining the time duration, the present disclosure may not be particularly limited to this example or any order. For example, the timing advance may be used after, during, or while the time interval for the slot offset may be determined. For example, the time interval for the slot offset may be used to the downlink slots. Any references that may imply a sequence of events may be merely provided for illustrative purposes, as may be understood by one skilled in the art.

The sidelink transmission 2108 scheduled by the DCI 2106 shown in FIG. 21 may be a dynamic sidelink grant or a periodic sidelink grant (e.g.,, a Type 2 sidelink configured grant activated by the DCI 2106 or a sidelink SPS transmission activated by the DCI 2106). The DCI 2106 may be DCI 3_0 or DCI 3_1 and/or any other DCI that may schedule a sidelink transmission.

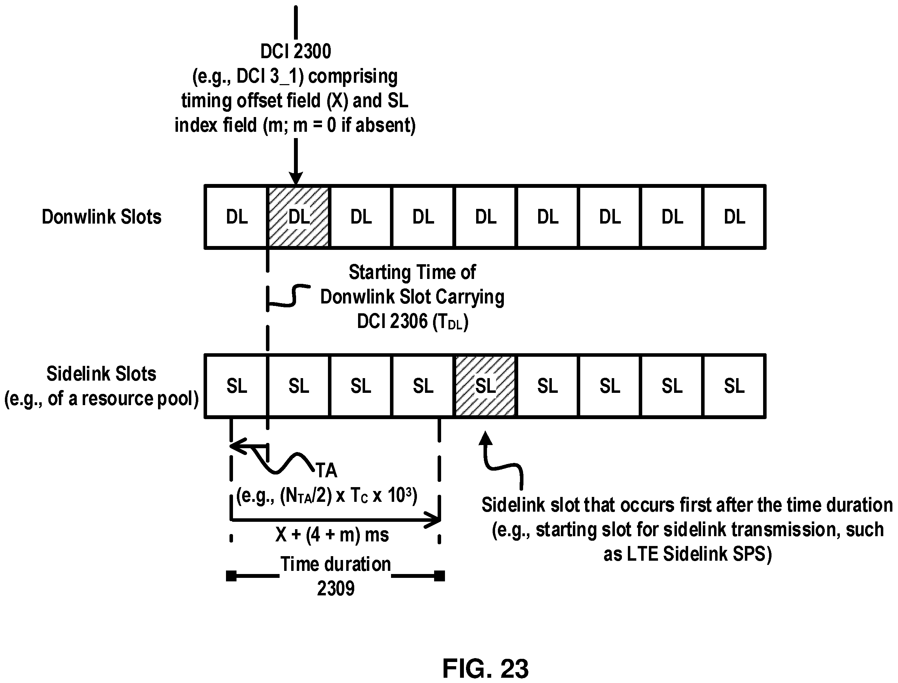

FIG. 23 shows an example transmission timing for a sidelink transmission scheduled by a network. For example, the transmission timing may be for an LTE sidelink transmission scheduled by a network. A DCI 2300 may schedule a sidelink transmission. The DCI 2300 may be , for example, DCI 3_1. The DCI 2300 (e.g., DCI 3_1) may schedule a sidelink transmission in an LTE RAT (e.g., an LTE sidelink transmission or a sidelink transmission on an LTE carrier). The DCI 2300 may schedule a sidelink transmission (e.g., PSCCH and/or PSSCH transmission) in one cell. The DCI 2300 may be scrambled (e.g., the CRC of DCI 2300 may be scrambled) by an RNTI value for semi-persistent scheduling (e.g., SL Semi-Persistent Scheduling V-RNT).

The DCI 2300 may comprise one or more of the following fields and/or indicate one or more of the following: a timing offset (e.g., X), a carrier indicator, an index (e.g., a lowest index) of the subchannel allocation to the initial sidelink transmission, a frequency resource location of the initial transmission and/or retransmission, a retransmission time gap between the initial transmission and retransmission, a sidelink index (e.g., m), a sidelink SPS configuration index, an activation/release indication (e.g., activation-or-release indication), padding bits, and/or one or more reserved bits.

The timing offset of the DCI 2300 may comprise, or indicate, a timing offset field with a value (e.g., X) for (determining) the time duration. The sidelink index (e.g., *m*) of DCI 2300 may be present or absent. If absent, a wireless device may use a value (e.g., *m*) of zero for the sidelink index for the sidelink transmission (e.g., *m* = 0). The sidelink index may indicate, or be, a value (e.g., *m*) for determining the transmission timing of the sidelink transmission (e.g., *m* = *m*) as described with respect to FIG. 23.

The sidelink SPS configuration index of the DCI 2300 may indicate, or correspond to, a sidelink SPS configuration (e.g., an LTE sidelink SPS configuration) of the wireless device. The wireless device may receive, e.g., one or more configuration parameters comprising the sidelink SPS configuration (e.g., via one or more RRC messages) from a base station. The one or more configuration parameters may comprise an index for the sidelink SPS configuration that corresponds to the sidelink SPS configuration index of the DCI 2300. A wireless device may use the sidelink SPS configuration index to determine which sidelink SPS configuration to activate or release (based on the activation/release indication in the DCI 2300). The activation/release indication (e.g., activation-or-release indication) of the DCI 2300 may indicate to activate the sidelink SPS configuration (corresponding to the SPS configuration index). Alternatively, the activation/release indication (e.g., activation-or-release indication) of the DCI 2300 may indicate to release the sidelink SPS configuration (corresponding to the SPS configuration index).

Based on (e.g., in response to) determining the DCI 2300 indicating activation of an (LTE) sidelink SPS configuration, the sidelink transmission (e.g., a PSCCH and/or a PSSCH transmission) may start no earlier than

$$T_{\text{DCI}} - \frac{N_{TA}}{2} \times T_C \times 10^3 + X + (4 + m)$$ in time (e.g., in ms), where $T_{\text{DCI}}$ is a start time of the slot carrying the DCI 2300 (i.e., the slot in which DCI 2300 was received), $N_{TA}$ is the timing advance between downlink and uplink (discussed above), $T_C$ is a basic time unit for NR (e.g., $T_c = \frac{1}{\Delta f_{max}} \times N_f$ , where $\Delta f_{max} = 480 \cdot 10^3$ Hz and $N_f = 4096$), X is a value indicated by the timing offset field of DCI 2300, and m is the sidelink index field of the DCI 2300. The sidelink index field (e.g., *m*) may be present or absent in the DCI 2300. The wireless device may use a value of zero for the sidelink index (e.g., *m* = 0), for example, if absent (e.g., the DCI 2300 does not comprise the sidelink index field). The wireless device may use the value of the sidelink index field to determine the time duration (e.g., *m* = *m*), for example, if present.

A wireless device may receive the DCI 2300 scheduling a sidelink transmission. The DCI 2300 may schedule an LTE sidelink transmission, for example, to determine the time duration for sending (e.g., transmitting) the sidelink transmission. The LTE sidelink transmission may be, for example, a sidelink SPS transmission. The DCI 2300 may indicate a timing offset (X). For example, the DCI 2300 may comprise a field indicating (or comprising a value for) the timing offset (X). The DCI 2300 may indicate a sidelink index (m). The sidelink index may be present or absent. A wireless device may use zero for the sidelink index (e.g., *m* = 0), for example, if absent. The wireless device may use the value of the sidelink index (e.g., *m* = *m*), for example, if present.

As described with respect to FIG. 23, the DCI 2300 may be received in a downlink slot. The wireless device may use the starting time of the downlink slot carrying the DCI 2300 ($T_{DL}$) to determine a sidelink slot (a corresponding sidelink slot). The wireless device may use the (uplink) timing advance of the cell. For example, as described with respect to FIG. 23, the timing advance may be ($N_{TA}$/2) x $T_c$ x $10^3$.

Based on (e.g., in response to) determining that, based on, the DCI 2300 being received in a cell with one timing advance, the wireless device may use the timing advance of the cell for (determining) the time duration (e.g., for transmission of the sidelink transmission, or to advance the transmission timing of the sidelink transmission). Additionally or alternatively, based on (e.g., in response to) determining that, based on, if (or when) the DCI 2300 being received in a cell with at least two timing advances, the wireless device may use a timing advance among the at least two timing advances of the cell for (determining) the time duration (e.g., for transmission of the sidelink transmission, or to advance the transmission timing of the sidelink transmission).

The wireless device may determine a sidelink slot that may occur after a slot offset (e.g., the timing offset (X) of the DCI 2300), for example, after using the timing advance. As described with respect to FIG. 23, the wireless device may determine a time interval of the timing offset (e.g., in ms) and the sidelink index field (if present, *m* = *m*) (e.g., based on X + (4 + *m*) as shown in FIG. 23). Alternatively, the wireless device may determine the time interval of the timing offset (e.g., in ms) without the sidelink index field (if the sidelink index field is not present; *m* = 0), for example, based on X + (4 + 0). The sidelink slot (e.g., the starting slot) for the sidelink transmission may start no earlier than the sidelink slot that may occur after the time duration as described with respect to FIG. 23. The ending time of the sidelink transmission may be the same slot or a different slot than the starting slot (e.g., based on the duration of the sidelink transmission).

As described with respect to FIG. 23, the end of the time duration may be described as being before the sidelink slot that may occur after the time duration. The sidelink slot (starting slot) may start no earlier than the time duration. The time duration may end in a part of a sidelink slot. This may be an example based on t1 shown in FIG. 21, as being different from t2 shown in FIG. 21. As discussed above, t1 may be the same, or different, from t2 shown in FIG. 21. As described with respect to FIG. 23, the sidelink slot that may occur first after the time duration may align with the time duration.

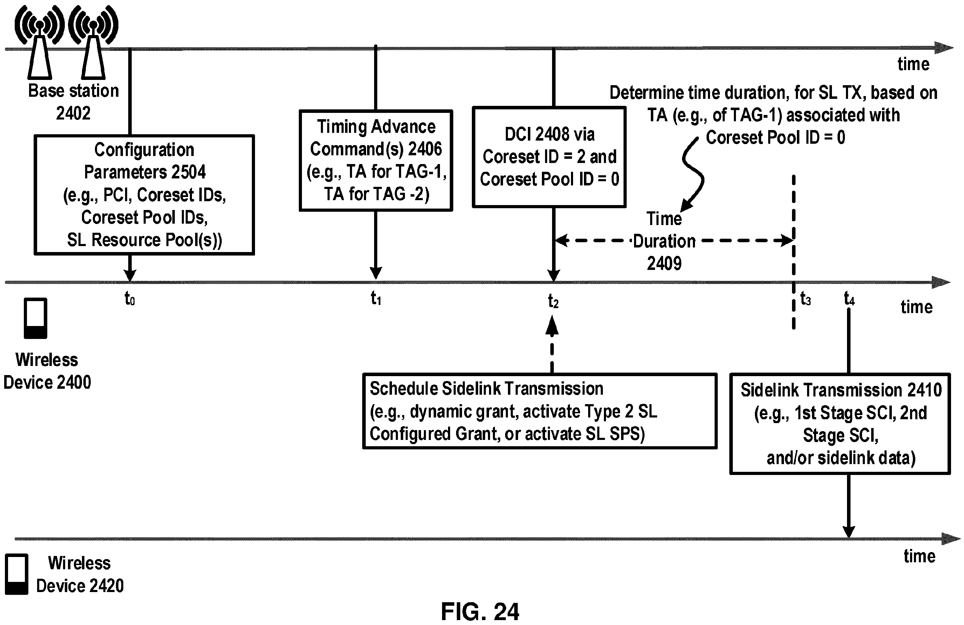

Although the description of FIG. 23 may refer to, or appear as, a sequence of (ordered) events for determining the time duration, the present disclosure may not be particularly limited to this example or any order. For example, the timing advance may be applied after, during, or while the time interval for the slot offset (e.g., timing offset) may be determined. The time interval for the slot offset (e.g., the timing offset) may be applied to the downlink slots. Any references that may imply a sequence of events may be merely provided for examples, as may be understood by one skilled in the art. As described above with reference to FIG. 20, FIG. 21, FIG. 22, and FIG. 23, the wireless device may use a timing advance of the at least two timing advances, of a cell with at least two timing advances, for transmission of a sidelink transmission scheduled by a base station. Detailed examples of FIG. 21 and which timing advance to use may be provided below with reference to FIG. 24, FIG. 25, and FIG. 26.

The timing advance may be the timing advance with the lowest (or highest) value of at least two timing advances of the cell. The timing advance may be the timing advance with the lowest (or highest) index associated with the at least two timing advances. The timing advance may be the timing advance associated with a coreset pool ID of a coreset via which the DCI scheduling the sidelink transmission was received. The timing advance may be the timing advance associated with a physical cell ID.

Based on (e.g., in response to) determining that, based on, if (or when) the cell with at least two timing advances being associated with at least two TAGs (e.g., one timing advance per TAG and/or at least two TAGs associated with the cell), the timing advance may be the timing advance of the TAG with the lowest (or highest) TAG ID of the TAGs. The timing advance may be the timing advance of the TAG with the lowest (or highest) timing advances of the at least two TAGs. The timing advance may be the timing advance of the TAG associated with a coreset pool ID of a coreset via which the DCI scheduling the sidelink transmission was received. The timing advance may be the timing advance of a TAG associated with a physical cell ID.

Based on (e.g., in response to) determining that, based on, or if (or when) the cell with at least two timing advances may be associated with at least a (single) TAG with at least two timing advances, the timing advance may be the timing advance with the lowest (or highest) timing advance of the timing advances of the TAG. The timing advance may be the timing advance with the lowest (or highest) index of the timing advances of the TAG. The timing advance may be the timing advance associated with a coreset pool ID of a coreset via which the DCI scheduling the sidelink transmission was received. The timing advance may be the timing advance associated with a physical cell ID. Examples of (determining or selecting) the timing advance among the timing advances of the cell may be provided in FIG. 24, FIG. 25, FIG. 26, and FIG. 27. The above description (e.g., with respect to the DCI scheduling the sidelink transmission, for (determining) the time duration, and FIG. 20, FIG. 21, FIG. 22, and FIG. 23) may also be used to the detailed examples provided below.

In at least some wireless communications, a cell may be associated with one timing advance, such as being associated with a (single) TAG with a (single) timing advance. If a cell may be associated with at least two timing advances (e.g., at least two TAGs or a TAG with at least two timing advances), problems may arise in sidelink communications scheduled by a base station (e.g., resource allocation mode 1), for example, because the (uplink) timing advance of the cell may be used for sending (e.g., transmitting) the sidelink transmission.

A wireless device may send (e.g., transmit) a sidelink transmission based on at least one of the at least two timing advances associated with a cell (e.g., an uplink carrier of the cell and/or a TAG associated with the cell). The timing advance may be the timing advance associated with a coreset pool ID. The coreset pool ID may be of the coreset via which the wireless device received the DCI scheduling the sidelink transmission.

By using the coreset pool ID for (e.g., to determine) the timing advance, herein, the network may have flexibility of enabling at least two timing advances of a cell where sidelink communications may be scheduled by a base station. As described herein, the network may be enabled to reduce latency of the sidelink transmission by determining to use a coreset pool ID based on its associated timing advance.

FIG. 24 shows an example signal flow diagram for performing sidelink communications in a cell with at least two timing advances based on coreset pool IDs. The coreset pool IDs may be used to determine a timing advance to use for a sidelink transmission. As described with respect to FIG. 24, at t0, a wireless device 2400 may receive configuration parameters 2404 from a base station 2402. The configuration parameters 2404 may be received via one or more RRC messages. The configuration parameters 2404 may indicate (and/or comprise) a physical cell ID of a cell, one or more coreset IDs, one or more coreset pool IDs, and/or one or more (sidelink) resource pool configuration. At t1 shown in FIG. 24, the wireless device 2400 may receive timing advance command(s) 2406. The timing advance command(s) 2406 may indicate (and/or comprise) one or more timing advances (e.g., one or more timing advance values) of the cell. The timing advance command(s) 2406 may be received via one or more RARs (from one or more random access procedures) and/or one or more MAC CEs (e.g., one or more timing advance command MAC CEs, one or more absolute timing advance command MAC CEs). Each timing advance may be associated with a TAG of the at least two TAGs of the cell. For example, formats for the timing advance command 2406 may be described with respect to FIG. 19.

The wireless device 2400 may receive a DCI 2408 at t2 from the base station 2402. The DCI 2408 may schedule a sidelink transmission. The DCI 2408 may be DCI 3_0, DCI 3_1, or any other DCI format that may schedule a sidelink transmission. The DCI 2408 may schedule a sidelink transmission in 5G NR (e.g., a 5G sidelink transmission) or LTE (e.g., an LTE sidelink transmission). The DCI 2408 may comprise a dynamic sidelink grant or a periodic sidelink grant (e.g., activate (or release) a Type 2 sidelink configured grant or activate (or release) a sidelink SPS configuration).

The wireless device 2400 may send (e.g., transmit) a sidelink transmission 2410 at t4, for example, after a time duration 2409 (e.g., between the wireless device 2400 receiving the DCI 2408 at t2 and t3). The time duration 2409 may be based on (e.g., determined based on) a timing advance of the at least two timing advances of the cell. The time duration 2409 may be (further) based on scheduling parameters of the DCI 2408. The wireless device 2400 may determine the time duration 2409. Alternatively, the wireless device 2400 may send (e.g., transmit) the time duration 2409 at t4 without performing a determination. For example, the time duration may be described with respect to FIG. 22 and FIG. 23.

For example, the wireless device 2400, for the time duration 2409 (between t2 and t3), may use (e.g., select, determine) the timing advance of the at least two timing advances of the cell, associated with the coreset pool ID of the coreset via which the wireless device may have received the DCI 2408. For example, the wireless device 2400 may receive the DCI 2408 at t2, via a coreset (e.g., a search space of the coreset, a PDCCH occasion of the coreset, a PDCCH occasion of a search space of the coreset) with coreset ID = 2 and/or coreset pool ID = 0.

One or more of the coreset pool IDs in the configuration parameters 2404 may be associated with (e.g., mapped to, correspond to) the at least two timing advances of the cell. For example, each coreset pool ID may be mapped to a timing advance (or a TAG) of the cell. The coreset pool IDs may be associated with one or more TRPs that may be non-collocated. As described with respect to FIG. 24, the wireless device 2400 may use the timing advance associated with coreset pool ID = 0 for the timing advance, among the at least two timing advances of the cell, for the time duration 2409.

Each coreset pool ID may be mapped to a TAG of the cell, for example, based on (e.g., in response to) the cell (with the base station 2402) being associated with at least two TAGs (e.g., one timing advance per TAG and/or at least two TAGs of the cell). The coreset pool IDs may be associated with one or more TRPs that may be non-colocated. Each TRP may be associated with a TAG of the cell.

For example, the wireless device 2400 may send (e.g., transmit or start transmitting) a sidelink transmission 2410 to the wireless device 2420 at t4. The sidelink transmission 2410 may be, or comprise, a first-stage SCI, a second-stage SCI, and/or sidelink data (e.g., a PSSCH transmission). The sidelink transmission 2410 may be referred to as a PSCCH transmission and/or a PSSCH transmission. For example, t4 may occur after t3 as described with respect to FIG. 24. For example, t3 and t4 may occur at the same time (i.e., t3 = t4).

In at least some wireless communications, a cell may be associated with one timing advance, such as being associated with a (single) TAG with a (single) timing advance. If a cell may be associated with at least two timing advances (e.g., at least two TAGs or a TAG with at least two timing advances), problems may arise in sidelink communications scheduled by a base station (e.g., resource allocation mode 1) because the (uplink) timing advance of the cell may be used for sending (e.g., transmitting) the sidelink transmission.

A wireless device may send (e.g., transmit) a sidelink transmission based on at least one of the at least two timing advances associated with a cell (e.g., an uplink carrier of the cell and/or a TAG associated with the cell). The timing advance may be (determined) based on the TCI state (via which the DCI was received) being associated with the physical cell ID of the cell. The network may have flexibility of enabling at least two timing advances of a cell where sidelink communications may be scheduled by a base station, for example, by using the TCI state and/or physical cell ID for (determining) the timing advance. The network may be able to reduce latency of the sidelink transmission, for example, by determining to use a TCI state and/or physical cell ID based on its associated timing advance.

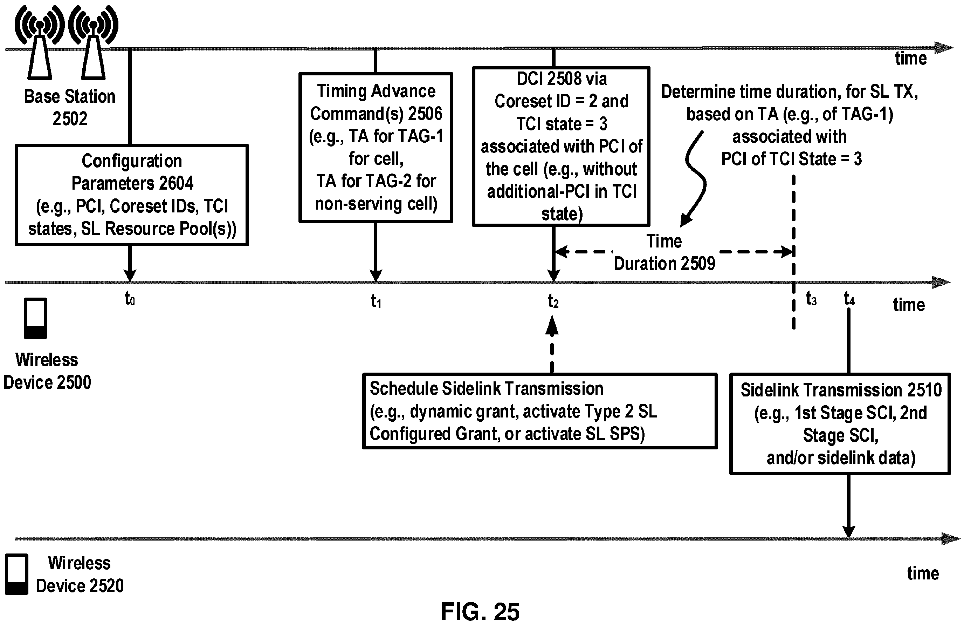

FIG. 25 shows an example signal flow diagram for performing sidelink communications in a cell with at least two timing advances based on physical cell IDs. A wireless device 2500 in a cell with at least two timing advances performing sidelink communications scheduled by a base station 2502. The TCI state and physical cell ID may be used to determine the timing advance to use for the sidelink transmission. The wireless device 2500 may receive configuration parameters 2504 at t0 from the base station 2502. The configuration parameters 2404 may be received via one or more RRC messages. The configuration parameters 2504 may indicate (and/or comprise) one or more physical cell IDs, one or more coreset IDs, one or more TCI states, and/or one or more (sidelink) resource pool configurations.

The configuration parameters 2504 may configure the wireless device 2500 with up to M TCI states (e.g., TCI-State, TCI state configurations) to decode PDSCH transmissions according to detected PDCCH transmissions (e.g., DCIs). The quantity/number of TCI states (e.g., the M TCI states) configurable for wireless devices may depend on a wireless device capability (e.g., maxNumberConfiguredTCIstatesPerCC). Each TCI state in configuration parameters 2504 may contain parameters for configuring a quasi co-location (QCL) relationship (e.g., QCL information) between one or more reference signals (e.g., downlink reference signals) and one or more antenna ports (e.g., the DM-RS ports of the PDSCH, the DM-RS port of PDCCH, or the CSI-RS port(s) of a CSI-RS resource).

For the one or more TCI states, the configuration parameters 2504 may associate one or more reference signals (e.g., downlink reference signals) with a corresponding QCL type (e.g., Type A for doppler shift, doppler spread, average delay, and/or delay spread; Type B for doppler shift and/or doppler spread; Type C for doppler shift and/or average delay; and Type D for spatial (e.g., reception) parameter).

The configuration parameters 2504 may comprise one or more TCI state configurations (e.g., information elements (IEs)) for (e.g., configuring) one or more TCI states (e.g., TCI-State). The configuration parameters 2504 may indicate (or comprise), for example, in the IE or TCI state configurations, a TCI state ID (e.g., tci-StateId) and QCL information. The QCL information may comprise a cell ID (e.g., a (serving) cell index), a BWP ID (e.g., a downlink BWP ID) for which the reference signal may be located in (e.g., configured), a reference signal (e.g., referenceSignal) with which the QCL information is provided (e.g., CSI-RS, SSB, etc), and one or more QCL type (e.g., qcl-Type, qcl-Type1 for a first reference signal, qcl-Type2 for a second reference signal). The configuration parameters 2504 may further indicate whether a TCI state may be a downlink TCI state or a joint (e.g., unified) TCI state (e.g., DLorJoint-TCIState). The configuration parameters 2504 may indicate whether a TCI may be an uplink TCI state (e.g., UL-TCIState). The configuration parameters 2504 may indicate (or comprise) a parameter, an additional physical cell ID (PCI) for a TCI state (e.g., additionalPCI). The configuration parameters 2504 may configure the same value for the additional PCI for one or more reference signals (e.g., downlink reference signals) of the TCI state, for example, if the additional PCI may be present in the configuration parameters 2504. The configuration parameters 2504 may configure one or more of the one or more TCI states for a coreset as activated or deactivated. The one or more TCI states may be activated or deactivated by one more activation commands (e.g., MAC CE or DCI).

The wireless device 2500 may receive a timing advance command 2506 at t1 from the base station 2502. The timing advance command 2506 may indicate (or comprise) one or more timing advances of the cell. The timing advance command 2506 may be received via one or more RARs (from one or more random access procedures) and/or one or more MAC CEs (e.g., one or more timing advance command MAC CEs, one or more absolute timing advance MAC CEs). Each timing advance may be associated with a TAG of the at least two TAGs of the cell. Each timing advance may be associated with a physical cell ID. FIG. 19 shows example formats for the timing advance command 2506.

The wireless device 2500 may receive a DCI 2508 at t2 from the base station 2502. The wireless device 2500 may receive the DCI 2508 via a coreset (e.g., with coreset ID = 2 shown in FIG. 25) and/or a TCI state (e.g., with TCI state = 3 shown in FIG. 25) that may be activated (or indicated) for the coreset (e.g., activated by the configuration parameters 2504 or an activation command (e.g., MAC CE). The DCI 2508 may schedule a sidelink transmission 2510 in 5G NR (e.g., a 5G sidelink transmission) or LTE (e.g., an LTE sidelink transmission). The DCI 2508 may comprise a dynamic sidelink grant or a periodic sidelink grant (e.g., activate (or release) a Type 2 sidelink configured grant or activate (or release) a sidelink SPS configuration).

As described with respect to FIG. 25, the TCI state via which the wireless device 2500 received the DCI 2508 may be associated with the physical cell ID of the cell. For example, the wireless device 2500 may determine that the TCI state may be associated with the physical cell ID of the cell based on the TCI state not comprising a parameter indicating the physical cell ID of another cell (e.g., additional-PCI not being present in TCI state). Additionally or alternatively, the TCI state in the configuration parameters 2504 may indicate (or comprise) a physical cell ID that may be the same as the physical cell ID of the cell.

The wireless device 2500 may send (e.g., transmit) the sidelink transmission 2510 at t4, for example, after a time duration 2509 between the wireless device receiving DCI 2508 at t2 and t3. The time duration 2509 may be based on (e.g., determined based on) a timing advance of the at least two timing advances of the cell. The time duration 2509 may be (further) based on scheduling parameters of the DCI 2508. The wireless device 2500 may determine the time duration 2509. Alternatively, the wireless device 2500 may send (e.g., transmit) at t4 without performing a determination. For example, the time duration 2500 may be described with respect to FIG. 22 and FIG. 23.

The wireless device 2500 may use the timing advance, of the at least two timing advances of the cell, associated with the physical cell ID of the TCI state used to receive the DCI 2508, for example, for the time duration 2509 (e.g., between t2 and t3) as described with respect to FIG. 25. For example, the wireless device 2500 may receive the DCI 2508 based on TCI state = 3 and/or coreset ID = 2. The timing advance may be the timing advance associated the physical cell ID of the cell in response to TCI state = 3 being associated with the physical cell ID of the cell. The wireless device 2500 may determine that TCI state = 3 may be associated with the cell based on, for example, the TCI state not comprising a physical cell ID (e.g., additional-PCI) different than the physical cell ID of the cell.

The wireless device 2500 may send (e.g., transmit or start transmitting) the sidelink transmission 2510 to a wireless device 2520 at t4. The sidelink transmission 2510 may be (or comprise) a first-stage SCI, a second-stage SCI, and/or sidelink data (e.g., PSSCH transmission). The sidelink transmission 2510 may be referred to as a PSCCH transmission and/or a PSSCH transmission. For example, t4 may occur after t3 as described with respect to FIG. 25. For example, t3 and t4 may occur at the same time (i.e., t3 = t4).

In at least some wireless communications, a cell may be associated with one timing advance, such as being associated with a (single) TAG with a (single) timing advance. If a cell may be associated with at least two timing advances (e.g., at least two TAGs or a TAG with at least two timing advances), problems may arise in sidelink communications scheduled by a base station (e.g., resource allocation mode 1) because the (uplink) timing advance of the cell may be used for sending (e.g., transmitting) the sidelink transmission.

A wireless device may send (e.g., transmit) a sidelink transmission based on at least one of the at least two timing advances associated with a cell (e.g., an uplink carrier of the cell and/or a TAG associated with the cell). The timing advance may be (determined) based on the TCI state (via which the DCI was received) being associated with another physical cell ID than the physical cell ID of the cell (e.g., a different physical cell ID than the physical cell ID of the cell).

By using the TCI state and/or physical cell ID for the timing advance, the network may have flexibility of enabling at least two timing advance of a cell where sidelink communications may be scheduled by a base station. The network may be able to reduce latency of the sidelink transmission by determining to use the TCI state and/or physical cell ID based on its associated timing advance.

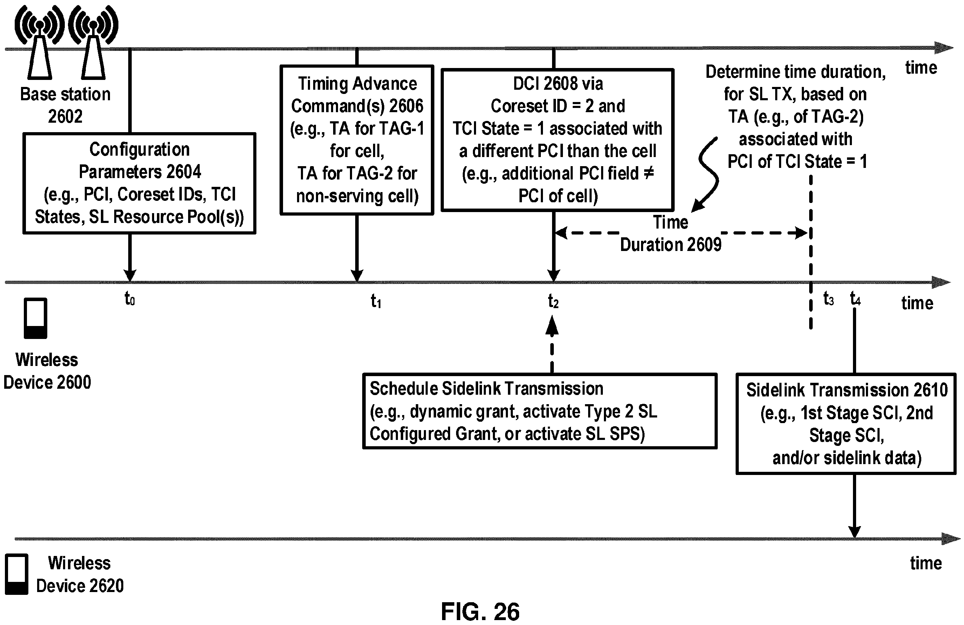

FIG. 26 shows an example signal flow diagram for performing sidelink communications in a cell with at least two timing advances based on physical cell IDs. A wireless device 2600 in a cell with at least two timing advances may perform sidelink communications scheduled by a base station 2602. The TCI state and physical cell ID may be used to determine the timing advance to use for the sidelink transmission. As described with respect to FIG. 26, at t0, the wireless device 2600 may receive configuration parameters 2604 from the base station 2602. The configuration parameters 2404 may be received via one or more RRC messages. The configuration parameters 2604 may comprise one or more physical cell IDs, one or more coreset pool IDs, one or more TCI states, and/or one or more (sidelink) resource pools.

The configuration parameters 2604 may configure the wireless device 2600 with up to M TCI states (e.g., TCI-State, TCI state configurations) to decode PDSCH transmissions according to detected PDCCH transmissions (e.g., DCIs). The number/quantity of TCI states (e.g., the M TCI states) configurable for wireless devices may depend on a wireless device capability (e.g., maxNumberConfiguredTCIstatesPerCC). Each TCI state in configuration parameters 2604 may contain parameters for configuring a quasi co-location (QCL) relationship (e.g., QCL information) between one or more reference signals (e.g., downlink reference signals) and one or more antenna ports (e.g., the DM-RS ports of the PDSCH, the DM-RS port of PDCCH, or the CSI-RS port(s) of a CSI-RS resource). For the one or more TCI states, the configuration parameters 2604 may associate one or more reference signals (e.g., downlink reference signals) with a corresponding QCL type (e.g., Type A for doppler shift, doppler spread, average delay, and/or delay spread; Type B for doppler shift and/or doppler spread; Type C for doppler shift and/or average delay; and Type D for spatial (e.g., reception) parameter).

The configuration parameters 2604 may comprise one or more TCI state configurations (e.g., information elements (IEs)) for (e.g., configuring) one or more TCI states (e.g., TCI-State). The configuration parameters 2604 may indicate, or comprise (e.g., in the IE and/or TCI state configurations), a TCI state ID (e.g., tci-StateId) and/or QCL information. The QCL information may comprise a cell ID (e.g., a (serving) cell index), a BWP ID (e.g., a downlink BWP ID) for which the reference signal may be located in (e.g., configured), a reference signal (e.g., reference Signal) with which the QCL information may be provided (e.g., CSI-RS, SSB, etc), and/or one or more QCL type (e.g., qcl-Type, qcl-Type1 for a first reference signal, qcl-Type2 for a second reference signal). The configuration parameters 2604 may further indicate whether a TCI state may be a downlink TCI state or a joint (e.g., unified) TCI state (e.g., DLorJoint-TCIState). The configuration parameters 2604 may indicate whether a TCI may be an uplink TCI state (e.g., UL-TCIState). The configuration parameters 2604 may indicate, or comprise a parameter, an additional physical cell ID (PCI) for a TCI state (e.g., additionalPCI). The configuration parameters 2604 may configure the same value for the additional PCI for one or more reference signals (e.g., downlink reference signals) of the TCI state, for example, if the additional PCI may be present in configuration parameters 2604. The configuration parameters 2604 may configure each of the one or more TCI states for a coreset as activated or deactivated. The one or more TCI states may be activated or deactivated by one more activation commands (e.g., MAC CE or DCI).

The wireless device 2600 may receive timing advance command(s) 2606 from base station 2602 at t1. The timing advance command(s) 2606 may comprise one or more timing advances of the cell. The timing advance command(s) 2606 may be received via one or more RARs (from one or more random access procedures) and/or one or more MAC CEs (e.g., one or more timing advance MAC CEs). Each timing advance may be associated with a TAG of the at least two TAGs of the cell. Each timing advance may be associated with a physical cell ID. FIG. 19 shows example formats for the timing advance command 2606.

The wireless device 2600 may receive a DCI 2608 from base station 2602 at t2. The wireless device 2600 may receive the DCI 2608 via a coreset (e.g., coreset ID = 2 shown in FIG. 26) and a TCI state (e.g., TCI state = 1 shown in FIG. 26) that may be activated (or indicated) for the coreset (e.g., activated by the configuration parameters 2604 and/or an activation command (e.g., MAC CE). The DCI 2608 may schedule a sidelink transmission 2610 in 5G NR (e.g., a 5G sidelink transmission) and/or LTE (e.g., an LTE sidelink transmission). The DCI 2608 may comprise a dynamic sidelink grant and/or a periodic sidelink grant (e.g., activate (or release) a Type 2 sidelink configured grant or activate (or release) a sidelink SPS configuration).

The TCI state may be associated with a different physical cell ID than the physical cell ID of the cell. For example, the TCI state may indicate, or comprise, a physical cell ID (e.g., additionalPCIfield). The physical cell ID of (e.g., associated with) the TCI state may be different from (i.e., not) the physical cell ID of the cell.

The wireless device 2600 may send (e.g., transmit) the sidelink transmission 2610 at t4, for example, after a time duration 2609 between the wireless device 2600 receiving the DCI 2608 at t2 and t3. The time duration 2609 may be based on the timing advance, of the at least two timing advances of the cell, associated with physical cell ID of the TCI state via which the DCI 2608 may be received. The time duration 2609 may be (further) based on scheduling parameters of the DCI 2608. For example, the wireless device 2600 may receive the DCI 2608 via TCI state = 1 and coreset ID = 2. TCI state = 1 may be associated with a physical cell ID that may be different from the physical cell ID of the cell. The wireless device 2600 may use the timing advance associated with the physical cell ID of TCI state = 1, for example, based on the TCI state being associated with another physical cell ID than the physical cell ID of the cell. The wireless device 2600 may determine that TCI state = 1 may be associated with a different physical cell ID than the physical cell ID of the cell (e.g., not the cell) based on, for example, the TCI state indicating, or comprising, a physical cell ID (e.g., additional-PCI) different than the physical cell ID of the cell.

The wireless device 2600 may send (e.g., transmit or start transmitting) the sidelink transmission 2610 to wireless device 2620 at t4. The sidelink transmission 2610 may be, or comprise, a first-stage SCI, a second-stage SCI, and/or sidelink data (e.g., PSSCH transmission). The sidelink transmission 2610 may be referred to as a PSCCH transmission and/or a PSSCH transmission. For example, t4 may occur after t3 as described with respect to FIG. 26. For example, t3 and t4 may occur at the same time (i.e., t3 = t4).

The following may discuss flow charts for processes associated with the present disclosure. It may be understood that any reference to an operation from a receiver device (e.g., a wireless device) may be performed from the transmitter device (e.g., base station) in the reciprocal action. For example, if a wireless device receives a transmission from a base station, it is to be understood that the base station may send (e.g., transmit) the transmission to the wireless device. Explicit reference to such actions will not always be provided for purposes of conciseness. Furthermore, it may be understood that any of the above or below discussed features, either alone or in combination with other features, may be combined with any other feature discussed above or below.

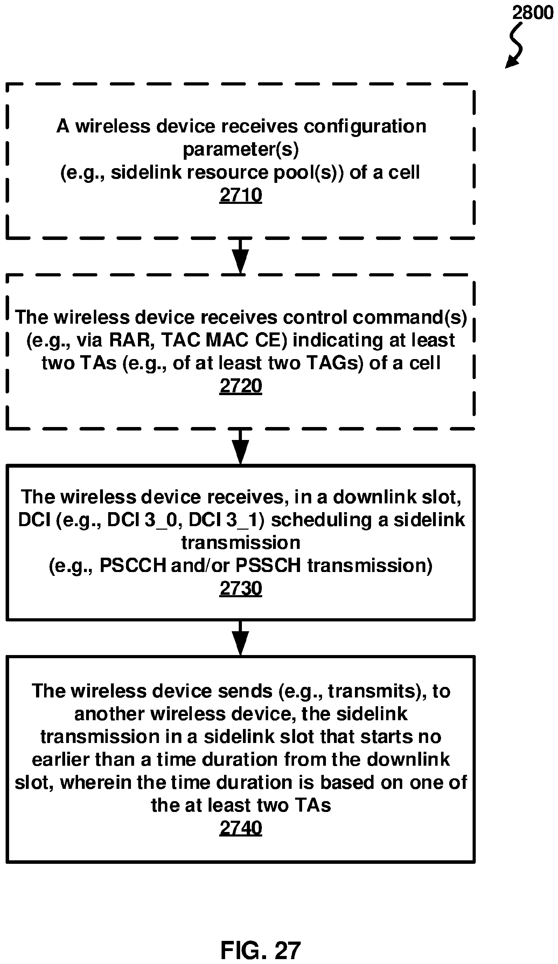

FIG. 27 shows an example flow chart for a wireless device performing sidelink communications in a cell with at least two timing advances. The wireless device that may send (e.g., transmit) a sidelink transmission may be referred to as a first wireless device or a transmitter wireless device. The wireless device that may receive the sidelink transmission may be referred to as a second wireless device or a receiver wireless device (even though the wireless device may not be the sole receiver of the sidelink transmission).

At step 2710, a wireless device (e.g., a transmitter wireless device) may receive one or more configuration parameters of a cell. Either alone or in combination with the features above and below, a process 2700 (e.g., at step 2710) may further comprise any of the following features. The one or more configuration parameters may comprise one or more configuration parameters for the sidelink communications (e.g., a sidelink communication configuration, sl-ConfigCommonNR, sl-V2X-ConfigCommon) of the cell. The one or more configuration parameters may be received via one or more radio resource control (RRC) messages. The one or more one or more configuration parameters may be received via one or more system information blocks (SIBs) (e.g., SIB12, SIB13, SIB14).

At step 2720, the wireless device may receive one or more control commands (e.g., one or more RARs and/or one or more TAC MAC CEs) of the cell. The one or more control commands indicate one or more timing advances of the cell. Either alone or in combination with the features above and below, the process 2700 (e.g., at step 2720) may further comprise any of the following features. The one or more control commands may comprise one or more timing advance commands. The at least two timing advances may be associated with an uplink carrier of the cell. The uplink carrier may be one of: a normal uplink carrier and/or a supplemental uplink carrier of the cell. The at least two timing advance (TA) values may be associated with a timing advance group (TAG). A first timing advance, of the at least two timing advances, may be associated with a first TAG of the cell; a second timing advance, of the at least two timing advances, may be associated with a second TAG of the cell. The first timing advance may be associated with a first transmission and reception point (TRP) of the cell. The second timing advance may be associated with a second TRP, of the cell. The second TRP may not be co-located with the first TRP.

At step 2730, the wireless device may receive, in a downlink slot, downlink control information (DCI) (e.g., DCI 3_0, DCI 3_1, and/or any other DCI format that may schedule a sidelink transmission). The DCI may schedule a sidelink transmission (e.g., one or more SCIs, one or more PSSCH transmissions, and/or one or more PSCCH transmissions). Either alone or in combination with the features above and below, the process 2700 (e.g., at step 2730) may further comprise any of the following features. The DCI may be received from a base station. A format of the DCI may be DCI format 3_0. The DCI may indicate (or comprise) a sidelink dynamic grant. The DCI may activate (or schedule activation of) a periodic sidelink grant (e.g., a configured sidelink grant). The sidelink transmission may be an initial sidelink transmission of the periodic sidelink grant. The periodic sidelink grant may be a type 2 configured sidelink grant. The DCI may indicate, or comprise, a configuration index field that indicates a periodic sidelink configuration of one or more periodic sidelink configuration. The DCI may comprise a time gap field with a value (e.g., *m*) indicating a slot offset (e.g., K_SL), in the slot offset table (e.g., at m+1), between the downlink slot and the sidelink transmission. The slot offset table may be indicated by the one or more configuration parameters (e.g., sl-DCI-ToSL-Trans) (e.g., the one or more configuration parameters of step 2710). Either alone or in combination with the features above and below, the process 2700 (e.g., at step 2730) may further comprise any of the following features. A format of the DCI may be DCI format 3_1. The DCI may activate (or schedule activation) of a periodic sidelink transmission. The periodic sidelink transmission may be a sidelink semi-persistent scheduling (SL-SPS) configuration. The sidelink transmission may be an initial sidelink transmission of the SL-SPS configuration. The DCI may comprise a cyclic redundancy check (CRC) scrambled by sidelink Semi-Persistent Scheduling V-RNTI. The DCI may indicate, or comprise, a sidelink SPS configuration index field that may indicate the SL-SPS configuration. The DCI may indicate a sidelink index value (e.g., *m*). The DCI may comprise a sidelink index field. The DCI may not indicate a sidelink index value (e.g., *m*). The DCI may not comprise a sidelink index field.

At step 2740, the wireless device may send (e.g., transmit), to another wireless device (e.g., a second wireless device, a receiver wireless device), the sidelink transmission in a sidelink slot. The sidelink may start no earlier than (e.g., may be the same or a later than) a time duration from the downlink slot. The time duration may be based on a timing advance of (or among) the at least two timing advances of the cell. Either alone or in combination with the features above and below, the process 2700 (e.g., at step 2740) may further comprise any of the following features. The wireless device may receive, from the second wireless device, feedback for the sidelink transmission. The wireless device may send (e.g., transmit), to the base station, a sidelink feedback report for the sidelink transmission. The wireless device may send (e.g., transmit), to the base station, an uplink feedback report for the DCI. The wireless device (e.g., the first wireless device, the transmitter wireless device) may operate in a sidelink resource allocation mode in which a base station schedules sidelink transmissions. The sidelink resource allocation mode may be Resource Allocation Mode-1 (e.g., in 5G NR) or Resource Allocation Mode-3 (e.g., in LTE). The sidelink transmission may comprise one or more physical sidelink control channel (PSCCH) transmissions and/or one or more physical sidelink shared channel (PSSCH) transmissions. The sidelink transmission may comprise one or more sidelink control information (SCIs) and/or one or more physical sidelink shared channel (PSSCH) transmissions. The PSCCH transmission may comprise a first SCI. The first SCI may be a first stage SCI (e.g., SCI 1-A) that may be sent (e.g., transmitted) in a PSCCH resource of the sidelink slot. The PSSCH transmission may comprise at least one of a second stage SCI (e.g., SCI 2-A, SCI 2-B) or sidelink data (e.g., PSSCH data). Either alone or in combination with the features above and below, the process 2700 (e.g., at step 2740) may further comprise any of the following features. The time duration may be further determined based on at least one of: a starting time of the downlink slot carrying the DCI (e.g., DCI 3_0); a slot offset between the downlink slot and the sidelink transmission; or a sidelink slot duration (e.g., T_slot). The time duration may further based on a sidelink index value (e.g., *m*). The DCI (e.g., DCI 3_1) may indicate, or comprise, the sidelink index value (or a field for the sidelink index value). The sidelink index value may be equal to a value indicated by a sidelink index field of the DCI (e.g., DCI 3_1). The sidelink index value may be equal to zero based on the DCI (e.g., DCI 3_1) not comprising a sidelink index field (or the sidelink index value).

The process 2700 (e.g., at step 2740) may further comprise any of the following features. The at least two timing advances may be associated with an uplink carrier of the cell. The uplink carrier may be one of: a normal uplink carrier and/or a supplemental uplink carrier of the cell. The timing advance may be associated with a timing advance that is a lowest value, or a highest value, among the first timing advance and the second timing advance of the cell. The timing advance may be equal to a maximum value, or a minimum value, of the first timing advance and the second timing advance of the cell.

The process 2700 may further comprise any of the following features. The timing advance may be associated with one TAG among a first TAG and a second TAG of the cell. The process 2700 may further comprise receiving one or more configuration parameters indicating a first TAG index for the first TAG and a second TAG index for the second TAG. The first TAG index may be lower than the second TAG index. The timing advance may be the first timing advance of the first TAG based on the first TAG index being lower than the second TAG index. The first TAG index may be a lowest TAG index among tag indexes of the at least two TAGs. The first TAG index may be higher than the second TAG index. The timing advance may be the first timing advance of the first TAG based on the first TAG index being higher than the second TAG index. The first TAG index may be a highest TAG index among tag indexes of the at least two TAGs.

The process 2700 may further comprise any of the following features. The timing advance may be associated with one TAG among a first TAG and a second TAG of the cell. A first TAG identifier may be associated with a first TAG. A second TAG identifier may be associated with a second TAG of a cell. The timing advance may be associated with the first TAG or the second TAG based on whether the first TAG identifier may be listed in a TAG identifier list (e.g., set, sequence, and/or vector), before or after the second TAG identifier.

The process 2700 may further comprise (e.g., at step 2720) receiving: a first control command (e.g., TAC MAC CE or an RAR) comprising a first timing advance command for the first TAG; and a second control command (e.g., TAC MAC CE or an RAR) comprising a second timing advance command for the second TAG. The first control command may be a first timing advance command (TAC) medium access control element (MAC CE) or a first random access response (RAR). The second control command may be a second TAC MAC CE or a second RAR. The first control command may comprise a first TAG index identifying the first TAG. The second control command may comprise a second TAG index identifying the second TAG. The process 2700 may further comprise determining: the first timing advance based on the first timing advance command in the first control command; and the second timing advance based on the second timing advance command in the second control command. The timing advance may be associated with a timing advance that may be a lowest value, or a highest value, among the first timing advance and the second timing advance of the cell. The timing advance may be equal to a maximum value, or a minimum value, of the first timing advance and the second timing advance of the cell.

The process 2700 may further comprise receiving one or more configuration parameters (e.g., from step 2710) indicating a physical cell index (PCI) of the cell. The DCI (e.g., from step 2170) may be received via a control resource set (coreset) based on a transmission configuration indicator (TCI) state of the coreset. The timing advance may be determined (or selected) based on whether the coreset may be associated with the PCI of the cell. The timing advance may be a first timing advance, of the at least two timing advances, based on the TCI state of the coreset being associated with the PCI of the cell. The timing advance may be a second timing advance, of the at least two timing advances, based on the TCI state of the coreset being associated with a second PCI different from the PCI of the cell. The timing advance may be associated with one TAG among a first TAG and a second TAG of the cell. The TAG may be the first TAG based on the TCI state of the coreset being associated with the PCI of the cell. The TAG may be the second TAG based on the TCI state of the coreset being associated with a second PCI different from the PCI of the cell. The process 2700 may further comprise randomly selecting the timing advance from among the at least two timing advances. The process 2700 may further comprise randomly selecting a TAG, for the timing advance, among at least two TAGs of the cell.

The process 2700 may further comprise receiving one or more configuration parameters (e.g., step 2710) indicating a control resource set (coreset) pool index for a coreset. The DCI may be received via the coreset. The timing advance may be associated with one TAG among a first TAG and a second TAG of the cell. The TAG may be the first TAG based on the coreset pool index being equal to a first value (e.g., 0). The TAG may be the second TAG based on the coreset pool index being equal to a second value (e.g., 1). The process 2700 may further comprise receiving one or more configuration parameters (e.g., from step 2710), for a first coreset and a second coreset of the cell, comprising: a first coreset pool index for the first coreset of the cell; a second coreset pool index for the second coreset of the cell. The first coreset pool index may be associated with a first timing advance of the at least two timing advances. The second coreset pool index may be associated with a second timing advance of the at least two timing advances. The receiving of the DCI (e.g., from step 2730) may be via the second coreset. The timing advance may be based on the second timing advance being associated with the second coreset pool index. The one or more configuration parameters may further comprise a first coreset index (coreset IDs) for the first coreset; and a second coreset ID for the second coreset. The first coreset may be one or more first coresets. The second coreset may be one or more second coresets. The first coreset pool index may be associated with a first transmission and reception point (TRP). The second coreset pool index may be associated with a second TRP.

The process 2700 at step 2720 may be receiving, by a wireless device from a base station via a cell associated with at least two timing advance groups (TAGs), downlink control information (DCI) in a downlink slot. The DCI may schedule a sidelink transmission via a dynamic grant or activation of a periodic sidelink transmission. The process 2700 at step 2730 may be sending (e.g., transmitting), by the wireless device to another wireless device, the sidelink transmission in a sidelink slot, of a sidelink resource pool, that may occur no earlier than a time duration from the downlink slot. The time duration may be determined based on a timing advance of a TAG of the at least two TAGs of the cell.

The process 2700 at step 2720 may receiving, by a wireless device and via a control resource set (coreset) of a cell, downlink control information (DCI) scheduling a sidelink transmission. The cell may be associated with (or belongs to) at least two timing advance groups (TAGs). The process 2700 at step 2730 may be sending (e.g., transmitting), to another wireless device, the sidelink transmission in a first sidelink slot that may start no earlier than a time duration determined based on a timing advance associated with (or corresponding to) a TAG of the at least two TAGs of the cell.

The process 2700 may comprise sending (e.g., transmitting), by a wireless device, a sidelink transmission based on one of at least two timing advances associated with a cell. The process 2700 may comprise sending (e.g., transmitting), by a wireless device, a sidelink transmission based on a timing advance of one of at least two timing advance groups (TAGs) associated with a cell. The process 2700 may comprise, or may not comprise, step 2710 and/or step 2720 (as shown by the dotted lines). Step 2710 and step 2720 may be for purposes of explanation. The order of step 2710, step 2720, step 2730, and step 2740 (and any of the above or below features; either alone or in combination) may occur in a different order (or may occur at the same time).

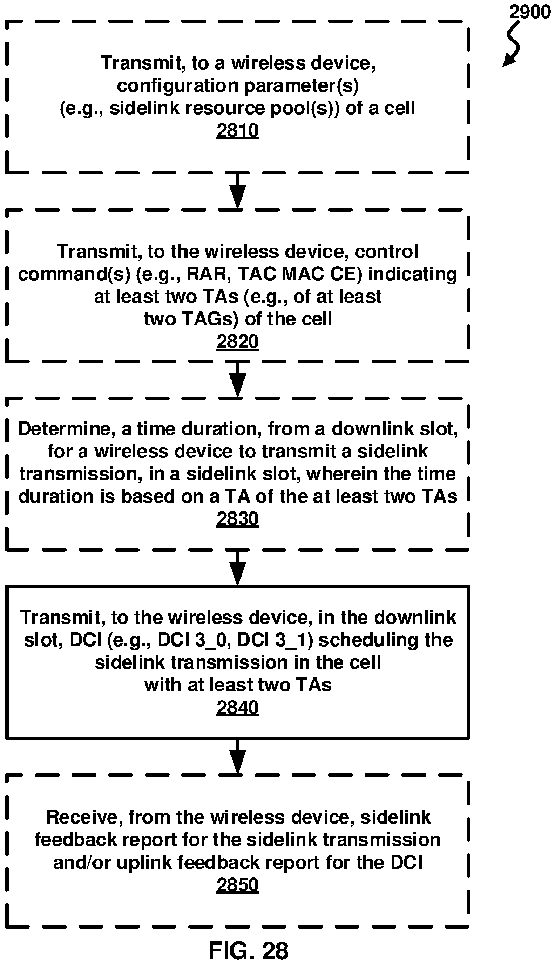

FIG. 28 shows an example flow chart for a base station in a cell with at least two timing advances. At least one sidelink transmission may be scheduled by the base station. A wireless device that may send (e.g., transmit) the sidelink transmission may be referred to as a first wireless device or a transmitter wireless device. The wireless device that may receive the sidelink transmission may be referred to as a second wireless device or a receiver wireless device (even though the wireless device may not be the sole receiver of the sidelink transmission). At step 2810, the base station may send (e.g., transmit), to the wireless device (e.g., a first wireless device or a transmitter wireless device), one or more configuration parameters of a cell. Either alone or in combination with the features above and below, a process 2800 (e.g., at step 2810) may further comprise any of the following features. The one or more configuration parameters may comprise one or more configuration parameters for sidelink communications (e.g., a sidelink communication configuration, sl-ConfigCommonNR, sl-V2X-ConfigCommon) of the cell. The one or more configuration parameters may be received via one or more radio resource control (RRC) messages. The one or more one or more configuration parameters may be received via one or more system information blocks (SIBs) (e.g., SIB12, SIB13, SIB14).

At step 2820, the base station may send (e.g., transmit), to the wireless device, one or more control commands (e.g., one or more RARs and/or one or more TAC MAC CEs) of the cell. The one or more control commands may indicate, or comprise, at least two timing advances of the cell. Either alone or in combination with the features above and below, the process 2800 (e.g., at step 2820) may further comprise any of the following features. The one or more control commands may comprise one or more timing advance commands. The at least two timing advances may be associated with an uplink carrier of the cell. The uplink carrier may be one of: a normal uplink carrier and/or a supplemental uplink carrier of the cell. The at least two timing advance may be associated with a TAG. A first timing advance, of the at least two timing advances, may be associated with a first TAG of the cell; a second timing advance, of the at least two timing advances, may be associated with a second TAG of the cell. The first timing advance may be associated with a first transmission and reception point (TRP) of the cell, and the second timing advance may be associated with a second TRP, of the cell, that may not be co-located with the first TRP.

At step 2830, the base station may determine a time duration, from a downlink slot, for the wireless device (e.g., the first wireless device, the transmitter wireless device) to send (e.g., transmit) a sidelink transmission, in a sidelink slot. The time duration may be based on a timing advance of at least two timing advances of the cell.

At step 2840, the base station may send (e.g., transmit), to the wireless device in the downlink slot, DCI (e.g., DCI 3_0, DCI 3_1, and/or any other DCI format that may schedule a sidelink transmission). The DCI may schedule a sidelink transmission (e.g., one or more SCIs, one or more PSSCH transmissions, and/or one or more PSCCH transmissions) in the cell with at least two timing advances. Either alone or in combination with the features above and below, the process 2800 may further comprise any of the following features. The wireless device (e.g., the first wireless device, the transmitter wireless device) may operate in a sidelink resource allocation mode in which the base station may schedule sidelink transmissions. The sidelink resource allocation mode may be Resource Allocation Mode-1 (e.g., in 5G NR) or Resource Allocation Mode-3 (e.g., in LTE). The sidelink transmission may comprise one or more physical sidelink control channel (PSCCH) transmissions and/or one or more physical sidelink shared channel (PSSCH) transmissions. The sidelink transmission may comprise one or more sidelink control information (SCIs) and/or one or more physical sidelink shared channel (PSSCH) transmissions. The PSCCH transmission may comprise a first SCI. The first SCI may be a first stage SCI (e.g., SCI 1-A) that may be sent (e.g., transmitted) in a PSCCH resource of the sidelink slot. The PSSCH transmission may comprise at least one of a second stage SCI (e.g., SCI 2-A, SCI 2-B) or sidelink data (e.g., PSSCH data).

The process 2800 (e.g., at step 2830) may further comprise any of the following features. The time duration may be for DCI (e.g., DCI 3_0, DCI 3_1, and/or any other DCI format scheduling a sidelink transmission). The time duration may be further determined based on at least one of: a starting time of the downlink slot carrying the DCI (e.g., DCI 3_0); a slot offset between the downlink slot and the sidelink transmission; and/or a sidelink slot duration (e.g., T_slot). The time duration may further be based on a sidelink index value (e.g., *m*). The DCI (e.g., DCI 3_1) may indicate, or comprise, the sidelink index value (or a field for the sidelink index value). The sidelink index value may be equal to a value indicated by a sidelink index field of the DCI (e.g., DCI 3_1). The sidelink index value may be equal to zero based on the DCI (e.g., DCI 3_1) not comprising a sidelink index field (or the sidelink index value).

The process 2800 (e.g., at step 2830) may further comprise any of the following features. The at least two timing advances may be associated with an uplink carrier of the cell. The uplink carrier may be one of: a normal uplink carrier and/or a supplemental uplink carrier of the cell. The timing advance may be associated with a timing advance value that may be a lowest value, or a highest value, among the first timing advance and the second timing advance of the cell. The timing advance may be equal to a maximum value, or a minimum value, of the first timing advance and the second timing advance of the cell. The timing advance may be associated with one TAG among a first TAG and a second TAG of the cell. The process 2800 may further comprise sending (e.g., transmitting) one or more configuration parameters indicating a first TAG index for the first TAG and a second TAG index for the second TAG. The first TAG index may be lower than the second TAG index. The timing advance may be the first timing advance of the first TAG based on the first TAG index being lower than the second TAG index. The first TAG index may be a lowest TAG index among tag indexes of the at least two TAGs. The first TAG index may be higher than the second TAG index. The timing advance may be the first timing advance of the first TAG based on the first TAG index being higher than the second TAG index. The first TAG index may be a highest TAG index among tag indexes of the at least two TAGs.

The process 2800 may further comprise any of the following features. The timing advance may be associated with one TAG among a first TAG and a second TAG of the cell. A first TAG identifier may be associated with a first TAG. A second TAG identifier may be associated with a second TAG of a cell. The timing advance may be associated with the first TAG or the second TAG based on whether the first TAG identifier may be listed in a TAG identifier list (e.g., set, sequence, and/or vector), before or after the second TAG identifier.

The process 2800 may further comprise (e.g., at step 2820) sending (e.g., transmitting): a first control command (e.g., TAC MAC CE or an RAR) comprising a first timing advance command for the first TAG; and a second timing control command (e.g., TAC MAC CE or an RAR) comprising a second timing advance command for the second TAG. The first control command may be a first timing advance command (TAC) medium access control element (MAC CE) or a first random access response (RAR). The second control command may be a second TAC MAC CE or a second RAR. The first control command may comprise a first TAG index identifying the first TAG. The second control command may comprise a second TAG index identifying the second TAG. The process 2800 may further comprise determining: the first timing advance based on the first timing advance command in the first control command; and the second timing advance based on the second timing advance command in the second control command. The timing advance may be associated with a timing advance value that is a lowest value, or a highest value, among the first timing advance and the second timing advance of the cell. The timing advance may be equal to a maximum value, or a minimum value, of the first timing advance and the second timing advance of the cell.

The process 2800 may further comprise sending (e.g., transmitting) one or more configuration parameters (e.g., from step 2810) indicating a physical cell index (PCI) of the cell. The DCI (e.g., from step 2820) may be sent (e.g., transmitted) via a control resource set (coreset) based on a transmission configuration indicator (TCI) state of the coreset. The timing advance may be determined (or selected) based on whether the coreset may be associated with the PCI of the cell. The timing advance may be a first timing advance, of the at least two timing advances, based on the TCI state of the coreset being associated with the PCI of the cell. The timing advance may be a second timing advance, of the at least two timing advances, based on the TCI state of the coreset being associated with a second PCI different from the PCI of the cell. The timing advance may be associated with one TAG among a first TAG and a second TAG of the cell. The TAG may be the first TAG based on the TCI state of the coreset being associated with the PCI of the cell. The TAG may be the second TAG based on the TCI state of the coreset being associated with a second PCI different from the PCI of the cell. The process 2800 may further comprise randomly selecting the timing advance from among the at least two timing advances. The process 2800 may further comprise randomly selecting a TAG, for the timing advance, among at least two TAGs of the cell.

The process 2800 may further comprise sending (e.g., transmitting) one or more configuration parameters (e.g., from step 2810) indicating a control resource set (coreset) pool index for a coreset. The DCI may be received via the coreset. The timing advance may be associated with one TAG among a first TAG and a second TAG of the cell. The TAG may be the first TAG based on the coreset pool index being equal to a first value (e.g., 0). The TAG may be the second TAG based on the coreset pool index being equal to a second value (e.g., 1). Process 2800 may further comprise sending (e.g., transmitting) one or more configuration parameters (e.g., from step 2810), for a first coreset and a second coreset of the cell, comprising: a first coreset pool index for the first coreset of the cell; a second coreset pool index for the second coreset of the cell. The first coreset pool index may be associated with a first timing advance of the at least two timing advances. The second coreset pool index may be associated with a second timing advance of the at least two timing advances. The sending (e.g., transmitting) the DCI (e.g., from step 2840) may be via the second coreset. The timing advance may be based on the second timing advance being associated with the second coreset pool index. The one or more configuration parameters may further comprise a first coreset index (coreset IDs) for the first coreset; and a second coreset ID for the second coreset. The first coreset may be one or more first coresets. The second coreset may be one or more second coresets. The first coreset pool index may be associated with a first transmission and reception point (TRP). The second coreset pool index may be associated with a second TRP.

The process 2800 (e.g., at step 2840) may further comprise any of the following features. A format of the DCI may be DCI format 3_0. The DCI may indicate (or comprise) a sidelink dynamic grant. The DCI may activate (or schedule activation of) a periodic sidelink grant (e.g., a configured sidelink grant). The sidelink transmission may be an initial sidelink transmission of the periodic sidelink grant. The periodic sidelink grant may be a type 2 configured sidelink grant. The DCI may indicate, or comprise, a configuration index field that indicates a periodic sidelink configuration of one or more periodic sidelink configuration. The DCI may comprise a time gap field with a value (e.g., m) indicating a slot offset (e.g., $K_{SL}$), in the slot offset table (e.g., at m+1), between the downlink slot and the sidelink transmission. The slot offset table may be indicated by the one or more configuration parameters (e.g., sl-DCI-ToSL-Trans) (e.g., the one or more configuration parameters of step 2810).

The process 2800 (e.g., at step 2840) may further comprise any of the following features. A format of the DCI may be DCI format 3_1. The DCI may activate (or schedule activation) of a periodic sidelink transmission, where the periodic sidelink transmission is a sidelink semi-persistent scheduling (SL-SPS) configuration. The sidelink transmission may be an initial sidelink transmission of the SL-SPS configuration. The DCI may comprise a cyclic redundancy check (CRC) scrambled by sidelink Semi-Persistent Scheduling V-RNTI. The DCI may indicate, or comprise, a sidelink SPS configuration index field that indicates the SL-SPS configuration. The DCI may indicate a sidelink index value (e.g., *m*). The DCI may comprise a sidelink index field. The DCI may not indicate a sidelink index value (e.g., *m*). The DCI may not comprise a sidelink index field.

At step 2850, the base station may receive, from the wireless device (e.g., the first wireless device, the transmitter wireless device), a sidelink feedback report for the sidelink transmission and/or an uplink feedback report for the DCI. The process 2800 at step 2850 may further comprise any of the following features. The base station may receive, from the wireless device, the sidelink feedback report for the sidelink transmission. The base station may receive, from the wireless device, the uplink feedback report for the DCI.

The process 2800 at step 2830 may be determining, by a base station, a time duration, from a downlink slot, for a wireless device to send (e.g., transmit) a sidelink transmission, in a sidelink slot. The time duration may be based on a timing advance of at least two timing advance groups (TAGs) of a cell. The process 2800 at step 2840 may be sending (e.g., transmitting), by the base station and to wireless device in the downlink slot, the DCI scheduling the sidelink transmission. The process 2800 at step 2830 may be determining, by a base station, one or more parameters for downlink control information (DCI) scheduling a sidelink transmission based on at least two timing advance of a cell. The process 2800 at step 2840 may be sending (e.g., transmitting), by the base station and to wireless device, the DCI. The process 2800 at step 2830 may be determining, by a base station, one or more parameters for downlink control information (DCI) scheduling a sidelink transmission based on a timing advance of at least two timing advance groups (TAGs) of a cell. The process 2800 at step 2840 may be sending (e.g., transmitting), by the base station and to wireless device, the DCI.

The process 2800 may comprise, or may not comprise, step 2810, step 2820, step 2830, and step 2850 as shown by the dotted lines. Step 2810, step 2820, step 2830, and/or step 2850 may be shown for purposes of explanation. The order of step 2810, step 2820, step 2830, 2840, and step 2850 (and any of the above or below features; either alone or in combination) in the process 2800 may occur in a different order (or may occur at the same time).

The process 2700 may be performed and/or executed by a wireless device and/or one or more processors, memory, and instructions that, when executed by the one or more processors, cause the wireless device to perform the process 2700. The process 2700 may further be programmed on a computer program processor and/or (e.g., non-transitory) computer-readable storage medium.

The process 2800 may be performed and/or executed by a base station and/or one or more processors, memory, and instructions that, when executed by the one or more processors, cause the base station to perform the process 2800. The process 2800 may further be programmed on a computer program processor and/or (e.g., non-transitory) computer-readable storage medium.

A system may comprise a wireless device and/or one or more processors, memory, and instructions that, when executed by the one or more processors, cause the wireless device to perform process 2700. The system may further comprise a base station and/or one or more processors, memory, and instructions that, when executed by the one or more processors, cause the base station to perform process 2800. The system may further comprise another wireless device (e.g., a second wireless device, a receiver wireless device) to receive the sidelink transmission from the wireless device (e.g., a first wireless device, a transmitter wireless device) performing process 2700.

The above description of the disclosure is provided to enable a person skilled in the art to make or use the disclosure. Various modifications to, combinations of, and substitutions between the features in the disclosure will be readily apparent to those skilled in the art, and the generic principles defined herein may be applied to other variations, modifications, combinations, and substitutions of the features without departing from the spirit or scope of the disclosure. The disclosure is not intended to be limited to the examples described herein, but is to be accorded the widest scope consistent with the principles and features disclosed herein.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a first wireless device in a first slot and via a cell associated with at least two timing advance groups (TAGs), downlink control information (DCI) scheduling a sidelink transmission.

Clause 2. The method of clause 1, further comprising transmitting, to a second wireless device and in a second slot that starts no earlier than a time duration after the first slot, the sidelink transmission.

Clause 3. The method of any one of clauses 1 and 2, wherein the time duration is based on a timing advance value of a TAG, of the at least two TAGs, that is associated with a lowest timing advance value of at least two timing advance values.

Clause 4. The method of any one of clauses 1-3, wherein: a first timing advance value, of the at least two timing advance values, is associated with a first TAG of the at least two TAGs; a second timing advance value, of the at least two timing advance values, is associated with a second TAG of the at least two TAGs.

Clause 5. The method of any one of clauses 1-4, the timing advance value of the TAG is either the first timing advance value of the first TAG or the second timing advance value of the second TAG.

Clause 6. The method of any one of clauses 1-5, wherein: a first timing advance value, of the at least two timing advance values, is associated with a first transmission and reception point (TRP); and a second timing advance value, of the at least two timing advance values, is associated with a second TRP.

Clause 7. The method of any one of clauses 1-6, further comprising receiving, for the cell, one or more configuration parameters comprising an indication of a slot offset table.

Clause 8. The method of any one of clauses 1-7, wherein the DCI indicates a slot offset that is between the first slot and the sidelink transmission.

Clause 9. The method of any one of clauses 1-8, wherein the at least two timing advance values are associated with an uplink carrier of the cell.

Clause 10. The method of any one of clauses 1-9, wherein: the first slot is a downlink slot; and the second slot is a sidelink slot.

Clause 11. The method of any one of clauses 1-10, wherein the sidelink transmission comprises: one or more sidelink control information (SCIs); and one or more physical sidelink shared channel (PSSCH) transmissions.

Clause 12. The method of any one of clauses 1-11, wherein the SCI is a first stage SCI that is transmitted in a physical sidelink control channel (PSCCH) resource of the sidelink slot.

Clause 13. The method of any one of clauses 1-12, wherein the PSSCH transmission comprises at least one of: a second stage SCI; or sidelink data.

Clause 14. The method of any one of clauses 1-13, wherein the DCI indicates a sidelink dynamic grant.

Clause 15. The method of any one of clauses 1-14, wherein: the DCI activates a periodic sidelink grant; and the sidelink transmission is an initial sidelink transmission of the periodic sidelink grant.

Clause 16. The method of any one of clauses 1-15, wherein the time duration is further based on: a starting time of the downlink slot carrying the DCI; the slot offset between the downlink slot and the sidelink transmission; and a sidelink slot duration.

Clause 17. The method of any one of clauses 1-16, wherein the TAG is one of: the first TAG based on a control resource set (coreset) pool index being equal to a first value; and the second TAG based on the coreset pool index being equal to a second value.

Clause 18. The method of any one of clauses 1-17, further comprising receiving one or more configuration parameters indicating the coreset pool index for a coreset.

Clause 19. The method of any one of clauses 1-18, wherein the DCI is received via the coreset.

Clause 20. The method of any one of clauses 1-19, wherein the DCI schedules a sidelink transmission via a dynamic grant or activation of a periodic sidelink transmission.

Clause 21. The method of any one of clauses 1-20, wherein the periodic sidelink grant is a Type 2 configured sidelink grant.

Clause 22. The method of any one of clauses 1-21 further comprising: receiving one or more configuration parameters, for a first coreset and a second coreset of the cell.

Clause 23. The method of any one of clauses 1-22 further comprising: a first coreset pool index for the first coreset of the cell; and a second coreset pool index for the second coreset of the cell.

Clause 24. The method of any one of clauses 1-23, wherein: the first coreset pool index is associated with a first timing advance of the at least two timing advances; the second coreset pool index is associated with a second timing advance of the at least two timing advances.

Clause 25. The method of any one of clauses 1-24, wherein: the receiving of the DCI is via the second coreset; and the timing advance is based on the second timing advance being associated with the second coreset pool index.

Clause 26. The method of any one of clauses 1-25, wherein the one or more configuration parameters further comprises: a first coreset index for the first coreset; and a second coreset ID for the second coreset.

Clause 27. The method of any one of clauses 1-26, wherein: the first coreset is one or more first coresets; and the second coreset is one or more second coresets.

Clause 28. The method of any one of clauses 1-27, wherein: the first coreset pool index is associated with a first transmission and reception point (TRP); and the second coreset pool index is associated with a second TRP.

Clause 29. The method of any one of clauses 1-28 further comprising receiving one or more configuration parameters indicating: a first TAG index for the first TAG; and a second TAG index for the second TAG.

Clause 30. The method of any one of clauses 1-29, wherein: the first TAG index is lower than the second TAG index; and the timing advance is the first timing advance of the first TAG based on the first TAG index being lower than the second TAG index.

Clause 31. The method of any one of clauses 1-30, wherein the first TAG index is a lowest TAG index among tag indexes of the at least two TAGs.

Clause 32. The method of any one of clauses 1-31, wherein: the first TAG index is higher than the second TAG index; and the timing advance is the first timing advance of the first TAG based on the first TAG index being higher than the second TAG index.

Clause 33. The method of any one of clauses 1-32, wherein the first TAG index is a highest TAG index among tag indexes of the at least two TAGs.

Clause 34. The method of any one of clauses 1-33 further comprising receiving: a first control command comprising a first timing advance command for the first TAG; and a second control command comprising a second timing advance command for the second TAG.

Clause 35. The method of any one of clauses 1-34, wherein: the first control command is a first timing advance command (TAC) medium access control element (MAC CE) or a first random access response (RAR); and the second control command is a second TAC MAC CE or a second RAR.

Clause 36. The method of any one of clauses 1-35, wherein: the first control command comprises a first TAG index identifying the first TAG; and the second control command comprises a second TAG index identifying the second TAG.

Clause 37. The method of any one of clauses 1-36 further comprising determining: the first timing advance based on the first timing advance command in the first control advance command; and the second timing advance based on the second timing advance command in the second control command.

Clause 38. The method of any one of clauses 1-37, wherein the timing advance is associated with a timing advance that is a lowest value, or a highest value, among the first timing advance and the second timing advance.

Clause 39. The method of any one of clauses 1-38, wherein the timing advance is equal to a maximum value, or a minimum value, of the first timing advance and the second timing advance.

Clause 40. The method of any one of clauses 1-39 further comprising receiving one or more configuration parameters indicating a physical cell index (PCI) of the cell, wherein the DCI is received via the coreset based on a transmission configuration indicator (TCI) state of the coreset.

Clause 41. The method of any one of clauses 1-40, wherein the TAG is the first TAG based on the TCI state of the coreset being associated with the PCI of the cell.

Clause 42. The method of any one of clauses 1-41, wherein the TAG is the second TAG based on the TCI state of the coreset being associated with a second PCI different from the PCI of the cell.

Clause 43. The method of any one of clauses 1-42 further comprising receiving one or more configuration parameters indicating a physical cell index (PCI) of the cell.

Clause 44. The method of any one of clauses 1-43, wherein: the DCI is received via a coreset based on a transmission configuration indicator (TCI) state of the coreset; and the timing advance is selected based on whether the coreset is associated with the PCI of the cell.

Clause 45. The method of any one of clauses 1-44, wherein the timing advance is a first timing advance, of the at least two timing advances, based on the TCI state of the coreset being associated with the PCI of the cell.

Clause 46. The method of any one of clauses 1-45, wherein the timing advance is a second timing advance, of the at least two timing advance, based on the TCI state of the coreset being associated with a second PCI different from the PCI of the cell.

Clause 47. The method of any one of clauses 1-46 further comprising randomly selecting the timing advance from among the at least two timing advances.

Clause 48. The method of any one of clauses 1-47 further comprising randomly selecting the TAG.

Clause 49. A computing device comprising: one or more processors; and memory storing instructions that, when executed by the one or more processors, cause the computing device to perform the method of any one of claims 1 to 48.

Clause 50. A system comprising: a wireless device configured to perform the method of any one of claims 1 to 48; and a base station configured to send, to the wireless device, the downlink control information scheduling the sidelink transmission.

Clause 51. A computer-readable medium storing instructions that, when executed, cause performance of the method of any one of claims 1 to 48.

Clause 52. A method comprising: receiving, by a first wireless device in a first slot and via a cell associated with at least two timing advances (TAs), downlink control information (DCI) scheduling a sidelink transmission.

Clause 53. The method of clause 52, further comprising transmitting, to a second wireless device and in a second slot that starts no earlier than a time duration after the first slot, the sidelink transmission.

Clause 54. The method of any one of clauses 52 and 53, wherein the time duration is based on a timing advance of the at least two timing advances that are associated with the cell.

Clause 55. The method of any one of clauses 52 and 54, wherein the at least two timing advances are associated with a TAG.

Clause 56. The method of any one of clauses 52 and 55, wherein the timing advance is associated with a lowest timing advance of: a first timing advance associated with a first timing advance group (TAG) of the cell; and a second timing advance associated with a second TAG of the cell.

Clause 57. The method of any one of clauses 52 and 56, wherein the timing advance is associated with a lowest TAG identifier of: a first TAG identifier associated with a first TAG of the cell; and a second TAG identifier associated with a second TAG of the cell.

Clause 58. The method of any one of clauses 52 and 57, wherein the timing advance is associated with: a first TAG associated with the cell based on the DCI being received via a first control resource set (coreset) associated with a first coreset pool index; or a second TAG associated with the cell based on the DCI being received via a second coreset associated with a second coreset pool index.

Clause 59. The method of any one of clauses 52 and 58, wherein: the DCI activates a periodic sidelink grant; and the sidelink transmission is an initial sidelink transmission of the periodic sidelink grant.

Clause 60. The method of any one of clauses 52 and 59, further comprising receiving, for the cell, one or more configuration parameters comprising an indication of a slot offset table, wherein the DCI indicates a slot offset, in the slot offset table, between the first slot and the sidelink transmission.

Clause 61. The method of any one of clauses 52 and 60, wherein: a first timing advance, of the at least two timing advances, is associated with a first transmission and reception point (TRP); and a second timing advance, of the at least two timing advances, is associated with a second TRP that is not co-located with the first TRP.

Clause 62. The method of any one of clauses 52 and 61, wherein the sidelink resource allocation mode is Resource Allocation Mode-1 or Resource Allocation Mode-3.

Clause 63. The method of any one of clauses 52 and 62, wherein the first wireless device operates in a sidelink resource allocation mode in which a base station schedules sidelink transmissions.

Clause 64. The method of any one of clauses 52 and 63, wherein a format of the DCI is DCI format 3_0.

Clause 65. The method of any one of clauses 52 and 64, wherein a format of the DCI is DCI format 3_1.

Clause 66. The method of any one of clauses 52 and 65, wherein: the DCI activates a sidelink semi-persistent scheduling (SL-SPS) configuration; and the sidelink transmission is an initial sidelink transmission of the SL-SPS configuration.

Clause 67. The method of any one of clauses 52 and 66, wherein the DCI comprises a configuration index field that indicates a periodic sidelink configuration of one or more periodic sidelink configuration.

Clause 68. The method of any one of clauses 52 and 67, wherein the time duration is further based on a sidelink index value.

Clause 69. The method of any one of clauses 52 and 68, wherein the sidelink index value is equal to zero based on the DCI not comprising a sidelink index field.

Clause 70. The method of any one of clauses 52 and 69, wherein the sidelink index value is equal to a value indicated by a sidelink index field of the DCI.

Clause 71. The method of any one of clauses 52 and 70, further comprising receiving one or more configuration parameters, of the cell, comprising a sidelink communication configuration.

Clause 72. The method of any one of clauses 52 and 71, wherein: the DCI activates the SL-SPS configuration; and the sidelink transmission is an initial sidelink transmission of the SL-SPS configuration.

Clause 73. The method of any one of clauses 52 and 72, wherein: the DCI is a DCI format 3_1 with a cyclic redundancy check (CRC) scrambled by sidelink Semi-Persistent Scheduling V-RNTI; and the DCI comprises a sidelink SPS configuration index field that indicates the SL-SPS configuration.

Clause 74. A computing device comprising: one or more processors; and memory storing instructions that, when executed by the one or more processors, cause the computing device to perform the method of any one of claims 52 and 73.

Clause 75. A system comprising: a wireless device configured to perform the method of any one of claims 52 and 73; and a base station configured to send, to the wireless device, the downlink control information scheduling the sidelink transmission.

Clause 76. A computer-readable medium storing instructions that, when executed, cause performance of the method of any one of claims 52 and 73.

Clause 77. A method comprising: receiving, by a first wireless device in a first slot and via a cell associated with a first timing advance group (TAG) that is associated with a first timing advance and with a second TAG that is associated with a second timing advance, downlink control information (DCI) scheduling a sidelink transmission.

Clause 78. The method of clause 77, further comprising transmitting, to a second wireless device and in a second slot that starts no earlier than a time duration after the first slot, the sidelink transmission.

Clause 79. The method of any one of clauses 77 and 78, wherein the time duration is based on the first timing advance associated with the first TAG or is based on the second timing advance associated with the second TAG.

Clause 80. The method of any one of clauses 77 and 79, wherein the time duration is based on the first timing advance associated with the first TAG based on: a first timing advance associated with the first TAG being lower than a second timing advance associated with the second TAG.

Clause 81. The method of any one of clauses 77 and 80, wherein the time duration is based on the first timing advance associated with the first TAG based on: a first TAG identifier associated with the first TAG being lower than a second TAG identifier associated with the second TAG.

Clause 82. The method of any one of clauses 77 and 81, wherein the timing duration is based on: the first timing advance associated with the first TAG based on the DCI being received via a first control resource set (coreset) associated with a first coreset pool index; or the second timing advance associated with the second TAG based on the DCI being received via a second coreset associated with a second coreset pool index.

Clause 83. The method of any one of clauses 77 and 82, wherein: the DCI activates a periodic sidelink grant; and the sidelink transmission is an initial sidelink transmission of the periodic sidelink grant.

Clause 84. The method of any one of clauses 77 and 83 further comprising: receiving, for the cell, one or more configuration parameters comprising an indication of a slot offset table.

Clause 85. The method of any one of clauses 77 and 84, wherein the DCI comprises a time gap field indicating a slot offset, in the slot offset table, between the first slot and the sidelink transmission.

Clause 86. The method of any one of clauses 77 and 85, wherein the time duration is further based on a starting time of the first slot, the slot offset, and a slot duration.

Clause 87. The method of any one of clauses 77 and 86 further comprising determining, by a base station, the time duration, from a downlink slot, for the first wireless device to transmit the sidelink transmission, in a sidelink slot.

Clause 88. The method of any one of clauses 77 and 87, wherein the time duration is based on a timing advance of at least two timing advances of the cell.

Clause 89. The method of any one of clauses 77 and 88 further comprising transmitting, by the base station and to the first wireless device in the downlink slot, downlink control information (DCI) scheduling the sidelink transmission.

Clause 90. The method of any one of clauses 77 and 89 further comprising determining, by the base station, the time duration, from the downlink slot, for the first wireless device to transmit the sidelink transmission, in the sidelink slot.

Clause 91. The method of any one of clauses 77 and 90, wherein the time duration is based on a timing advance of at least two timing advance groups (TAGs) of the cell.

Clause 92. The method of any one of clauses 77 and 91 further comprising transmitting, by the base station and to the first wireless device in the downlink slot, the DCI scheduling the sidelink transmission.

Clause 93. A computing device comprising: one or more processors; and memory storing instructions that, when executed by the one or more processors, cause the computing device to perform the method of any one of claims 77 and 92.

Clause 94. A system comprising: a wireless device configured to perform the method of any one of claims 77 and 92; and the base station configured to send, to the wireless device, the downlink control information scheduling the sidelink transmission.

Clause 95. A computer-readable medium storing instructions that, when executed, cause performance of the method of any one of claims 77 and 92.

A wireless device may perform a method comprising multiple operations. A first wireless device may receive, in a first slot, downlink control information (DCI) that may schedule a sidelink transmission, via a cell that may be associated with at least two timing advance groups (TAGs). The first wireless device may send (e.g. transmit), to a second wireless device, the sidelink transmission in a second slot that may start no earlier than a time duration after the first slot. The first slot may be a downlink slot. The second slot may be a sidelink slot. The time duration may be based on a timing advance value of a TAG, of the at least two TAGs, that may be associated with a lowest timing advance value of at least two timing advance values. A first timing advance value, of the at least two timing advance values, may be associated with a first TAG of the at least two TAGs. A second timing advance value, of the at least two timing advance values, may be associated with a second TAG of the at least two TAGs. The timing advance value of the TAG may be either the first timing advance value of the first TAG or the second timing advance value of the second TAG. The first timing advance value, of the at least two timing advance values, may be associated with a first transmission and/or reception point (TRP). The second timing advance value, of the at least two timing advance values, may be associated with a second TRP. The first wireless device may receive, for the cell, one of more configuration parameters that may comprise an indication of a slot offset table. The DCI may indicate a slot offset that may be between the first slot and the sidelink transmission. The sidelink transmission may comprise one or more sidelink control information (SCIs) and/or one or more physical sidelink shared channel (PSSCH) transmissions. The at least two timing advance values may be associated with an uplink carrier of the cell. The SCI may be a first stage SCI that may be sent (e.g., transmitted) in a physical sidelink control channel (PSCCH) resource of the sidelink slot. The PSSCH transmission may comprise at least one of: a second stage SCI or sidelink data. The DCI may indicate a sidelink dynamic grant. The DCI may activate a periodic sidelink grant. The sidelink transmission may be an initial sidelink transmission of the periodic sidelink grant. The time duration may be further based on: a starting time of the downlink slot carrying the DCI, the slot offset between the downlink slot and the sidelink transmission, and/or a sidelink slot duration. The TAG may be one of: the first TAG that may be based on a control resource set (coreset) pool index being equal to a first value; and the second TAG that may be based on the coreset pool index being equal to a second value. The first wireless device may receive one or more configuration parameters that may indicate the coreset pool index for a coreset. The DCI may be received via the coreset. The DCI may schedule a sidelink transmission via a dynamic grant and/or activation of a periodic sidelink transmission. For example, the periodic sidelink grant may be a Type 2 configured sidelink grant. The first wireless device may receive one or more configuration parameters, for example, for a first coreset and/or a second coreset of the cell. The one or more configuration parameters may comprise a first coreset pool index for the first coreset of the cell and/or a second coreset pool index for the second coreset of the cell. The first coreset pool index may be associated with a first timing advance of the at least two timing advances. The second coreset pool index may be associated with a second timing advance of the at least two timing advances. The receiving of the DCI may be via the second coreset. The timing advance may be based on the second timing advance being associated with the second coreset pool index. The one or more configuration parameters may further comprise a first coreset index (coreset IDs) for the first coreset and/or a second coreset ID for the second coreset. The first coreset may be one or more first coresets. The second coreset may be one or more second coresets. The first coreset pool index may be associated with a first transmission and reception point (TRP). The second coreset pool index may be associated with a second TRP. The first wireless device may receive one or more configuration parameters indicating a first TAG index for the first TAG and/or a second TAG index for the second TAG. The first TAG index may be lower than the second TAG index. The timing advance may be the first timing advance of the first TAG, for example, based on the first TAG index being lower than the second TAG index. The first TAG index may be a lowest TAG index among tag indexes of the at least two TAGs. The first TAG index may be higher than the second TAG index. The timing advance may be the first timing advance of the first TAG, for example, based on the first TAG index being higher than the second TAG index. The first TAG index may be a highest TAG index among tag indexes of the at least two TAGs. The first wireless device may receive a first control command that may comprise a first timing advance command for the first TAG and/or a second control command that may comprise a second timing advance command for the second TAG. The first control command may be a first timing advance command (TAC) medium access control element (MAC CE) and/or a first random access response (RAR). The second control command may be a second TAC MAC CE and/or a second RAR. The first control command may comprise a first TAG index identifying the first TAG. The second control command may comprise a second TAG index identifying the second TAG. The first wireless device may determine the first timing advance, for example, based on the first timing advance command in the first control advance command, and/or the second timing advance, for example, based on the second timing advance command in the second control command. The timing advance may be associated with a timing advance that may be a lowest value or a highest value, among the first timing advance and the second timing advance. The timing advance may be equal to a maximum value or a minimum value, of the first timing advance and the second timing advance. The first wireless device may receive one or more configuration parameters that may indicate a physical cell index (PCI) of the cell. The DCI may be received via the coreset, for example, based on a transmission configuration indicator (TCI) state of the coreset. The TAG may be the first TAG, for example, based on the TCI state of the coreset being associated with the PCI of the cell. The TAG may be the second TAG, for example, based on the TCI state of the coreset being associated with a second PCI different from the PCI of the cell. The first wireless device may receive one or more configuration parameters indicating a physical cell index (PCI) of the cell. The DCI may be received via a coreset, for example, based on a transmission configuration indicator (TCI) state of the coreset. The timing advance may be selected, for example, based on whether the coreset may be associated with the PCI of the cell. The timing advance may be a first timing advance, of the at least two timing advances, for example, based on the TCI state of the coreset being associated with the PCI of the cell. The timing advance may be a second timing advance, of the at least two timing advance, for example, based on the TCI state of the coreset being associated with a second PCI different from the PCI of the cell. The first wireless device may randomly select the timing advance from among the at least two timing advances. The first wireless device may randomly select the TAG. A computing device may comprise one or more processors; and memory storing instructions that, when executed by the one or more processors, cause a wireless device to perform the described method, additional operations and/or include the additional elements. A wireless device may comprise one or more processors; and memory storing instructions that, when executed by the one or more processors, cause the base station to perform the described method, additional operations and/or include the additional elements. A system may comprise a wireless device configured to perform the described method, additional operations and/or include the additional elements; and a base station configured to send, to the wireless device, the downlink control information scheduling the sidelink transmission. A computer-readable medium may store instructions that, when executed, cause performance of the described method, additional operations and/or include the additional elements.

A wireless device may perform a method comprising multiple operations. A first wireless device may receive, in a first slot, downlink control information (DCI) scheduling a sidelink transmission, via a cell associated with at least two timing advances (TAs). The first wireless device may send (e.g., transmit) the sidelink transmission to a second wireless device in a second slot that may start no earlier than a time duration after the first slot. The time duration may be based on a timing advance of the at least two timing advances that may be associated with the cell. The at least two timing advances may be associated with a TAG. The timing advance may be associated with a lowest timing advance of: a first timing advance that may be associated with a first timing advance group (TAG) of the cell and a second timing advance that may be associated with a second TAG of the cell. The timing advance may be associated with a lowest timing advance group (TAG) identifier of: a first TAG identifier that may be associated with a first TAG of the cell and a second TAG identifier that may be associated with a second TAG of the cell. The timing advance may be associated with a first timing advance group (TAG) that may be associated with the cell, for example, based on the DCI being received via a first control resource set (coreset) that may be associated with a first coreset pool index, and/or a second TAG that may be associated with the cell, for example, based on the DCI being received via a second coreset that may be associated with a second coreset pool index. The DCI may activate a periodic sidelink grant. The sidelink transmission may be an initial sidelink transmission of the periodic sidelink grant. The first wireless device may receive, for the cell, one or more configuration parameters that may comprise an indication of a slot offset table. The DCI may indicate a slot offset, in the slot offset table, for example, between the first slot and the sidelink transmission. A first timing advance, of the at least two timing advances, may be associated with a first transmission and reception point (TRP). A second timing advance, of the at least two timing advances, may be associated with a second TRP that may not be co-located with the first TRP. The sidelink resource allocation mode may be Resource Allocation Mode-1 and/or Resource Allocation Mode-3. The first wireless device may operate in a sidelink resource allocation mode in which a base station may schedule sidelink transmissions. A format of the DCI may be DCI format 3_0. A format of the DCI may be DCI format 3_1. The DCI may activate a sidelink semi-persistent scheduling (SL-SPS) configuration. The sidelink transmission may be an initial sidelink transmission of the SL-SPS configuration. The DCI may comprise a configuration index field that may indicate a periodic sidelink configuration of one or more periodic sidelink configuration. The time duration may be further based on a sidelink index value (e.g., $m$). The sidelink index value may be equal to zero, for example, based on the DCI not comprising a sidelink index field. The sidelink index value may be equal to a value that may be indicated by the sidelink index field of the DCI. The first wireless device may receive one or more configuration parameters, of the cell, that may comprise a sidelink communication configuration. The DCI may activate a sidelink semi-persistent scheduling (SL-SPS) configuration. The sidelink transmission may be an initial sidelink transmission of the SL-SPS configuration. The DCI may be a DCI format 3_1 with a cyclic redundancy check (CRC) that may be scrambled by sidelink Semi-Persistent Scheduling V-RNTI. The DCI may comprise a sidelink SPS configuration index field that may indicate the SL-SPS configuration. A computing device may comprise one or more processors; and memory storing instructions that, when executed by the one or more processors, cause a wireless device to perform the described method, additional operations and/or include the additional elements. A wireless device may comprise one or more processors; and memory storing instructions that, when executed by the one or more processors, cause the base station to perform the described method, additional operations and/or include the additional elements. A system may comprise a wireless device configured to perform the described method, additional operations and/or include the additional elements; and a base station configured to send, to the wireless device, the downlink control information scheduling the sidelink transmission. A computer-readable medium may store instructions that, when executed, cause performance of the described method, additional operations and/or include the additional elements.

A first wireless device may perform a method comprising multiple operations. A first wireless device may receive, in a first slot, downlink control information (DCI) scheduling a sidelink transmission, via a cell associated with a first timing advance group (TAG) that may be associated with a first timing advance and with a second TAG that may be associated with a second timing advance. The first wireless device may send (e.g., transmit) the sidelink transmission to a second wireless device in a second slot that may start no earlier than a time duration after the first slot. The time duration may be based on the first timing advance that may be associated with the first TAG or may be based on the second timing advance that may be associated with the second TAG. The time duration may be based on the first timing advance that may be associated with the first TAG, for example, based on a first timing advance that may be associated with the first TAG being lower than a second timing advance that may be associated with the second TAG. The time duration may be based on the first timing advance that may be associated with the first TAG based on a first TAG identifier that may be associated with the first TAG being lower than a second TAG identifier that may be associated with the second TAG. The timing duration may be based on: the first timing advance that may be associated with the first TAG, for example, based on the DCI being received via a first control resource set (coreset) associated with a first coreset pool index, or the second timing advance that may be associated with the second TAG, for example, based on the DCI being received via a second coreset that may be associated with a second coreset pool index. The DCI may activate a periodic sidelink grant. The sidelink transmission may be an initial sidelink transmission of the periodic sidelink grant. The first wireless device may receive, for the cell, one or more configuration parameters that may comprise an indication of a slot offset table. The DCI may comprise a time gap field indicating a slot offset, in the slot offset table, for example, between the first slot and the sidelink transmission. The time duration may be further based on a starting time of the first slot, the slot offset, and/or a slot duration. A base station may determine the time duration, from a downlink slot, for the first wireless device that may send (e.g., transmit) the sidelink transmission in a sidelink slot. The time duration may be based on a timing advance of at least two timing advances of the cell. The base station may send (e.g., transmit), to the first wireless device in the downlink slot, the DCI that may schedule the sidelink transmission. The time duration may determine the time duration, from the downlink slot, for the first wireless device that may send (e.g., transmit) the sidelink transmission in the sidelink slot. The duration may be based on a timing advance of at least two timing advance groups (TAGs) of the cell. The base station may transmit, to the first wireless device in the downlink slot, the DCI that may schedule the sidelink transmission. A computing device may comprise one or more processors; and memory storing instructions that, when executed by the one or more processors, cause a wireless device to perform the described method, additional operations and/or include the additional elements. A wireless device may comprise one or more processors; and memory storing instructions that, when executed by the one or more processors, cause the base station to perform the described method, additional operations and/or include the additional elements. A system may comprise a wireless device configured to perform the described method, additional operations and/or include the additional elements; and a base station configured to send, to the wireless device, the downlink control information scheduling the sidelink transmission. A computer-readable medium may store instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3 GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, abase station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   receiving, by a first wireless device in a first slot and via a cell associated with at least two timing advance groups (TAGs), downlink control information (DCI) scheduling a sidelink transmission; and
   transmitting, to a second wireless device and in a second slot that starts no earlier than a time duration after the first slot, the sidelink transmission;
   wherein the time duration is based on a timing advance value of a TAG, of the at least two TAGs, that is associated with a lowest timing advance value of at least two timing advance values.

2. The method of claim 1, wherein:

   a first timing advance value, of the at least two timing advance values, is associated with a first TAG of the at least two TAGs;
   a second timing advance value, of the at least two timing advance values, is associated with a second TAG of the at least two TAGs; and
   the timing advance value of the TAG is either the first timing advance value of the first TAG or the second timing advance value of the second TAG.

3. The method of any one claims 1-2, wherein:

   a first timing advance value, of the at least two timing advance values, is associated with a first transmission and reception point (TRP); and
   a second timing advance value, of the at least two timing advance values, is associated with a second TRP.

4. The method of any one claims 1-3, further comprising receiving, for the cell, one or more configuration parameters comprising an indication of a slot offset table.

5. The method of any one claims 1-4, wherein the DCI indicates a slot offset that is between the first slot and the sidelink transmission.

6. The method of any one claims 1-5, wherein the at least two timing advance values are associated with an uplink carrier of the cell.

7. The method of any one claims 1-6, wherein:

   the first slot is a downlink slot; and
   the second slot is a sidelink slot.

8. The method of any one claims 1-7, wherein the sidelink transmission comprises:

   one or more sidelink control information (SCIs); and
   one or more physical sidelink shared channel (PSSCH) transmissions.

9. The method of any one claims 1-8, wherein the DCI indicates a sidelink dynamic grant.

10. The method of any one claims 1-9, wherein:

    the DCI activates a periodic sidelink grant; and
    the sidelink transmission is an initial sidelink transmission of the periodic sidelink grant.

11. The method of any one claims 1-10, wherein the time duration is further based on:

    a starting time of the downlink slot carrying the DCI;
    the slot offset between the downlink slot and the sidelink transmission; and
    a sidelink slot duration.

12. The method of any one claims 1-11, wherein the TAG is one of:

    the first TAG based on a control resource set (coreset) pool index being equal to a first value; and
    the second TAG based on the coreset pool index being equal to a second value.

13. A computing device comprising: one or more processors; and memory storing instructions that, when executed by the one or more processors, cause the computing device to perform:
    the method of any one of claims 1 to 12.

14. A system comprising:

    a wireless device configured to perform the method of any one of claims 1 to 12; and
    a base station configured to send, to the wireless device, the downlink control information scheduling the sidelink transmission.

15. A computer-readable medium storing instructions that, when executed, cause performance of:
    the method of any one of claims 1 to 12.

FIG. 1A

FIG. 1B

FIG. 2A

FIG. 2B

**IP Packets**

**FIG. 3**

FIG. 4A

FIG. 4B

**FIG. 5A**

**FIG. 5B**

EP 4 325 950 A1

FIG. 6

**1 Frame (10 ms)**

| 0 | 1 | 2 | 3 | 4 | 5 | 6 | 7 | 8 | 9 |

**1 Subframe (1 ms)**

Subcarrier spacing = 15 kHz
1 slot per subframe

**1 Slot (1 ms, 14 OFDM Symbols)**

Subcarrier spacing = 30 kHz
2 slots per subframe

**1 Slot (0.5 ms, 14 OFDM Symbols)**

Subcarrier spacing = 60 kHz
4 slots per subframe

**1 Slot (0.25 ms, 14 OFDM Symbols)**

Subcarrier spacing = 120 kHz
8 slots per subframe

**1 Slot (0.0125 ms, 14 OFDM Symbols)**

**FIG. 7**

FIG. 8

**FIG. 9**

EP 4 325 950 A1

FIG. 10A

FIG. 10B

FIG. 11A

FIG. 11B

FIG. 12A

FIG. 12B

Base Station

Wireless Device

Configuration 1330

Msg A 1331

Preamble 1341

1342 Transport block

Msg B 1332

**FIG. 13C**

Base Station

Wireless Device

Configuration 1320

Msg 1 1321

Msg 2 1322

**FIG. 13B**

Base Station

Wireless Device

Configuration 1310

Msg 1 1311

Msg 2 1312

Msg 3 1313

Msg 4 1314

**FIG. 13A**

**FIG. 14A**

CORESET 1404
CORESET 1403
CORESET 1402
CORESET 1401
Bandwidth
One slot

**FIG. 14B**

CORESET
CCE-to-REG mapping
Search Space
PDCCH candidate
PDCCH candidate
PDCCH candidate

Base Station
1504

Peripheral(s)
1516

Memory
1514

GPS Chipset
1517

TX Processing
System
1510

Processing
System
1508

RX Processing
System
1512

Air Interface
1506

FIG. 15A

TX Processing
System
1520

Processing
System
1518

RX Processing
System
1522

Peripheral(s)
1526

Memory
1524

GPS Chipset
1527

Wireless Device
1502

**FIG. 15B**

EP 4 325 950 A1

**FIG. 16A**

**FIG. 16B**

**FIG. 16D**

**FIG. 16C**

FIG. 17

EP 4 325 950 A1

TRP 1806 (e.g., associated with TAG 1816)

Cell 1802 associated with two TAs (e.g., two TAGs)

Distance 1808 (e.g., defines TAG 1816)

Distance 1818 (e.g., defines TAG 1814)

TRP 1804 (e.g., associated with TAG 1814)

Downlink
Uplink

Wireless Device 1800

Downlink
Uplink

Downlink
Uplink

Downlink
Uplink

TA 1810 (e.g., TA of TAG 1808 )

TA 1812 (e.g., TA of TAG 1810)

**FIG. 18**

Control Command 1900 (e.g., RAR)

| TAG ID 1908 | Timing Advance Command 1902 (e.g., Timing Advance = 0, 1, 2, . . . , 3846) | Octet 0 |

| Timing Advance Command 1902 | Uplink Grant 1904 | Octet 1 |

| Temporary C-RNTI 1906 | Octet n-1 |

**FIG. 19A**

Control Command 1920 (e.g., TAC MAC CE)

| TAG ID 1922 | Timing Advance Command 1924 (e.g., Timing Advance = 0, 1, 2 , . . . , 63) |

Control Command 1930 (e.g., TAC MAC CE)

| TAG ID 1932 | Timing Advance Command 1934 |

**FIG. 19B**

TRP 2006 (e.g., associated with TAG 2010)

Cell 2002 associated with two TAs (e.g., two TAGs)

DCI 2022 (e.g., DCI 3_0, DCI 3_1)

TRP 2004 (e.g., associated with TAG 2008)

Wireless Device 2000

Downlink

Uplink

Downlink

Uplink

TA 2012 associated with TAG 2014

TA 2011 associated with TAG 2014

Downlink

Sidelink

Wireless Device 2020

Sidelink Transmission based on UL TA (e.g., one of TA 2012 or TA 2011)

**FIG. 20**

EP 4 325 950 A1

Base station 2104 in cell 2102 with two TAs (e.g., two TAGs, one TAG with two TAs)

DCI 2106 (e.g., DCI 3_0, DCI 3_1)

Time duration based on a TA of the two TAs of cell 2102

Time Duration 2109

Wireless Device 2100

$t_0$

$t_1$ $t_2$ time

Schedule Sidelink Transmission (e.g., dynamic SL grant, activate Type 2 SL Configured Grant, or activate SL SPS)

Sidelink Transmission 2108 (e.g., 1st stage SCI, 2nd stage SCI, and/or sidelink data)

Wireless Device 2110

time

FIG. 21

EP 4 325 950 A1

DCI 2200
(e.g., DCI 3_0) indicating
slot offset ($K_{SL}$) (e.g., of a
slot offset table)

Donwlink Slots

| DL | DL | DL | DL | DL | DL | DL | DL | DL |

Starting Time of
Donwlink Slot Carrying
DCI 2206 ($T_{DL}$)

Sidelink Slots
(e.g., in a resource pool)

| SL | SL | SL | SL | SL | SL | SL | SL | SL |

TA (e.g., TA/2)

Sidelink Slot
Duration ($T_{SLOT}$)

$K_{SL} \times T_{SLOT}$

Sidelink slot that occurs
first after the time duration
(e.g., starting slot for sidelink transmission,
such as Sidelink dynamic grant or Sidelink
Type 2 Configured Grant)

Time duration
2209

FIG. 22

EP 4 325 950 A1

**DCI 2300**
(e.g., DCI 3_1) comprising
timing offset field (X) and SL
index field (m; m = 0 if absent)

Donwlink Slots

| DL | DL | DL | DL | DL | DL | DL | DL | DL |

Starting Time of
Donwlink Slot Carrying
DCI 2306 ($T_{DL}$)

Sidelink Slots
(e.g., of a resource pool)

| SL | SL | SL | SL | SL | SL | SL | SL | SL |

TA
(e.g., $(N_{TA}/2) \times T_C \times 10^3$)

$X + (4 + m)$ ms

Time duration
2309

Sidelink slot that occurs first after the time duration
(e.g., starting slot for sidelink transmission, such
as LTE Sidelink SPS)

**FIG. 23**

FIG. 24

**Base Station 2502**

**Configuration Parameters 2604**
(e.g., PCI, Coreset IDs, TCI states, SL Resource Pool(s))

**Timing Advance Command(s) 2506**
(e.g., TA for TAG-1 for cell, TA for TAG-2 for non-serving cell)

**DCI 2508 via Coreset ID = 2 and TCI state = 3 associated with PCI of the cell (e.g., without additional-PCI in TCI state)**

Determine time duration, for SL TX, based on TA (e.g., of TAG-1) associated with PCI of TCI State = 3

Time Duration 2509

$t_0$   $t_1$   $t_2$   $t_3$   $t_4$   time

**Wireless Device 2500**

**Schedule Sidelink Transmission**
(e.g., dynamic grant, activate Type 2 SL Configured Grant, or activate SL SPS)

**Sidelink Transmission 2510**
(e.g., 1st Stage SCI, 2nd Stage SCI, and/or sidelink data)

**Wireless Device 2520**

time

**FIG. 25**

EP 4 325 950 A1

Base station
2602

Configuration
Parameters 2604
(e.g., PCI, Coreset IDs, TCI
States, SL Resource Pool(s))

Timing Advance
Command(s) 2606
(e.g., TA for TAG-1
for cell,
TA for TAG-2 for
non-serving cell)

DCI 2608 via
Coreset ID = 2 and
TCI State = 1 associated with
a different PCI than the cell
(e.g., additional PCI field ≠
PCI of cell)

Determine time duration,
for SL TX, based on
TA (e.g., of TAG-2)
associated with
PCI of TCI State = 1

time

Time
Duration 2609

Wireless
Device 2600

$t_0$          $t_1$          $t_2$          $t_3$  $t_4$   time

Schedule Sidelink Transmission
(e.g., dynamic grant, activate Type 2 SL
Configured Grant, or activate SL SPS)

Sidelink Transmission 2610
(e.g., 1st Stage SCI, 2nd
Stage SCI,
and/or sidelink data)

Wireless
Device 2620

time

FIG. 26

2800

```
┌ ─ ─ ─ ─ ─ ─ ─ ─ ─ ─ ─ ─ ─ ┐
│                                       │
│     A wireless device receives configuration │
│                  parameter(s)          │
│     (e.g., sidelink resource pool(s)) of a cell │
│                    2710                │
│                                       │
└ ─ ─ ─ ─ ─ ─ ┬ ─ ─ ─ ─ ─ ─ ┘
                      ▼
┌ ─ ─ ─ ─ ─ ─ ┴ ─ ─ ─ ─ ─ ─ ┐
│                                       │
│  The wireless device receives control command(s) │
│   (e.g., via RAR, TAC MAC CE) indicating at least │
│     two TAs (e.g., of at least two TAGs) of a cell │
│                    2720                │
│                                       │
└ ─ ─ ─ ─ ─ ─ ┬ ─ ─ ─ ─ ─ ─ ┘
                      ▼
┌───────────────────────────┐
│                                       │
│   The wireless device receives, in a downlink slot, │
│  DCI (e.g., DCI 3_0, DCI 3_1) scheduling a sidelink │
│                 transmission           │
│   (e.g., PSCCH and/or PSSCH transmission) │
│                    2730                │
│                                       │
└───────────────────────────┘
                      ▼
┌───────────────────────────┐
│                                       │
│    The wireless device sends (e.g., transmits), to │
│       another wireless device, the sidelink │
│    transmission in a sidelink slot that starts no │
│   earlier than a time duration from the downlink │
│  slot, wherein the time duration is based on one of │
│               the at least two TAs     │
│                    2740                │
│                                       │
└───────────────────────────┘
```

**FIG. 27**

2900

Transmit, to a wireless device,
configuration parameter(s)
(e.g., sidelink resource pool(s)) of a cell
2810

Transmit, to the wireless device, control
command(s) (e.g., RAR, TAC MAC CE) indicating
at least two TAs (e.g., of at least
two TAGs) of the cell
2820

Determine, a time duration, from a downlink slot,
for a wireless device to transmit a sidelink
transmission, in a sidelink slot, wherein the time
duration is based on a TA of the at least two TAs
2830

Transmit, to the wireless device, in the downlink
slot, DCI (e.g., DCI 3_0, DCI 3_1) scheduling the
sidelink transmission in the cell
with at least two TAs
2840

Receive, from the wireless device, sidelink
feedback report for the sidelink transmission
and/or uplink feedback report for the DCI
2850

FIG. 28

Europäisches
Patentamt

European
Patent Office

Office européen
des brevets

## EUROPEAN SEARCH REPORT

Application Number

EP 23 19 1119

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/063167 A1 (VIVO MOBILE COMMUNICATION CO LTD [CN]) 31 March 2022 (2022-03-31) * the whole document * | 1-15 | INV. H04W56/00 H04W72/0446 H04W72/23 H04W76/14 H04W92/18 |
| X,P | -& US 2023/217393 A1 (LIU SIQI [CN] ET AL) 6 July 2023 (2023-07-06) * paragraphs [0004] – [0013] * * figures 2-8 * * paragraphs [0030], [0032], [0038] – [0041], [0043] – [0046], [0051], [0053] – [0055], [0057] – [0069] * * paragraphs [0094] – [0100], [0118], [0164], [0174] – [0201] * * paragraphs [0229] – [0230], [0248], [0251] – [0253], [0293] * ----- | 1-15 | |
| X | VIVO: "Remaining issues on mode 1 resource allocation mechanism", 3GPP DRAFT; R1-2008666, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20201026 – 20201113 17 October 2020 (2020-10-17), XP051940284, Retrieved from the Internet: URL:https://ftp.3gpp.org/tsg_ran/WG1_RL1/T SGR1_103-e/Docs/R1-2008666.zip R1-2008666 Remaining issues on mode 1 resource allocation mechanism.docx [retrieved on 2020-10-17] * pages 1-15 * ----- | 1-15 | TECHNICAL FIELDS SEARCHED (IPC)  H04W |

-/--

The present search report has been drawn up for all claims

| Place of search | Date of completion of the search | Examiner |
|---|---|---|
| The Hague | 12 January 2024 | Schmid, Andreas |

EPO FORM 1503 03.82 (P04C01)

page 1 of 2

**EUROPEAN SEARCH REPORT**

Europäisches Patentamt
European Patent Office
Office européen des brevets

Application Number

EP 23 19 1119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MODERATOR (ERICSSON): "FL summary 1 for thread 9 on Maintenance for 5G V2X with NR sidelink – Mode 1", 3GPP DRAFT; R1-2009511, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Online; 20201026 – 20201113 4 November 2020 (2020-11-04), XP051951476, Retrieved from the Internet: URL:https://ftp.3gpp.org/tsg_ran/WG1_RL1/TSGR1_103-e/Docs/R1-2009511.zip R1-2009511 – FL summary 1 Thread 9 – 5G V2X with NR SL (Mode 1).docx [retrieved on 2020-11-04] * pages 1-10 * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 12 January 2024 | Schmid, Andreas |

EPO FORM 1503 03.82 (P04C01)

## ANNEX TO THE EUROPEAN SEARCH REPORT
## ON EUROPEAN PATENT APPLICATION NO.

EP 23 19 1119

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2024

| Patent document cited in search report | | Publication date | Patent family member(s) | | Publication date |
|---|---|---|---|---|---|
| WO 2022063167 | A1 | 31-03-2022 | CN | 114258127 A | 29-03-2022 |
| | | | EP | 4199610 A1 | 21-06-2023 |
| | | | JP | 2023543745 A | 18-10-2023 |
| | | | US | 2023217393 A1 | 06-07-2023 |
| | | | WO | 2022063167 A1 | 31-03-2022 |
| US 2023217393 | A1 | 06-07-2023 | CN | 114258127 A | 29-03-2022 |
| | | | EP | 4199610 A1 | 21-06-2023 |
| | | | JP | 2023543745 A | 18-10-2023 |
| | | | US | 2023217393 A1 | 06-07-2023 |
| | | | WO | 2022063167 A1 | 31-03-2022 |

EPO FORM P0459

For more details about this annex : see Official Journal of the European Patent Office, No. 12/82

**EP 4 325 950 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63397529